(19) Europäisches Patentamt
European Patent Office
Office européen des brevets

(11) **EP 4 343 641 B1**

(12) **EUROPEAN PATENT SPECIFICATION**

(45) Date of publication and mention
of the grant of the patent:
**05.11.2025 Bulletin 2025/45**

(51) International Patent Classification (IPC):
**G06N 10/80** *(2022.01)*    **G06N 10/20** *(2022.01)*
**G06N 5/01** *(2023.01)*    *G06N 10/70* *(2022.01)*

(21) Application number: **23194975.1**

(22) Date of filing: **01.09.2023**

(52) Cooperative Patent Classification (CPC):
**G06N 10/20; G06N 5/01; G06N 10/80;** G06N 10/70

(54) **SYSTEMS AND METHOD FOR IMPROVED IDENTIFICATION OF ENCODINGS FOR FERMIONIC MODE TO QUBIT MAPPINGS**

SYSTEME UND VERFAHREN ZUR VERBESSERTEN IDENTIFIZIERUNG VON CODIERUNGEN FÜR FERMION-MODUS FÜR QUBIT-MAPPINGS

SYSTÈMES ET PROCÉDÉ D'IDENTIFICATION AMÉLIORÉE DE CODAGES POUR MAPPAGES DE MODE FERMIONIQUE À BITS QUANTIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.09.2022 US 202217934283**

(43) Date of publication of application:
**27.03.2024 Bulletin 2024/13**

(73) Proprietor: **Phasecraft Limited**
**London Greater London W1T 4PW (GB)**

(72) Inventors:
• **KLASSEN, Joel**
**London, W1T 4PW (GB)**
• **CHIEN, Riley**
**London, W1T 4PW (GB)**

(74) Representative: **Mathys & Squire**
**The Shard**
**32 London Bridge Street**
**London SE1 9SG (GB)**

(56) References cited:
• **JACOB BRINGEWATT ET AL: "Parallelization techniques for quantum simulation of fermionic systems"**, ARXIV.ORG, CORNELL UNIVERSITY LIBRARY, 201 OLIN LIBRARY CORNELL UNIVERSITY ITHACA, NY 14853, 25 July 2022 (2022-07-25), XP091280221
• **MITCHELL CHIEW ET AL: "Optimal fermion-qubit mappings"**, ARXIV.ORG, CORNELL UNIVERSITY LIBRARY, 201 OLIN LIBRARY CORNELL UNIVERSITY ITHACA, NY 14853, 9 July 2022 (2022-07-09), XP091267006

## Description

### Field

The invention relates to the field of encoding fermionic operators onto a quantum computer and specifically to methods and systems for identifying sets of legitimate encodings and for selecting improved encodings from such sets.

### Background

An important application of quantum computing is the modelling of systems where quantum physics dominates. Many such systems consist of fermions - which are one of the two fundamental types of particle. Any simulation of fermions on a quantum computer requires a specification of how the fermions are represented on the memory of the device - an encoding of fermions into qubits. These encodings must replicate the nonlocal anti-commutation relations of the fermionic operator algebra on the qubit system. This is a non-trivial task, with many possible solutions of which there is no a priori correct choice.

Various documents have been published in this field, which we refer to in the following as:

C1:     RC Ball. Fermions without fermion fields. Physical review letters, 95(17):176407, 2005.

C2:     Sergey B Bravyi and Alexei Yu Kitaev. Fermionic quantum computation. Annals of Physics, 298(1):210-226, 2002.

C3:     Jacob Bringewatt and Zohreh Davoudi. Parallelization techniques for quantum simulation of fermionic systems, 2022.

C4:     Yu-An Chen, Anton Kapustin, and Djordje Radicevic. Exact bosonization in two spatial dimensions and a new class of lattice gauge theories. Annals of Physics, 393:234-253, 2018.

C5:     Riley W Chien and James D Whitfield. Custom fermionic codes for quantum simulation. arXiv preprint arXiv:2009.11860, 2020.

C6:     Mitchell Chiew and Sergii Strelchuk. Optimal fermion-qubit mappings. arXiv preprint arXiv:2110.12792, 2021.

C7:     D.A. Cox, J. Little, and D. O'Shea. Using Algebraic Geometry. Graduate Texts in Mathematics. Springer New York, 2005.

C8:     D.A. Cox, J. Little, and D. O'Shea. Ideals, Varieties, and Algorithms: An Introduction to Computational Algebraic Geometry and Commutative Algebra. Undergraduate Texts in Mathematics. Springer New York, 2008.

C9:     Charles Derby and Joel Klassen. A compact fermion to qubit mapping part 2: Alternative lattice geometries. arXiv preprint arXiv:2101.10735, 2021.

C10:    Charles Derby, Joel Klassen, Johannes Bausch, and Toby Cubitt. Compact fermion to qubit mappings. Physical Review B, 104(3):035118, 2021.

C11:    Zhang Jiang, Jarrod McClean, Ryan Babbush, and Hartmut Neven. Majorana loop stabilizer codes for error mitigation in fermionic quantum simulations. Physical Review Applied, 12(6):064041, 2019.

C12:    William Kirby, Bryce Fuller, Charles Hadfield, and Antonio Mezzacapo. Second quantized fermionic operators with polylogarithmic qubit and gate complexity. PRX Quantum, 3:020351, Jun 2022.

C13:    Kanav Setia, Sergey Bravyi, Antonio Mezzacapo, and James D Whitfield. Superfast encodings for fermionic quantum simulation. Physical Review Research, 1(3):033033, 2019.

C14:    Mark Steudtner and Stephanie Wehner. Fermion-to-qubit mappings with varying resource requirements for quantum simulation. New Journal of Physics, 20(6):063010, 2018.

C15:    Frank Verstraete and J Ignacio Cirac. Mapping local Hamiltonians of fermions to local Hamiltonians of spins. Journal of Statistical Mechanics: Theory and Experiment, 2005(09):P09012, 2005

Various encodings have been proposed (see e.g. C1, C2, C4, C9, C10, C11. C13, C14 and 15), each with their own upsides and downsides which depend on the details of the model and of the hardware being used. Historically encodings have not been designed for a particular model or piece of computing hardware. Instead, they are often designed for a generic advantageous trait, such as low operator weight representations of certain interactions (here what is meant by operator weight is the number of qubits on which operator has support), efficient use of qubits, ease of state preparation, the ability to detect or correct errors, or merely simplicity. When one wishes to implement these encodings on specific hardware, one generally needs to think carefully about how the encoding can be made to "fit" into the device, given the particular algorithm - generally with the aim of minimizing circuit depth and quantum memory use. This can be reasonably non-trivial, and it suggests that instead of using an out of the box encoding, benefits may be seen if a new encoding can be automatically generated, tailored to the specifics of the hardware and of the model to be encoded.

Some work has been done in this direction. C6 explores finding optimal arrangements of the Jordan-Wigner transform onto a specific hardware geometry. This has the benefit of minimizing the operator weights of the terms in a given Hamiltonian, while not increasing the qubit overhead. However, it may be desirable to make such a trade-off, in which case different methods are required in order to search over the space of fermionic encodings that employ ancillary qubits to reduce the operator weight. In C3 custom codes for the purposes of parallelization are considered. Here the optimization is over the class of encodings described in C5. However, there are many potential encodings which may not fall within this class.

In general, it is difficult even to enumerate the possible encodings which may be generated between a system of operators to be modelled on the one hand and the qubits of the quantum computer on the other.

The present application seeks to remedy some, or all of the drawbacks present in the field, as discussed above.

## Summary of the Invention

In general, this document presents methods and apparatuses for generating fermionic encodings tailored to the given hardware connectivity of a device, and to a given fermionic system. This method takes as input a set of fermionic operators, constituting the terms in the fermionic system. Further inputs may include a graph specifying the possible two-qubit interactions of the hardware, and a maximum cost. The method finds a low cost (in some cases cost-optimized) fermionic encoding with, or otherwise determines that no encoding exists with cost less than a specified maximum. Unlike earlier methods, the present method identifies an extremely broad family of encodings, namely all encodings which would map Majorana monomials to Pauli operators, and searches in an exhaustive fashion over these to determine improved encodings (from a cost perspective), with a view to identifying the overall best encoding from the set. The output is an extremely useful object - a mathematical description of a relatively low cost (in some cases optimal) encoding. In other words, a set of instructions for how to encode the fermionic operators onto the quantum information processor.

In support of addressing the aims above, disclosed herein is a method of generating an encoding for mapping fermionic operators onto qubits of a quantum information processor, the method comprising: receiving a set of fermionic operators, $F_i$, to be represented on the quantum information processor, wherein the set of fermionic operators is a subset of a group of Majorana monomials; identifying a set including every Pauli operator, $P$, implementable on the quantum information processor; assigning a first fermionic operator, $F_1$, from the set $F_i$ to a first Pauli operator, $P_1$, in the set $P$; assigning a Pauli operator to each subsequent fermionic operator, $F_s$, in the set $F_i$ by:

(a) identifying one or more commutation relations and/or anticommutation relations between $F_s$ and the set of all fermionic operators $\{F_1...F_{(s-1)}\}$ which have previously been assigned to Pauli operators in the set $\{P_1...P_{(s-1)}\}$;

(b) identifying for the fermionic operator $F_s$ a set of candidate Pauli operators to which $F_s$ may be assigned, wherein a candidate Pauli operator is one which has the same commutation and anticommutation relations with each Pauli operator $P_j$ as the commutation and anticommutation relations between $F_s$ the corresponding $F_j$, for all $j$ in the range $1 \leq j \leq (s-1)$; and

(c) selecting a Pauli operator, $P_s$, from the set of candidate Pauli operators and assigning $F_s$ to $P_s$; and

repeating steps (a) to (c) using further subsequent fermionic operators in the set $F_i$ until each fermionic operator in $F_i$ has been assigned to a Pauli operator from the set $P$, thereby to provide a complete mapping in which each fermionic operator, $F_i$, is assigned to a corresponding Pauli operator $P_i$; wherein a cost model is applied to the assignment(s) and/or the complete mapping between fermionic operators and Pauli operators to enable selection of a relatively lower cost complete mapping.

The output from the execution of this method is a legitimate encoding which has been prepared with a view to reducing the cost of implementation. The general feature of reliably and procedurally finding an encoding/mapping which works (i.e. which preserves the commutation and anticommutation relations of the system) is an advantage of this method over known methods. Note that, as discussed above, even enumerating the possible encodings is itself not an obvious operation for a general system, so even enumerating the encodings is a useful development of the field. Further selecting or otherwise arriving at an encoding from the set which is better than a naïve initial guess is an additional benefit of the above method. Note that even brute force methods (enumerate the cost of every possible encoding) would require an enumeration of the full set, which has hitherto not been available. From this identification of a set of appropriate complete encodings, a relatively low-cost mapping is selected.

Note that the cost model defines the parameters by which cost is measured and will in general be linked to the specific quantum computation hardware as well as on other factors as set out in more detail below. The above method does not necessarily provide the "best" (i.e. lowest possible cost) mapping, because specific parameters feeding into of the calculation of the cost of an individual assignment will affect the optimal pairings under those criteria. Different criteria will therefore lead to different lowest possible costs for a given association. In addition, the manner in which the individual assignments are aggregated together to determine a cost for the mapping overall may affect the overall costing for the mapping.

For example, in some examples, an aggregate cost for a complete mapping is related to or equal to the largest cost of any individual mapping between a fermionic operator and its corresponding Pauli operator. In such a case, selecting the assignment which has the lowest available cost at each iteration of steps (a) to (c) above can lead to an aggregate cost which is also minimised, because the aggregate cost is expressly tied to the individual costs which are themselves minimised.

In other examples the complete mapping may be derived first, and the cost model is applied to the complete mapping to determine a relative cost for the complete mapping. In such cases, the method may then be repeated at least one further time to determine a relative cost of at least a second, different, complete mapping. The method in such cases further comprises selecting the lowest cost complete mapping from the at least two complete mappings derived in this manner.

Depending on the cost model being employed, and in particular the manner in which the aggregate cost is derived from the individual costs, the model may be susceptible to local minima effects in which locally selecting the lowest individual costs does not lead to the lowest overall cost. For example, the aggregate cost may be based on one or more of: an average Pauli weight of the Pauli operators; an operator weight of stabilizers associated with the encoding; a probability of an undetectable error given a hardware noise model for the quantum information processor; a total circuit depth of an algorithm for implementing logical operations on the qubits of the quantum information processor onto which the fermionic operators have been mapped. In these cases, reducing the overall cost may best be performed by identifying a set of acceptable mappings (i.e. ones which preserve the commutation and anticommutation relationships) and then selecting the lowest cost complete mapping, because the complex interrelations between the individual assignment costings can lead to a higher cost overall in these examples when the lowest possible available mapping is used for each assignment.

Here, an algorithm for implementing the logical operations should be understood in line with the following. In any instance where a fermionic encoding is used, it will be intended that some kind of logical operation is performed on a representation of a fermionic system on a quantum computer e.g., as a subroutine (or full process) of some quantum algorithm. In cases where the form of such an algorithm is known, but it has not yet been resolved which encoding will be used, different encodings will affect the total circuit depth of the particular quantum algorithm because they effect the representation of the operations on the device. As an example, the operations ($U$) which are to be performed are unitary operators generated by the elements of the fermionic algebra, i.e., for a fermionic operator $F$:

$$U = \exp(it\boldsymbol{F})$$

where $i$ is the square root of -1, and $t$ represents time. When translated to qubit operations, this looks like:

$$U = \exp(it\boldsymbol{P})$$

where $P$ is an appropriate Pauli operator. This unitary operation is then decomposed into a sequence of hardware-native gates, the complexity of which typically depends on the form of $P$ (how many qubits it acts on etc.) and on the arrangement of the hardware (i.e. the available interactions between the qubits on which the gate finds support and between those qubits and other qubits). From this, it can be seen that the complexity of mapping a given operator to the hardware can be used to identify higher or lower costs, and thereby to affect the association of fermionic operators with Pauli operators on an individual or aggregate level. The initial assigning step in the method may be made in any suitable way. At this stage in the method, there are no pre-existing assignments which limit the assignment to those which comply with commutation and anticommutation relations, so the choice is much more of a free choice and can be made with a view to achieving any goal. For example retaining certain Pauli operators free for later assignments, making the first assignment a low cost assignment (e.g. in some cases the first Pauli operator may be chosen to have the lowest available cost in the cost model), or assigning the first fermionic operator to a preferred Pauli operator.

In other cases, the assignment may be randomly made. This can be particularly useful in cases where there is a high probability of the method backtracking because a legitimate solution cannot be found in view of the assignments already made. In particular, there are two conditions in which the method may include a backtracking step: where there are no further legitimate pairing options possible, and where the cost of any remaining legitimate pairings is too high. The first of these may adapt the method in the following manner. In the event that the list of candidate Pauli operators contains no entries, the method may be halted and method steps (a) to (c) are repeated on the (s-1)th fermionic operator, ensuring that the Pauli operator assigned to the (s-1)th fermionic operator in the repeated steps (a) to (c) is different from the Pauli operator assigned to the (s-1)th fermionic operator the previous time steps (a) to (c) were enacted on the (s-1)th fermionic operator. The second case referred to above may be thought of as in the event that during step (c) the optimum Pauli operator has a cost greater than the cost of any previously discovered mapping or some predetermined threshold, the method is halted and method steps (a) to (c) are repeated on the $(s-1)^{th}$ fermionic operator, ensuring that the Pauli operator assigned to the $(s-1)^{th}$ fermionic operator in the repeated steps (a) to (c) is different from the Pauli operator assigned to the $(s-1)^{th}$ fermionic operator the previous time steps (a) to (c) were enacted on the $(s-1)^{th}$ fermionic operator.

If no encoding has yet been found, then even if the next Pauli operator which is assigned has a higher cost than the previous Pauli operators, it may still be the best one to choose. The point here is that if an encoding has been found, but this process is repeated to find a better encoding, then it should be ensured that the Pauli operators assigned in the second iteration (i.e. the second attempt to find a complete mapping) do not cost more than the previously found encoding. This works particularly effectively in cases where the aggregate cost of a mapping is equal to the maximum cost of a pairing within that mapping. In some cases it may also be desirable that the Pauli operator is not greater than some fixed upper threshold of cost even in the event that no encoding has yet been found, for example to bound the cost of implementing the encoding at some upper limit (e.g. one determined by considerations of the available hardware capabilities).

This "backtrack and try another pairing" feature allows the method to automatically close off dead ends of pairing and to explore the space of possible mappings more efficiently. Evidently the backtracking procedure can be repeated to "unpair" more than one of the more recent pairings in the case where no legitimate complete mapping is possible even when a single layer of backtracking is applied. In other words unpairing can be done repeatedly (and at any stage in the process - i.e. at any value of s) to backtrack until a suitable pairing is found. In some cases, this may result in backtracking so far as to re-assign the first pairing. In such cases, the method starting with a random assignment may be useful because there may be cases where the method repeatedly returns to the first pairing (i.e. there is a high likelihood of needing to backtrack), so making this assignment randomly helps to explore different (random) paths through possible mappings. In any case, it is apparent that the use of a backtracking procedure can help to explore the full space efficiently and identify legitimate mappings.

In some cases, each time a fermionic operator is assigned to a Pauli operator, subsequent fermionic operators are prohibited from also being assigned to that same Pauli operator. In other cases, the same Pauli operator may have two different fermionic operators assigned to it, however this would require an encoding in which it is not possible to distinguish between these operations, which can lead to knock-on issues since if the distinguishability of the two operations was not important, it is unlikely that they would be useful elements of the mapping.

The definition of the cost models themselves is a reasonably open question, with the features being chosen depending on the specific use case intended. An example cost model considered herein is as follows. Given an encoding, every term in the set of fermionic operators is mapped to a qubit operator, which has support on a subset of qubits. In order to simulate the term, these qubits must be made to mutually interact. This requires interactions across at least all edges of a minimal Steiner tree (on the hardware graph) that contains these qubits. Thus, an effective proxy for the circuit depth of simulating this term is the number of edges in this Steiner tree, and the aggregate cost of a given complete mapping is the maximum of this metric over all terms in the set because this maximum determines a depth or complexity of the eventual quantum circuit which will need to be created to implement each term. This circuit depth is currently a core consideration for quantum computations due to current limitations on circuit noise and fidelity. Of course there are other criteria which can become important in cases where noise and fidelity are no longer (the main) limiting factors.

The most general form of the above method is a brute force approach, yet a branch-and-bound algorithm can be employed to search the space of possible encodings (as e.g. in the backtracking examples above). The size of the search space grows very rapidly with the number of fermionic terms in the set and the size of the hardware graph. A number of strategies to reduce the size of this search space and exit branches early are provided herein, which makes it possible to solve small problem sizes.

In addition, where both the system being modelled and the hardware graph each possess translational symmetry and may be described concisely by a unit cell. Translational symmetry is ubiquitous in physics and so makes sense for modelling physical systems, such as in material science and condensed matter, where the majority of systems of interest possess translational symmetry. Furthermore, as superconducting quantum computers scale up, qubits are being arranged in a tiled pattern. This trend is expected to continue, as it lends itself well to large scale manufacturing. As such, in some examples the set of fermionic operators may include translation invariant terms and the one or more commutation relations and/or anticommutation relations may be presented in a manner which respects translations relative to a central unit cell.

Some kinds of cost models are better suited to the particular algorithmic strategy being considered. Cost models that give a lower bound on the cost of a partially specified encoding allow for identification of "dead ends" and allow for an early abandonment where the aggregate (partial) encoding cost is already larger than a pre-specified upper bound on cost. This reduces the expected runtime of the algorithm. More specifically, if the algorithm is attempting to complete a partially specified encoding, and it finds that the lower bound on the cost of this partially specified encoding is higher than the cost of the best encoding it has found thus far, then it is free to abandon this partially specified encoding and move on to the next case.

In addition, since each code is built up of a sequence of Pauli operators, if the cost model can be lower bounded by looking at an individual Pauli operator then this yields further improvements in the algorithmic runtime. More specifically the Pauli operators may be considered in order of ascending cost in the algorithm at each assignment step, and during the process of populating the encoding the algorithm need only consider those Pauli operators below some threshold determined by the best cost found so far. In this way one may further accelerate the search process. Furthermore this case allows for a guarantee that the encoding found is optimal without having to exhaustively search through all possible combinations.

Cost models may satisfy up to three different criteria, with each subsequent criterion giving rise to more powerful results in the algorithm:

Criterion 1: assigns a number (the cost) to every encoding.
Criterion 2: assigns a number to every partial encoding which lower bounds the cost of any encoding that is compatible with the partial assignment
Criterion 3: assigns a number to every Pauli operator which lower bounds the cost of any encoding which contains that Pauli operator.

Here, Criterion 3 implies Criterion 2 which implies Criterion 1.

A cost model we consider here is one that satisfies all criteria. To each Pauli operator it assigns a number (cost), given by the number of edges in the smallest tree on the hardware connectivity graph that contains the qubits on which the Pauli has support. Then the total cost of an encoding is the worst costing (most "expensive") Pauli.

The above logic generalizes. Any cost function which assigns a cost to any Pauli operator may then be used as a cost model for an encoding which satisfies all three criteria by taking the cost of the encoding to be the worst cost of any Pauli operator in the encoding.

Some examples of alternative cost models satisfying all three criteria include: The number of qubits on which the Pauli has support; A tree like cost model -- similar to the one discussed above -- that also accounts for the possibility that some interactions may be higher quality than others (i.e. by weighting the edges); Any Criterion 3 cost function combined with a blacklist or whitelist specifying allowed Pauli operators (weighting disallowed Pauli operators by some very high value or simply refusing to allow them to be used).

Examples of cost functions which satisfy criterion 1 but not 2 and 3 include: The average Pauli weight of the Pauli operators; The operator weight of the stabilizers associated with the encoding; The probability of an undetectable error given a hardware noise model; The total circuit depth of a specific algorithm. that is to say that the cost model may be based on at least one of: the number of qubits on which a given Pauli operator has support; a weighted sum or average of the number of qubit-qubit connections spanned by a given Pauli operator; a blacklist of forbidden Pauli operators for assignment to one or more fermionic operators; and/or a whitelist of forced assignments of Pauli operators for one or more fermionic operators.

The method above takes a collection of fermionic operators and may further receive information relating to a hardware layout and finds the best encoding. For example, the cost model may be based on properties of the quantum information processor, for example the physical arrangement (and interconnections between, including e.g. weighting the interconnections based on a notion of "quality" of connection) qubits forming part of the quantum information processor. In some cases this may be used to evaluate potential hardware designs best suited to simulate a set of fermionic operators, for example by fixing the set of operators, then iterate over hardware designs and run the procedure to find the best code for that particular layout. This process can be repeated until a layout is found that gives the best (lowest cost) code implementation from the family of layouts under consideration. In other words, the disclosure extends to a use of the method in identifying improved hardware layouts for an encoding which maps the fermionic operators onto qubits of a quantum information processor, the use comprising: selecting a hardware layout from a set of hardware layouts; executing the method of any one of the preceding claims to identify the optimum mapping for that hardware layout; selecting a new hardware layout from the set of hardware layouts; and selecting the hardware layout and associated optimum encoding which results in the lowest cost according to the cost model.

In a similar fashion this can be used to choose among a set of candidate fermionic systems to simulate on a given piece of hardware. This includes the steps of fixing the hardware layout, then iterating over fermionic systems each described by a set of fermionic interactions. The method is then run to find the best code for that particular set of interactions. These steps are repeated until a system is found that gives the best code for the available layout.

Here the term "hardware layout" refers to the available qubit interactions on the hardware. Any circuit operation will need to be decomposed into these interactions, and so this ultimately determines the cost of performing the operation. If for example the layout is a chain, where each qubit only is able to interact with its neighbouring qubit, then any interaction involving two qubits on either end of the chain would necessarily need to be mediated by all of the interactions on the chain, and ultimately be quite costly. This is why it is desirable to tailor the description of the fermionic operations to the layout of the hardware since this kind of tailoring can have a dramatic effect on the efficiency. Some of the cost models set out herein are directed at capturing this added cost of getting different qubits to talk to one another. This is analogous to contiguous memory concerns in optimizing algorithms on classical computers, wherein the execution of certain computations are optimized to operate on parts of memory that are stored physically close to one another on the actual hard drive, to minimize the length of time it takes for the read-head to move to the relevant location. Even though classical computers have become more powerful and these concerns have become more niche they remain highly relevant for programmers interested in getting the most performance out.

Optionally the cost model is based on a number of hardware-native operations required to implement a unitary rotation generated by a given Pauli operator. In other words, the direct end product of the method is assessed based on the specific interactions and processes which are to be implemented, and the cost model is constructed to reflect those processes and to provide a mapping which lowers the burden of implementing them.

Optionally, the mapping includes, for each pair of fermionic operators having a product relation equal to the identity matrix, a stabiliser formed from the product of the corresponding Pauli operators to which the pair of fermionic operators have been assigned; wherein a code space of the qubits is chosen so that a measurement of any stabiliser yields a value of 1. In such cases, the cost model may further be based at least in part on a number of computation or encoding errors detectable via a measurement of the stabilisers formed in a given encoding.

The products in question may include two or more fermionic operators, so for example if a particular set of fermionic operators leads to the identity $F_1 F_4 F_5 F_9 = 1$, then the code space to represent the Pauli operators on the qubits is chosen so that the corresponding Pauli operator product, $P_1 P_4 P_5 P_9$, also measures as 1 (note that since these are complex mathematical objects, ordering matters, so the above fermionic operator identity does not necessarily say anything about the Pauli operator product in a different order, such as $P_5 P_1 P_4 P_9$). Note that there may be different products of fermionic operators which yield the identity in fermion space yet which map to the same Pauli stabiliser, or even map to the identity in the qubit picture. For example if $F_1 F_2 F_3 = 1$ and is mapped to the identity matrix in the Pauli picture, but if it is also the case that $F_4 F_5 F_6 = 1$ and is mapped to some stabilizer S, then $F_1 F_2 F_3 F_4 F_5 F_6 = 1$ and can also be mapped to S.

All existing encodings that employ additional qubits to reduce operator weights do so by way of projecting into a code space via the stabilizer formalism. The encodings produced by the presently disclosed method use the same strategy. An extra benefit of the presently disclosed strategy is that some encodings may also detect or even correct errors, due to their high code distance. We show how the methods set out herein can be made to restrict its search to fermionic encodings with a minimum code distance, and thus find low-cost encodings with good error mitigating features.

The method may also be used to find optimal encodings for spinful and spinless Fermi-Hubbard models on various geometries, mapped to a number of different translationally invariant hardware graphs, including many existing superconducting architectures. In some cases these optimal encodings are new, and in other cases they were already known. Importantly, even in the case where an encoding was known, the method certifies that the encoding chosen is the best choice for the given pairing (under the cost models discussed herein).

The fermionic encoding is a stabiliser code, and it functions when all operations are performed within a subspace of the full Hilbert space of the multi-qubit system. This subspace is termed the "code space." The projectors into that subspace are associated with Pauli operators, which are called "stabilisers". When these Pauli operators are measured they signal whether or not you are in the code space. Therefore. if an error occurs in the computation then it can be identified by measuring the stabilizers and seeing if there is any indication that you are no longer in the desired code space. This is strongly analogous to classical codes, for example the repetition code which encodes 0 -> 000 and 1 -> 111 , if a single error occurs, e.g. 111 -> 110, then errors can be identified by checking that the sum of every pair of bits is even. Here the sum of the last two bits is odd so there is an error. In the case of fermionic encodings, fixing a mapping from fermionic operators to Pauli operators implicitly defines the stabilizers. For a given choice of mapping, it can therefore be computed what the form of such stabilizers is, and a check can be performed as to the types of errors they can detect. The mappings may be selected (e.g. via an appropriate choice of cost model) to be able to detect the maximum number of such errors.

Thus operationally the procedure one might use to cost an encoding based on its error detecting properties is to first specify the complete mapping, then compute what the stabilisers must be, then compute what errors these stabilisers detect, then assign a quality value to the encoding based on how important each of these errors are to detect. By iterating over many such complete mappings, the best one may be selected as the one which is able to detect the largest number of the most important (e.g. most fatal, most likely to occur, etc.) errors.

To explain this relationship in a little more detail, the set of fermionic operators form an algebra which has certain mathematical relations beyond simply the anti-commutation and commutation relations which are preserved in the corresponding Pauli operators in a given mapping. In particular, certain products of fermionic operators must yield the identity. The requirement for specifying a mapping from fermionic operators to qubit operators is only that the mapping must faithfully reflect the anti-commutation and commutation relations as set out above. In particular no demand is made at the outset that the Pauli gates also satisfy these product relations mapping to the identity operator. Indeed this is impossible since they constitute different algebras.

However in order for this mapping to be faithful, product relations must be imposed in some format. This is done by restricting the space on which these qubit operators act so that they operate as though the fermionic product relations are satisfied. If the product of a set of fermionic operators yields the identity, then the product of the corresponding set of Pauli operators yields a stabiliser, and we demand that the qubit system be in a code space so that this stabiliser always yields the value of 1 when measured. In this way the stabiliser operates as though it were the identity by careful selection of a code space where this measurement is fulfilled. Thus in order to specify the stabiliser code, one need only identify all of the relevant relations in the fermionic algebra that should yield 1, but which do not when represented as qubit operators. At this point all such products in the qubit picture are identified as the stabilisers defining the code space. The mathematical formalism below explains in detail why this procedure is always guaranteed to work correctly. Moreover, this is what allows us to enumerate a very broad class of encodings.

Optionally, the cost model is applied to one, a plurality of, or each iteration of step (c) to identify the optimum of the candidate Pauli operators to which $F_s$ should be assigned. In other words, the best available assignment is made at each assignment. As noted above, in cases where the aggregate cost of the complete mapping is the maximal cost of a single assignment, this leads to the best possible (lowest cost) complete mapping and/or an early identification of a dead end in the assignment process.

Optionally, the method further includes the cost model being applied to the set of all possible Pauli operators implementable on the quantum information processor to identify, for each Pauli operator, a first set of other Pauli operators which commute with that Pauli operator, ordered from lowest cost to highest cost. Additionally or alternatively the method may further include the cost model being applied to the set of all possible Pauli operators implementable on the quantum information processor to identify, for each Pauli operator, a second set of other Pauli operators which anticommute with that Pauli operator, ordered from lowest cost to highest cost. This allows for an easy look up of the best available assignment which can be made at each step to implement a pairing. The first set of Pauli operators may be used in steps (b) and (c) to identify the optimum candidate Pauli operator and/or the second set of Pauli operators may be used in steps (b) and (c) to identify the optimum candidate Pauli operator.

The method further comprises encoding the complete mapping onto the quantum information processor. This further step places the quantum information processor into a state by which the improved or optimal encoding is made use of and is ready for operations to be enacted on the encoded state. Accordingly, the method may further comprise performing a calculation and/or a time evolution on the encoded complete mapping.

As an example of the type of set of fermionic modes to which the method may be applied, the set of fermionic operators may collectively form a Hamiltonian. This can be useful in modelling real-world physical systems on a quantum information processor, for example.

Also disclosed herein is a control apparatus for a quantum information processor, the apparatus configured to compile a quantum circuit for performing quantum operations on a quantum information processor, the apparatus comprising: a processor configured to perform the steps of any one of the methods described above. The apparatus may further include the quantum information processor.

Also disclosed herein is a non-transient computer readable medium comprising instructions which cause a computer to enact any or all of the method steps described above.

## Brief Description of the Figures

The invention will now be described, by way of examples, with reference to the Figures in which:

Figure 1 schematically illustrates an iteration of the method set out herein;
Figure 2 illustrates fermionic systems to which the method has been applied;
Figure 3 shows hardware graphs and unit cells to which the method is applied;
Figures 4A to 4K (collectively "Figure 4" herein) summarise the various encodings identified by the current method when applied to fermionic algebras of various edge and vertex operators with a view to optimising for particular hardware layouts; and
Figure 5 shows a schematic of a controller and quantum computer (or quantum information processor) according to the present disclosure.

## Detailed Description

To describe the detailed operation of the process, it is beneficial first to present the mathematical formalism below. We start by employing the following Majorana operators:

$$\gamma_j := a_j + a_j^\dagger \qquad\qquad (1)$$

$$\bar{\gamma}_j := i\left(a_j^\dagger - a_j\right) \qquad\qquad (2)$$

where $a_j^\dagger$ and $a_j$ are the standard fermionic creation and annihilation operators, we may consider the group of Majorana monomials:

$$\mathcal{M} := \left\{ M(b) := \prod_{j=0}^{m-1} \gamma_j^{b_j} \bar{\gamma}_j^{b_{j+m}} \mid b \in \{0,1\}^{2m} \right\} \times \{\pm 1, \pm i\} \tag{3}$$

Generally physicists are interested in an algebra of observables, i.e. the group algebra $\mathbb{C}[\mathcal{M}]$ on $\mathcal{M}$ or otherwise the group algebra $\mathbb{C}[F]$ on some subgroup F $\leq \mathcal{M}$ of $\mathcal{M}$. For example fermionic parity super-selection restricts the algebra of observables of natural systems to be the group algebra on the even monomials

$$\mathcal{M}^+ := \mathcal{M} \text{ with } |b| = 0 \tag{4}$$

where $|b| := \Sigma_i b_i$ mod 2. One may also be interested in restricting to smaller subgroups, for example if one is interested in conservation of a symmetry.

To construct an encoding of these observables into qubits, one must find an algebra isomorphism between the given group algebra and an algebra of observables on the qubit system. Since these are group algebras it suffices to find a faithful group representation that acts trivially on elements of the complex field (i.e. maps -1 to -1 and $i$ to $i$), which can then be extended to the group algebra by linearity of the representation.

We are often interested in engineering our encoding to satisfy specific features on some privileged subset $\mathcal{F} \subseteq F$ of the group. So we want a way to specify the form of the elements in $\mathcal{F}$, and then to build a faithful group representation of the rest of the group $F$ which is consistent with that form. The procedure for doing this is as follows. For the sake of simplicity $F$ is assumed to be generated by $\mathcal{F}$.

Given a subset $\mathcal{F} \subseteq \mathcal{M}$ of Majorana monomials, the strategy is to find a mapping $\sigma : \mathcal{F} \longrightarrow \mathcal{P}$ from $\mathcal{F}$ to the group of Pauli operators on $n$ qubits:

$$\mathcal{P} := \left\{ P(b) := \prod_{j=0}^{n-1} X_j^{b_j} Z_j^{b_{j+n}} \mid b \in \{0,1\}^{2m} \right\} \times \{\pm 1, \pm i\} \tag{5}$$

such that $\sigma$ preserves the group commutation relations:

$$\forall f_i, f_j \in \mathcal{F} : [f_i, f_j] := f_i^{-1} f_j^{-1} f_i f_j = \pm 1 \tag{6}$$

and inverse/hermiticity relations:

$$\forall f \in \mathcal{F} : f^{-1} = f^\dagger = \pm f \tag{7}$$

among elements of $\mathcal{F}$. Note however that $\sigma$ need not, and indeed typically does not, preserve any other product relations. Next we show that once a mapping of this form has been found, it uniquely specifies a group representation of the subgroup F = $\langle \mathcal{F} \rangle$ generated by F, subject to one caveat.

Consider the finitely presented group, incorporating the limitations of equations (6) and (7) above:

$$\Gamma = \langle \mathcal{F} \times \{\pm 1, \pm i\} \mid 6,7 \rangle \tag{8}$$

$$= \left\{ \Gamma(b) := \prod_{j=0}^{|\mathcal{F}|-1} f_j^{b_j} \mid b \in \{0,1\}^{|\mathcal{F}|} \right\} \times \{\pm 1, \pm i\} \tag{9}$$

consisting of the free group on the set $\mathcal{F} \times \{\pm 1, \pm i\}$ subject to relations 6 and 7, but not any of the other product relations of $\mathcal{M}$. The mapping $\sigma$ admits a natural extension from the set $\mathcal{F}$ to the group $\Gamma$ via the group structure of $\mathcal{P}$, and by construction is a group representation of $\Gamma$.

There is a natural group homomorphism $\tau : \Gamma \to \mathcal{F}$ which is defined by its action on the generating elements: $\tau(f_i \in \Gamma) := f_i \in F$ and then extended to the full group $\Gamma$ via existing product relations in $F$, i.e. $\tau(f_i f_j) := \tau(f_i)\tau(f_j)$. Furthermore it is not hard to see that $F \simeq \Gamma/\ker(\tau)$.

In what follows we will make use of the notion of a "descended" representation. Given a group A, a representation $\phi$ and a subgroup $B < A$, if $B$ is in the kernel of $\phi$ then $\phi$ can be descended to a representation $\phi'$ of the quotient group A/B:

$$\phi'(aB) := \phi(a) \tag{10}$$

which is consistently defined since $\phi(B) = 1$. For ease of exposition, we will drop the distinction between $i\phi$ and its descended representation $\phi'$, which can be inferred implicitly from the particular group it acts upon. So for example we may say $\phi$ is a representation of A/B.

In order to construct a group representation of $F$, we must identify the abelian subgroup:

$$S := \sigma(\ker(\tau)) \subseteq \mathcal{P} \tag{11}$$

which, as long as $-1 \notin S$, is a stabilizer group with stabilizer code space $V$. This allows us to define the projection of $\sigma$ onto the subspace $V$:

$$\sigma_V := \prod_V \circ \sigma \tag{12}$$

which remains a representation of $\Gamma$, since $\Pi_V$ commutes with the group $\sigma(\Gamma)$. Furthermore, since $\sigma_V(\ker(\tau)) = 1$, it is also a descended representation of $\Gamma/\ker(z) \simeq F$.

Intuitively the group $\ker(\tau)$ describes which product of elements in $\mathcal{F}$ should be yielding the identity. By projecting into the code space V we ensure that this product structure is preserved.

Finally, we need to ensure our representation is faithful - i.e. there is a one-to-one correspondence between qubit operations on the code space and logical fermionic operations. It can be shown (see below) that the representation $\sigma_V$ is a faithful representation of $F$ if and only if $\ker(\sigma) \subseteq \ker(\tau)$. If this is not the case, then there is a gauge group

$$G := \tau(\ker(\sigma)) \subseteq F \tag{13}$$

of observables whose value becomes fixed to +1 when projecting into V. In this case $\sigma_V$ is instead a faithful representation of the quotient group $F/G$, as proved below.

**Proof that $\sigma_V$ is a faithful representation of F/G**

**Theorem:** *The map $\sigma_V$, as defined in equation (12), is a faithful representation of* F/G.

*Proof* Note that $F/G \simeq \Gamma/(\ker(\tau)\ker(\sigma))$, and that $\ker(\tau)\ker(\sigma) \subseteq \ker(\sigma V)$, so $\sigma_V$ is a representation of *F/G*. In order to show that $\sigma_V$ is a faithful representation of *F/G*, we need only show that $\ker(\tau)\ker(\sigma) = \ker(\sigma_V)$. Note that:

$$\ker(\sigma_V) = \ker\left(\prod_V \circ \sigma\right) = \sigma^{-1}\ker\left(\prod_V\right)$$

so we need to show that

$$\sigma\big(\ker(\tau)\ker(\sigma)\big) = S = \ker\left(\prod_V\right)$$

i.e. there does not exist a Pauli operator $p \in \ker(\Pi_V)$ such that $p \notin S$.

Suppose such a Pauli $p$ exists, then $\Pi_V p = \Pi_V$. Expanding the projector $\Pi_V$:

$$\frac{1}{|S|}\sum_{s \in S} sp = \frac{1}{|S|}\sum_{s' \in S} s'$$

$$\forall q \in S \ : \ \mathrm{Tr}\left[\sum_{s\in S} qsp\right] = \mathrm{Tr}\left[\sum_{s'\in S} qs'\right]$$

given that -1 $\notin$ S and S is Hermitian, we can use the orthogonality of the trace inner product on Pauli operators:

$$\forall q \in S \ : \ \sum_{s\in S} \mathrm{Tr}[qsp] = 1$$

which implies $\exists q$, $s \in S$ such that $qs = p$ and so $p \in S$, which is a contradiction, thereby proving the theorem.

**Corollary:** $\sigma_V$ *is a faithful representation of F if and only if G* = {1}, i.e. ker($\sigma$) $\subseteq$ ker($\tau$)

In summary, if we can map a set of fermionic observables $\mathcal{F}$ to Paulis which satisfy the group commutation relations (6) and inverse relations (7) among the elements of $\mathcal{F}$, then we can identify a stabilizer group $S \subseteq P$ and a gauge group $G \subseteq F := \langle \mathcal{F} \rangle$ such that we can extend this mapping $\sigma$ *to* an algebra isomorphism on the group algebra $\mathbb{C}[F/G]$ by projecting into the stabilizer code space *V* of *S,* fixing the logical gauge group *G* to be +1. The one caveat is that the stabilizer group S may not contain -1.

**Binary Representation**

A feature of both the Pauli group $\mathcal{P}$ and the Majorana monomial group $\mathcal{M}$ is that up to a phase their elements may be represented by a binary vector, as made explicit in definitions (3) and (5). Furthermore, the product relations among elements in these groups correspond directly to addition of the corresponding binary vectors - again up to a phase.

Thus it is useful to specify the projective portion of the maps $\tau$ and $\sigma$ as matrices over a binary field, and postpone the specification of the phase e.g.:

$$\hat{\tau} = \begin{array}{c} \\ \gamma_0 \\ \gamma_1 \\ \vdots \\ \gamma_{m-1} \\ \bar{\gamma}_0 \\ \bar{\gamma}_1 \\ \vdots \\ \bar{\gamma}_{m-1} \end{array} \begin{array}{cccccc} f_1 & f_2 & f_3 & \cdots & f_{|\mathcal{F}|} \\ \begin{pmatrix} 0 & 1 & 1 & \cdots & 0 \\ 1 & 0 & 0 & \cdots & 0 \\ \vdots & \vdots & \vdots & \ddots & \vdots \\ 1 & 1 & 1 & \cdots & 1 \\ 0 & 1 & 0 & \cdots & 0 \\ 1 & 1 & 1 & \cdots & 1 \\ \vdots & \vdots & \vdots & \ddots & \vdots \\ 1 & 1 & 1 & \cdots & 1 \end{pmatrix} \end{array} \qquad (14)$$

$$\hat{\sigma} = \begin{array}{c} \\ X_0 \\ X_1 \\ \vdots \\ X_{n-1} \\ Z_0 \\ Z_1 \\ \vdots \\ Z_{n-1} \end{array} \begin{array}{cccccc} f_1 & f_2 & f_3 & \cdots & f_{|\mathcal{F}|} \\ \begin{pmatrix} 1 & 0 & 0 & \cdots & 0 \\ 1 & 0 & 1 & \cdots & 0 \\ \vdots & \vdots & \vdots & \ddots & \vdots \\ 0 & 0 & 1 & \cdots & 0 \\ 1 & 0 & 1 & \cdots & 1 \\ 0 & 1 & 0 & \cdots & 0 \\ \vdots & \vdots & \vdots & \ddots & \vdots \\ 0 & 0 & 0 & \cdots & 1 \end{pmatrix} \end{array} \qquad (15)$$

**Where the columns** $\hat{\tau}_i$ and $\hat{\sigma}_i$ are given by:

$$\tau(f_i) = \delta_\tau (f_i) M(\hat{\tau}_i) \ , \ \sigma(f_i) = \delta_\sigma (f_i) P(\hat{\sigma}_i)$$

where $\delta_\tau$ and $\delta_\sigma$ are as yet unspecified phases.

Writing the maps in this way allows us to easily represent the group commutation relations as a matrix equation, and also to easily identify the stabilizer group *S* and gauge group *G.*

For two Pauli operators $P(a)$, $P(b)$ specified by a, $b \in \mathbb{F}_2^{2n}$, their group commutation relation is given by:

$$[P(a),\ P(b)] = (-1)^{\omega_q(a,b)} \qquad (16)$$

where $\omega_q$ is a binary symplectic form:

$$\omega_q(a,b) = a^\dagger \Lambda_q b, \ \Lambda_q = \begin{pmatrix} 0 & 1 \\ 1 & 0 \end{pmatrix} \otimes I_{n \times n} \qquad (17)$$

In the case of Majorana operators, if we restrict $\mathcal{F}$ to be a subset of the even Majorana monomials $\mathcal{M}^+$, then for two Majorana operators M(a), $M(b)$ specified by a, $b \in \mathbb{F}_2^{2n}$, their group commutation relation is given by:

$$[M(a),\ M(b)] = (-1)^{\omega_f(a,b)} \qquad (18)$$

Using the quadratic form $\omega_f(a, b) = a^\dagger b$ works for even parity Majorana operators, however it fails for odd parity operators. To correct this, the products of the Hamming weights mod 2 should be added.

In order to have quadratic form that behaves properly also for odd operators, we will use a matrix in the quadratic form:

$$\omega_f(a,b) = a^\dagger \Lambda_f b \quad , \ \Lambda_f = I + C_1 \qquad (19)$$

where $I$ is the $2n \times 2n$ identity matrix and $C_1$ is the constant matrix with 1 in every entry. It can be easily verified that $a^\dagger C_1 b = |a||b|$, so we then have:

$$\omega_f(a,b) = a^\dagger b + |a||b| \qquad (20)$$

Thus, we may say that $\sigma$ preserves the group commutation relations (6) if and only if the following matrix equation is satisfied:

$$\hat{\tau}^\dagger \Lambda_f \hat{\tau} = \hat{\sigma}^\dagger \Lambda_q \hat{\sigma} \qquad (21)$$

In almost all practical use cases $\mathcal{F} \subseteq \mathcal{M}^+$. Next, in order to ensure that the map $\sigma$ satisfies the inverse/hermiticity relations (7), we must additionally specify the phases, $\delta_\tau$ and $\delta_\sigma$. The phase $\delta_\tau$ is assumed to be given explicitly by the choice of $f_i$, for example one may want the elements in $\mathcal{F}$ to be some subset of the edge and vertex operators:

$$V_j = -i\gamma_j \bar{\gamma}_j \quad \text{(vertex)} \qquad (22)$$

$$E_{jk} = -i\gamma_j \gamma_k \text{(edge)} \qquad (23)$$

which appear frequently in local fermionic interactions and may be used to generate $\mathcal{M}^+$. Here the phase is explicit. Since Pauli operators square to the identity, and $f^2 \in \pm 1$, the inverse condition $\sigma(f_i)^2 = f_i^2$ is satisfied when the choice of phase $\delta_\sigma$ satisfies:

$$\delta_\sigma(f_i)^2 = f_i^2 \qquad (24)$$

This fixes whether $\delta_\sigma(f_i)$ is complex or real, but it leaves free a choice of sign, which may be useful when we consider the groups $G$ and $S$.

Given $\hat{\tau}$ and $\delta_\tau$, and a choice of $\hat{\sigma}$ and $\delta_\sigma$ satisfying conditions (21) and (24), we may now compute the stabilizer group $S = \sigma(\ker(\tau))$ and the Gauge group $G = \tau(\ker(\sigma))$. It is not difficult to show (see below) that:

$$\ker(\sigma) \ = \ \{\sigma(\Gamma(b)) * \Gamma(b) | b \ \in \ \ker(\hat{\sigma})\} \qquad (25)$$

and similarly

$$\ker(\tau) \ = \ \{\tau(\Gamma(b)) * \Gamma(b) | b \ \in \ \ker(\hat{\tau})\} \qquad (26)$$

where we note that $\sigma(\Gamma(b)) \in \{\pm 1, \pm i\}$ when $b \in \ker(\hat{\sigma})$ and $\tau(\Gamma(b)) \in \{\pm 1, \pm i\}$ when $b \in \ker(\hat{\tau})$. In other words the kernels of the maps $\sigma$ and $\tau$ are in one-to-one correspondence with the kernels of the matrices $\hat{\sigma}$ and $\hat{\tau}$ respectively, up to a uniquely specified and easily computable phase. The kernel of a binary matrix can be efficiently computed by Gaussian elimination on an augmented matrix. In the case where the matrix elements are in a polynomial ring over a binary field as will be required when we consider translationally invariant systems, the kernel may also be computed using known Gröbner basis methods (see below). Thus it is possible to compute the stabilizer group S and the gauge group G in either case.

**Proof of equations 25 and 26**

**Theorem:**

$$\ker(\sigma) \ = \ \{\sigma(\Gamma(b)) * \Gamma(b) | b \ \in \ \ker(\hat{\sigma})\}$$

*Proof.* The cyclic group $C := \{\pm 1, \pm i\}$ is a normal subgroup of both $\Gamma$ and $P$. The quotient groups $\Gamma/C$ and $P/C$ are isomorphic to the group of binary vectors under addition mod 2: $\mathbb{F}^{|\mathcal{F}|}$ and $\mathbb{F}^{2n}$ respectively. Thus the matrix $\hat{\sigma}$ is a group homomorphism from $\Gamma/C$ to $P/C$. Define the quotient maps $\phi : \Gamma \to \Gamma/C$ and $\psi : P \to P/C$.
First we note that these maps commute in the way one expects, i.e.:

$$\hat{\sigma} \ \circ \ \phi \ = \ \psi \ \circ \ \sigma.$$

This can be seen by noting that by construction

$$\forall f \ \in \ \mathcal{F} : \ \hat{\sigma} \ \circ \ \phi(f) \ = \ \psi \ \circ \ \sigma(f)$$

**and, since** $\sigma, \hat{\sigma}, \phi$ and $\psi$ are all group homomorphisms, for any other element $\delta \, \Pi_i f^{b_i} \in \Gamma$, with $\delta \in C$:

$$\hat{\sigma} \ \circ \ \phi \left( \delta \prod_i f^{b_i} \right) = \prod_i \hat{\sigma} \ \circ \ \phi \left( f^{b_i} \right) = \prod_i \psi \ \circ \ \sigma \left( f^{b_i} \right) = \psi \ \circ \ \sigma \left( \delta \prod_i f^{b_i} \right)$$

Next we argue that $\ker \sigma \simeq \ker \hat{\sigma}$. This can be seen by noting that

$$\ker(\psi \ \circ \ \sigma) \ = \ \sigma^{-1}(C) \ = \ C \, \ker(\sigma)$$

and that

$$\ker (\hat{\sigma} \ \circ \ \phi) \ = \ \phi^{-1}(\ker(\hat{\sigma}))$$

so

$$\ker(\hat{\sigma}) \ = \ \phi(C \, \ker(\sigma))$$

however $\ker(\sigma) \cap C = 1$ and so $\ker \sigma \simeq \ker \hat{\sigma}$. Finally since

$$\forall x \ \in \ \ker(\hat{\sigma}) : \ \sigma(\Gamma(x)) * \Gamma(x) \ \in \ \ker(\sigma)$$

and

$$\forall x \neq y \in \ker(\hat{\sigma}) : \sigma(\Gamma(x)) * \Gamma(x) \neq \sigma(\Gamma(y)) * \Gamma(y)$$

it follows by a counting argument that

$$\ker(\sigma) = \{\sigma(\Gamma(b)) * \Gamma(b) | b \in \ker(\hat{\sigma})\}$$

Similarly, the relation: $\ker(\tau) = \{\tau(\Gamma(b))^* \Gamma(b) | b \in \ker(\tau^\wedge)\}$ $\ker(\tau) = \{\tau(\Gamma(b)) * \Gamma(b) | b \in \ker(\hat{\tau})\}$ may be demonstrated in the exact same way, but replacing $\sigma$ with $\tau$ and $P$ with $F$.

**Computing the Kernel of Polynomial Matrices**

The set of Laurent polynomials over $\mathbb{F}_2$ forms a *ring R,* the set of vectors over this ring is formally referred to as an *R-module* - denoted $R^m$ for m dimensional vectors - and the "matrices" acting on this module are called *R-module homomorphisms.* The "kernel" of a module homomorphism is called a *syzygy module.*

**Definition:** (Syzygy Module). *Let* $\{f_i\}_1^t$ *be elements of an R-module. The set of all tuples* $(a_1, ..., a_t)$*, where* $a_i \in R$*, such that* $\Sigma_i a_i f_i = 0$ *is a syzygy module.*

Here the elements $f_i$ correspond to the columns of our polynomial matrix. The syzygy module is a *submodule* of $R^m$. Importantly, any syzygy module is generated by a finite set of elements if $R$ is finitely generated (which in our case it is).

The text above avoids using the language of modules so far. However when discussing computation of the kernel of the polynomial matrices, it is important to engage with the formal distinction between matrices acting on vector spaces and module homomorphisms acting on modules. In particular, unlike the binary matrix case where the kernel can be computed by simple Gaussian elimination, the computation of the generating set of a syzygy module requires the computation of a Gröbner basis using Buchberger's algorithm, followed by some additional steps.

The reason for this is that although one may apply Gaussian elimination to a polynomial matrix and compute elements of the syzygy module, these elements may not constitute a complete generating set. Here we briefly outline the procedure for computing a generating set of the syzygy module associated with a polynomial matrix. More details are available in Chapter 5 of C7 and Chapter 2 of C8.

We begin by considering the subset of polynomials whose monomials have non-negative degree (which we call $\mathbb{F}_2^+(x_1, .., x_D)^n)$ . This allows for easy placement of an ordering convention on the monomials of the polynomial. Any matrix over Laurent polynomials may be translated so that it only contains elements of this type. It is not difficult to see that if we find a set of generators for the syzygy module of the translated polynomial matrix, then under an inverse transformation this must be contained in the syzygy module of the original matrix. However it is not obvious that this captures a minimal generating set when we take the full ring of Laurent polynomials, since we have access to more operations. We return to this below.

First though a syzygy module of a module homomorphism (kernel of a polynomial matrix) is computed, by treating the basis elements of the vector $e_i$ as variables in a polynomial. So for example the vector $v = (1 + x, 1 + y)$ may be treated as a polynomial:

$$v(x, y, e_1, e_2) = (1 + x)e_1 + (1 + y)e_2 = e_1 + xe_1 + e_2 + ye_2$$

So we transform n dimensional vectors over polynomials in $\mathbb{F}_2^+(x_1, .., x_D)^n$ into polynomials in $\mathbb{F}_2^+(x_1, .., x_D, e_1, .., e_n)$ To compute the syzygy module of the original module homomorphism - specified by a collection of polynomials $\{f_i\}$ in $\mathbb{F}_2^+(x_1, .., x_D, e_1, .., e_n)$ corresponding to the column vectors of our polynomial matrix - we are interested in finding solutions $p_i$ to the equation:

$$\sum_i p_i f_i = 0 \ , \ p_i \in \mathbb{F}_2^+(x_1, .., x_D)$$

The set of such solutions constitutes a syzygy module of the original module homomorphism. We may leverage existing methods in algebraic geometry to find solutions to this equation. Standard methods using Gröbner bases typically have both $p_i$ and $f_i$ belonging to the same polynomial rings. However in our case there is an additional restriction on $p_i$. Thus we need slightly modified definitions for Gröbner bases, and for Buchberger's algorithm, which is used to compute Gröbner bases.

Let $R$ denote a polynomial ring, for example $\mathbb{F}_2^+(x_1,..,x_D)$. Let $R^m$ denote the m dimensional module over $R$ expressed in terms of basis elements $\{e_i\}_1^m$, i.e. $f \in R^m$ has the form $f = \sum_j^m f_j\, e_j$ where $f_j \in R$. If a and $b$ are monomials in $R$, then a' = $ae_i$ and $b$' = $be_j$ are monomials in $R^m$, and:

- a' divides $b$' if and only if $i = j$ and a divides b.
- The greatest common divisor of a' and $b$': GCD(a', $b$') = GCD(a, $b$)$e_i$.
- The least common multiple of a' and $b$': LCM(a', $b$') = LCM(a, $b$)$e_i$ if $i = j$ otherwise LCM($a$', $b$') = 0.

Let LT(g) denote the leading term of a polynomial $g \in R^m$ according to some predetermined ordering convention on the monomials, and LM($g$) the leading monomial - for the purposes herein they are identical, but they are distinct for generic fields $R$.

**Definition:** (Gröbner Basis of a submodule). *A submodule $M \subseteq R^m$ is a monomial submodule if it can be generated by monomials in $R^m$. Given a submodule $M \subseteq R^m$, denote by $\langle LT(M) \rangle$ the monomial submodule generated by the leading terms of all $f \in M$. A finite collection $G = \{g_i\} \subset M$ is called a Gröbner basis of M if $\langle LT\,(M) \rangle = \langle\langle LT(g_i) \rangle\rangle$.*

The Gröbner basis generates $M$: $M = \langle G \rangle$. There exists an algorithm for computing a Gröbner basis of ideals, called Buchberger's algorithm. Buchberger's algorithm can be used in exactly the same way to compute Gröbner Bases of submodules, however one needs to use the revised notions of divisibility, GCD and LCM given above.

Equipped with the Gröbner Basis $G = \{g_i\}_1^s$ of a submodule $M = \langle\{f_i\}_1^t\rangle$, computing the syzygy module requires a few final steps.

**Definition:** (S-polynomial). *Given f, g $\in R^m$, let L = LCM(LM(f), LM(g)) the S-polynomial is defined as:*

$$S(f,g) := \frac{L}{LT(f)} f - \frac{L}{LT(g)} g$$

**Theorem:** (Buchberger's Criterion). *A set $G = \{g_i\} \subset R^m$ is a Gröbner basis if and only if there exists polynomials $a_{ijk} \in R$ such that $S(g_i, g_j) = \Sigma_k\, a_{ijk}\, g_k$ and $LT(a_{ij}g_k) \leq LT(S(g_i, g_j))$ for all i, j, k.*

We begin by defining:

$$S_{ij} := \frac{L_{ij}}{LT(g_i)} e_i - \frac{L_{ij}}{LT(g_j)} e_j - \sum_k a_{ijk} e_k$$

where $L_{ij}$ = LCM(LM($g_i$), LM($g_j$)). Let $\hat{F} = (f_1, ... , f_t)$ be an m $\times$ t polynomial matrix and $\hat{G} = (g_1,..., g_s)$ an $m \times s$ polynomial matrix. There exists a $t \times s$ polynomial matrix $\hat{B}$ and a $s \times t$ polynomial matrix $\hat{C}$ such that $\hat{G} = \hat{F}\hat{B}$ and $\hat{F} = \hat{G}\hat{C}$. Let $S_k$ be the columns of the matrix $I$ -$BC$.

**Proposition:** (Syzygy Module).

$$Syz(f_1,\ldots,f_t) = \langle Bs_{ij}, S_k \rangle$$

**Computing** $B$, $C$ and $a_{ijk}$ can be done by application of a polynomial division algorithm which is a subroutine of Buchberger's algorithm.

The arguments outlined above apply to polynomials with non-negative degree. Here we argue that given a polynomial matrix $A$ with entries in a Laurent polynomial, the above methods suffice to compute the kernel. First multiply the matrix A by a translation $T_{\vec{\alpha}} = \prod_i x_i^{\alpha_i}$, where $\alpha_i$ is the smallest degree of $x_i$ in any monomial in $A$. The new matrix A' = $T_{\vec{\alpha}}A$ will only contain polynomials with non-negative degree. Suppose there exists a vector $f$ such that $Af = 0$. Let $T_{\vec{\beta}}$ be a translation where $\beta_i$ is the smallest degree of $x_i$ in any monomial in $f$ so that $f$' = $T_{\vec{\beta}}f$ also has non-negative degree. It is not hard to see that $f$' is in the kernel of $A$': $A$'$f$' = $T_{\vec{\alpha}+\vec{\beta}} +\beta^{\rightarrow} Af = 0$, and furthermore since $f$' has non-negative degree it must be generated by the generators computed using the methods outlined above. Thus if the above methods are applied to compute the kernel of A', $f$' will be contained in that kernel. Thus everything in the kernel *of A* can be found by computing the kernel of *A'* using the methods outlined above, and then applying an appropriate translation.

Having computed *S*, it may turn out that a particular choice of sign convention for $\delta_\sigma$ implies that -1 $\in$ *S*. In this case one can always modify the choice of sign for $\delta_\sigma$ such that S no longer contains -1. The procedure for doing this is as follows.

**Removing -1 from the Stabilizer group** *S*

Given a valid mapping $\sigma(f_i)$, we are always free to define a new valid mapping $\sigma(f_i) \rightarrow \delta_i\sigma(f_i)$ , $\delta_i = \pm 1$. Here we explain how if the stabilizer group S contains -1, one can always find a choice of gauge using Gaussian elimination such that S does not contain -1.

**Theorem:** *Given a mapping $\sigma$, there always exists a choice of sign $\{\delta_i\}$ such that* -1 $\notin$ *S.*

Consider the subgroup of *S* of all elements $\{e\} \subset \ker(\tau)$ such that $\sigma(e) = \pm 1$. Consider a generating set of this subgroup $\{a_k\}$. Let $\vec{a}_k$ be a binary vector indicating which elements in $\mathcal{F}$ are included in $a_k$. Let A be the binary matrix whose rows are the vectors $\vec{a}_k$. Let $\vec{b}$ be a binary vector indicating the signature of $\sigma$ on $a_k$, i.e. it has a 0 at index *k* if $\sigma(a_k) = 1$ and a 1 if $a(a_k) = -1$.

There exists a choice of gauge $\{\delta_i\}$ such that S does not contain -1 if and only if there exists a binary vector $\vec{\delta}$ such that:

$$A\vec{\delta} = \vec{b}$$

It is not hard to see this by noting that if we can find such a $\vec{\delta}$, then applying a corresponding gauge transformation $\delta_i = (-1)^{\vec{\delta}}$ will map $\sigma(a_i) \rightarrow (-1)^{\vec{\delta}\vec{a}_i}\sigma(a_i) = (-1)^{b_i}(-1)^{b_i} = 1$

Finally note that the rows of A are linearly independent, since the elements $a_i$ are generators, so *A* can always be put into reduced row echelon form:

$$\tilde{A} = [\mathbb{I}| *]$$

and so $A\vec{\delta} = \vec{b}$ always admits a solution.

In addition to resolving any problems with -1 $\in$ *S*, the choice of sign convention in $\delta_\sigma$ also has an impact on the sign of the elements in *G*. Thus one has some freedom to choose the particular gauge values of the elements in *G*. For example if the fermionic parity observable is in *G*, then one may be able to choose if the code space represents even or odd fermion parity by a judicious choice of sign convention in $\delta_\sigma$.

**Translationally Invariant Systems**

In many cases it may be useful to find an encoding that tessellates space. So it is helpful to extend the binary formalism discussed above to handle a concise representation of translationally invariant fermionic operators, Pauli operators, and mappings between them. In this case we employ the Laurent polynomial formalism is employed, in which represent Pauli operators, Majorana monomials, and elements of the free group Γ, and the mappings $\sigma$ and $\tau$ are all represented by vectors and matrices over multi-variable Laurent polynomials, the spaces of which we denote by:

$$\mathbb{F}_2(x_1, \dots, x_D)^{n\times m} := \left\{\sum_{k\in\mathbb{Z}^D} a_k \prod_{i=1}^D x_i^{k_i} , \ a_k \in \mathbb{F}_2^{n\times m}\right\} \tag{27}$$

Here the number of variables is equal to the dimensionality *D* of the system, and the degree $k_i$ need not be positive. It is also useful to simplify the algebra by employing the convention that $a^\dagger = \sum_{k\in Z^D} a_k^\intercal \prod_{i=1}^D x_i^{-k_i}$. Finally vector and matrix multiplication is defined by inheriting the product relations of the polynomials:

$$ab = \sum_{p,q\in\mathbb{Z}^D} a_p b_q \prod_{i=1}^D x_i^{p_i+q_i}$$

The following notation is also introduced:

$$T_k := \prod_{i=1}^{D} x_i^{k_i}$$

to be understood as a translation in the lattice by vector $k$.

Intuitively the elements $a_k$ denote the presence or absence of particular terms in a monomial, in the same way as in the binary formalism, at lattice position $k$. Thus we may extend the definitions of the functions $P$, $\Gamma$ and $M$ so that they are maps from the space $\mathbb{F}_2(x_1, .., x_D)^n$ into the tessellated versions of the Pauli operators $\mathcal{P}$, the free group $\Gamma$, and the Majorana monomials $\mathcal{M}$ (respectively) in the following fashion:

$$P(a) = \prod_{k \in \mathbb{Z}^D} \prod_{j=0}^{n-1} X_{j,k}^{a_k[j]} Z_{j,k}^{[j+n]} \tag{28}$$

$$\Gamma(a) = \prod_{k \in \mathbb{Z}^D} \prod_{j=0}^{J-1} f_{j,k}^{a_k[j]} \tag{29}$$

$$M(a) = \prod_{k \in \mathbb{Z}^D} \prod_{j=0}^{m-1} \gamma_{j,k}^{a_k[j]} \bar{\gamma}_{j,k}^{[j+m]} \tag{30}$$

Here $a = \sum_{k \in \mathbb{Z}^D} a_k T_k$, and the multi index $(j, k)$ indicates the jth qubit, mode or privileged element $f_j$ acting on a unit cell of the tessellation translated from the origin by $k$. Here each unit cell contains $n$ qubits, $J$ privileged operators or $m$ modes (respectively). The products are normal ordered in accordance with any preferred ordering on the vectors $k$.

The symplectic forms given by equations (17) and (19) may be extended to $\mathbb{F}_2(x_1, ..., x_D)^n$ in the following fashion:

$$\Lambda_Q := \Lambda_q \tag{31}$$

$$\Lambda_F := I + \sum_{k \in \mathbb{Z}^D} C_1 T_k \tag{32}$$

recalling that $C_1$ is the constant matrix with 1 in every entry. The expression $a^\dagger \Lambda_{Q/F} b$ is an element of $\mathbb{F}_2(x_1, ..., x_D)^n$, and the quadratic form between a and $b$ defining the appropriate group commutation relations is given by the zeroth term in the expression:

$$w_{Q/F}(a,b) := (a^\dagger \Lambda_{Q/F} b)_{\vec{0}} \tag{33}$$

The other terms contain information about the group commutation relations among various relative translations of a and b:

$$(a^\dagger \Lambda_{Q/F} b)_k = (a^\dagger \Lambda_{\frac{Q}{F}} b T_k)_0 = w_{Q/F}(a, b T_k) \tag{34}$$

Although $\Lambda_F$ constitutes an unbounded expression, when we consider even Majorana operators it suffices to truncate the expression, since two terms acting on disjoint sets of modes will always commute with one another.

Intuitively it should be clear that the formalism described above should extend to the translationally invariant case described here. More concretely, and analogously to the discussion above, we would like that given a matrix $\hat{\tau} \in \mathbb{F}_2(x_1, ..., x_D)^{m \times J}$ which describes the projective mapping from the group $\Gamma$ to $\mathcal{M}$, a fermionic encoding is completely specified, up to signs, by a matrix $\hat{\sigma}$ over $\mathbb{F}_2(x_1, ..., x_D)^{n \times J}$ describing the projective mapping from $\Gamma$ to $\mathcal{P}$ satisfying the relation:

$$\hat{\tau}^\dagger \Lambda_F \ \hat{\tau} = \ \hat{\sigma}^\dagger \Lambda_Q \ \hat{\sigma} \tag{34}$$

Instead of proving this in detail here, we simply note that a solution $\hat{\sigma}$ of this kind uniquely specifies an encoding of the kind discussed above for any region $R \subset \mathbb{Z}^D$ of a finite size, by tessellating $\hat{\sigma}$ and $\hat{\tau}$ over $R$:

$$\hat{\sigma}_R := \left( \hat{\sigma} T_{r_1}, \hat{\sigma} T_{r_2}, \ldots, \hat{\sigma} T_{r_{|R|}} \right) \ , \qquad r_i \in R$$

- similarly for $\hat{\tau}_R$ - and mapping every column a of $\hat{\sigma}_R$ or $\hat{\tau}_R$ into a binary vector via:

$$\sum_{k \in \mathbb{Z}^D} a_k \prod_{i=1}^D x_i^{k_i} \to \bigoplus_{k \in R} a_k$$

where here a canonical ordering on k is chosen.

### Example: fermions on a square lattice

We will illustrate our application of the formalism above to describing the encoding of a model of spinless fermions on a square lattice. There is a single complex fermionic mode in each unit cell. We will encode this system onto a qubit system with two qubits per unit cell.

The algebra of fermionic operators can be generated by a single vertex operator acting on a reference cell as well as edge operators acting between the mode in the reference cell and the neighbouring cells in the x- and y-directions as well as their translations. We collect these three operators acting on the two species of Majorana operators per unit cell into the $2 \times 3$ matrix $\hat{\tau}$,

$$\hat{\tau} = \begin{pmatrix} V_1 & E_{1,x} & E_{1,y} \end{pmatrix}_f = \begin{pmatrix} 1 & 1+x & 1+y \\ 1 & 0 & 0 \end{pmatrix} \tag{36}$$

The commutation relations amongst the generating operators is encoded in the entries in the matrix:

$$\hat{\tau}^\dagger \Lambda_F \hat{\tau} = \begin{pmatrix} 0 & 1+x & 1+y \\ 1+x^{-1} & x+x^{-1} & 1+y+x^{-1}+yx^{-1} \\ 1+y^{-1} & 1+y^{-1}+x+y^{-1}x & y+y^{-1} \end{pmatrix} \tag{37}$$

We can reproduce a known encoding here for fermions on a square lattice with two qubits per unit cell. Here $V_1 \to Z_0 Z_1$ The encoded generating operators can be chosen as

$$\hat{\sigma} = \begin{pmatrix} \tilde{V}_1 & \tilde{E}_{1,x} & \tilde{E}_{1,y} \end{pmatrix}_q = \begin{pmatrix} 0 & x & y \\ 0 & 1 & 1 \\ 1 & 1 & 1+y \\ 1 & 1 & 0 \end{pmatrix} \tag{38}$$

It is straightforward to verify that this matrix $\hat{\sigma}$ satisfies the encoding equation:

$$\hat{\sigma}^\dagger \Lambda_Q \ \hat{\sigma} = \ \hat{\tau}^\dagger \Lambda_F \ \hat{\tau} \tag{39}$$

Therefore the Pauli operators specified by the columns of $\hat{\sigma}$ provide a valid encoding of the Majorana operators given as the columns of $\hat{\tau}$ for any sized square lattice.

### Symmetries and Fermionic Subalgebras

Many physical systems of interest have symmetries that restrict the form their Hamiltonians may take. In some cases it is possible to capture these symmetries by restricting to a subalgebra of the full fermionic algebra. This is most obvious in the case of parity supersymmetry, which restricts the algebra to even products of Majorana operators. Such symmetries loosen the constraints on the encodings, since it may be the case that the encoding need not represent the full algebra, for example the even Majorana algebra may be completely generated by edge and vertex operators, defined as:

$$E_{ij} := -i\gamma_i\gamma_j \quad , \quad V_i := -i\gamma_i\bar{\gamma}_i \tag{40}$$

Thus single Majorana operators need not admit a representation (see C10 for example). This further motivates designing encodings tailored to representing the specific terms in the Hamiltonian. If the terms make manifest the symmetries implicit in the Hamiltonian then by searching for encodings which represent only those terms, it may be possible to leverage these symmetries. Further examples of two more notable symmetries that can be made manifest in the Hamiltonian terms are discussed below.

In many systems in condensed matter, such as the Fermi-Hubbard model, the total fermion number is a conserved quantity. Expressed in terms of creation/annihilation operators, each operator must consist of an equal number of creation and annihilation operators. Edge operators on the other hand, when expressed in terms of creation and annihilation operators, are decomposed into four quadratic terms with 0, 1, and 2 creation operators. The kinetic term in fermion Hamiltonians is the hopping term which we can express in terms of edge and vertex operators,

$$a_j^\dagger a_k + a_k^\dagger a_j \propto V_j E_{jk} + E_{jk} V_k \tag{41}$$

In this case, we know that whenever edge operators appear in our Hamiltonian, they will always appear as multiplied by a vertex operator as above. It is then possible to explicitly look for low-cost representations of both of the terms in the above sum. We may then expect to find more efficient encodings which would not admit a representation of individual edge or vertex operators. However the careful reader will note that this would preclude the inclusion of any number operators $(N_i = 1 + V_i/2)$ in the algebra, so this would rule out including external fields to the Hamiltonian or the possibility of measuring single mode fermion density. We would note however that pairs of vertex operators would necessarily be included in the representation, and so the algebra may include two point density-density interactions. This is important since the Fermi-Hubbard model includes a spin-spin interaction. In fact the Fermi-Hubbard model has the additional spin conservation symmetry. In this case there are no hopping terms between the two different spin sectors. This further reduces the size of the algebra.

We include here the privileged fermionic operators $\hat{\tau}$ associated with the spinful Fermi-Hubbard model on the square lattice, with two modes per unit cell, one for spin up and one for spin down:

$$\hat{\tau} = \begin{pmatrix} 1 & x & 1 & y & 1 & 0 & 0 & 0 & 0 \\ 1 & 0 & 0 & 0 & 0 & x & 1 & y & 1 \\ \hline 1 & 1 & x & 1 & y & 0 & 0 & 0 & 0 \\ 1 & 0 & 0 & 0 & 0 & 1 & x & 1 & y \end{pmatrix} \tag{42}$$

We note that a single edge operator within a spin sector would correspond to a column vector nonzero in only one entry - which is not in the column space of this matrix.

## Existence of an encoding for a given fermionic unit cell

Given a translationally invariant fermionic system that one would like to encode and a choice of unit cell, it is useful to ask when we can be guaranteed that an encoding exists if we allow for arbitrarily high operator weight. When not considering strictly translationally invariant systems, one can always be sure that some mapping exists as long as the number of qubits is equal to the number of number of fermionic modes being encoded. This commonly achieved by simply associating the fermionic modes to sites on a chain and using the Jordan-Wigner transformation to map the fermionic system to a non locally-interacting spin system.

In the two-dimensional translationally invariant setting when we seek a mapping from local fermionic operators to local qubit operators, we are not free to use Jordan-Wigner as this mapping breaks locality. One can, however, always find an encoding that preserves locality and translation-invariance by choosing a hardware unit cell containing one more qubit than there are fermionic modes per cell, assuming the hardware graph is connected.

This can straightforwardly be achieved by associating the n modes within each unit cell with vertices of a path graph. Within each unit cell, select one of the vertices, say the 0th vertex, and add edges between the 0th vertices in each cell and the one above it in the $y$ direction. Now, add an edge between 0th vertices in each cell and the (n-1)-th vertex in its neighbouring cell in the x direction. Using the generalized super-fast encoding in C13 applied to the constructed graph will provide an encoding of the n modes in each fermionic system unit cell onto $n + 1$ qubits in the hardware cells. The resulting operators are local with respect to the lattice of unit cells and are of weight depending on the number of modes within each unit cell but not the total system size. This shows that as long as there are $n + 1$ qubits in each unit cell and the translationally invariant hardware graph is connected, there will exist an encoding of the desired fermionic system.

Having now established the requisite mathematical language to be able to state the problem, we present our method for solving it. Given the $2m \times J$ matrix $\hat{\tau}$ describing the fermionic operators one wishes to represent, and a function giving the cost of an individual Pauli operator, we need to populate a $2n \times J$ matrix $\hat{\sigma}$ in such a way that equation (39) is satisfied and that the greatest cost of any column (Pauli operator) is minimized. A strategy disclosed herein is a brute force branch-and-bound search algorithm, which optionally includes some optimization tricks. We proceed with a high level concrete description of the algorithm, and afterwards will discuss some of the details of its implementation.

Let $A_j$ be the jth column of a matrix A. Let $[A]_j$ be the principal minor of A consisting of all rows and columns less than or equal to $j$. Let $\mathcal{P}_n$ be an iterator over the $n$ qubit Pauli operators, expressed as column vectors in $\mathbb{F}_2(x_1, \ldots, x_D)^{2n}$. Let $cost()$ be a cost function evaluating the cost of an individual Pauli operator. The branch-and-bound method is set out generally in Algorithm 1, below.

In a little more detail, the algorithm recursively populates the matrix $\hat{\sigma}$ with Pauli operators that satisfy the (anti-) commutation conditions of all previously chosen Pauli operators and stores the best completed $\hat{\sigma}$ as it goes. It ignores any Pauli operators that are guaranteed to yield a worse cost. In the above example, the total cost of an encoding is taken to be the max cost of any of the chosen Pauli operators. If this were not the case, then the bounding condition would also need changing.

**Algorithm 1** Branch and Bound Search Algorithm for Finding Fermionic Encodings

1: $\hat{\sigma} = 0$, best cost = $\infty$, best candidate=none

2: **procedure** Branch And Bound($j$)

3: **if** $j > J$ **then**

4: best candidate = $\hat{\sigma}$

5: best cost = max cost over columns in $\hat{\sigma}$

6: return

7: **for** Pauli in $\mathcal{P}_n$ **do**

8: $\hat{\sigma}_j$ = Pauli

9: valid = $[\hat{\tau}]_j^\dagger \Lambda_F [\hat{\tau}]_j$ == $[\hat{\sigma}]_j^\dagger \Lambda_Q [\hat{\sigma}]_j$

10: bounded= $cost$(Pauli) $\leq$ best cost

11: **if** valid and bounded **then**

12: Branch And Bound($j$ + 1)

13: Branch And Bound(0)

14: return best candidate

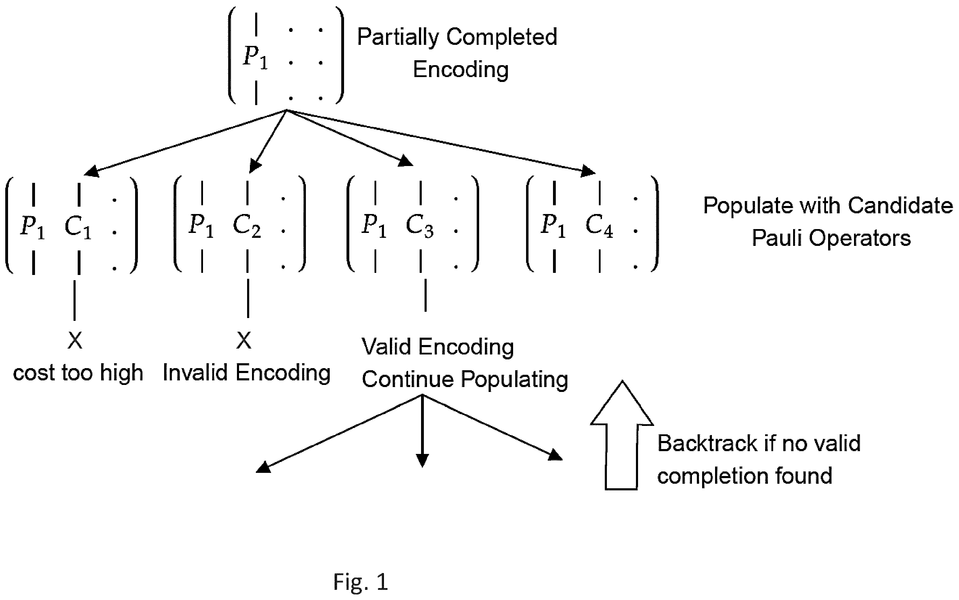

Figure 1 illustrates the basic formalism of some of the methods set out herein. Broadly, this procedure may be thought of as a method of generating an encoding for mapping fermionic operators onto qubits of a quantum information processor, the method comprising: receiving a set of fermionic operators, $F_j$, to be represented on the quantum information processor; identifying a set including every Pauli operator, $P$, implementable on the quantum information processor; assigning a first fermionic operator, $F_1$, to a first Pauli operator, $P_1$; assigning a Pauli operator to each subsequent fermionic operator, $F_s$, by:

(a) identifying one or more commutation relations and/or anticommutation relations between $F_s$ and the set of all fermionic operators $\{F_1 \ldots F_{(s-1)}\}$ which have already been assigned to Pauli operators in the set $\{P_1 \ldots P_{(s-1)}\}$;
(b) identifying for the fermionic operator $F_s$ a set of candidate Pauli operators to which $F_s$ may be assigned, wherein a candidate Pauli operator is one which has the same commutation and anticommutation relations with each Pauli operator $P_j$ as the commutation and anticommutation relations between $F_s$ the corresponding $F_j$, for all $j$ in the range $1 \leq j \leq (s-1)$; and
(c) selecting a Pauli operator, $P_s$, from the set of candidate Pauli operators and assigning $F_s$ to $P_s$; and

repeating steps (a) to (c) using further subsequent fermionic modes until each fermionic operator has been assigned to a Pauli operator, thereby to provide a complete mapping in which each fermionic operator, $F_i$, is assigned to a corresponding Pauli operator $P_i$; wherein a cost model is applied to the assignment(s) and/or the complete mapping between fermionic operators and Pauli operators to enable selection of a relatively lower cost mapping.

In general, this generates fermionic encodings tailored to the given hardware connectivity of a device, and to a given fermionic system. This method takes as input a set of fermionic operators, constituting the terms in the set of fermionic operators. Further inputs may include a graph specifying the possible two-qubit interactions of the hardware, and a maximum cost. The method finds a low cost (in some cases cost-optimized) fermionic encoding with, or otherwise determines that no encoding exists with cost less than a specified maximum. In Figure 1, this is illustrated in a flow from top to bottom of the Figure.

At the top of Figure 1, an initial fermionic operator (labelled $P_1$ in the Figure) is considered for pairing with a Pauli operator to form part of an encoding. $P_1$ may be the very first fermionic operator to be paired in this way, or it may represent the next operator to be paired in a partially competed encoding. In any case, the intermediate row shows four candidate Pauli operators ($C_1, C_2, C_3, C_4$) which are proposed for the pairing. These candidate Pauli operators are those for which the commutation and anticommutation relations with already paired Pauli operators are the same as the commutation and anticommutation relations between $P_1$ and all previously paired fermionic operators. It is important to note that the use of four candidate Pauli operators ($C_1, C_2, C_3, C_4$) is merely an example and in any given encoding, the number of candidate Pauli operators may be any positive integer (and also 0 in some cases), and will depend in any given instance on the relationship between the available operators and the already-paired operators, the number of already paired operators (or the proportion of paired to as-yet unpaired operators) and so on.

The intermediate row shows some of the possible outcomes for a pairing. The choice of which pairing is actually made is made with the cost model in mind. This usually means taking the lowest available cost for a pairing, meaning that in this case $C_1$ is rejected as a pairing because the cost is too high (i.e. exceeds some threshold set prior to initiating the method or derived empirically from e.g. the highest cost pairing already made). Note that in some cost models, this rejection is not available at an individual pairing level and instead the aggregate cost of the complete mapping is used to assess whether that mapping should be retained or abandoned.

$C_2$ is rejected for a different reason, namely that this would be an invalid pairing. Usually this means that one or more commutation or anticommutation relations with previously paired Pauli operators is not respected. The likelihood of this type of rejection may be reduced by pre-calculating the list of Pauli operators which commute and anticommute with each possible Pauli operator. When considering candidate Pauli operators, these lists can be used to filter out invalid pairings. Optionally, the cost model may be applied to these lists to rank them in order from lowest to highest cost. This allows the first available entry (i.e. highest placed in list -> lowest cost) to be selected in any given case, confident that this is the best choice in the circumstances. These lists may be dynamically updated, for example to remove Pauli operators which have already been assigned to fermionic operators. This allows for an easy look up of the best available assignment which can be made at each step to implement a pairing. The first set of Pauli operators may be used in steps (b) and (c) to identify the optimum candidate Pauli operator and/or the second set of Pauli operators may be used in steps (b) and (c) to identify the optimum candidate Pauli operator.

$C_3$ fits the required criteria with respect to commutation and anticommutation (and cost, if that is being used as a criteria), so proceeds to be added to the partial encoding. The general process described above then repeats using a new fermionic operator and searching for a legitimate pairing for that operator. Note that in some cases it may be that the next iteration of the method leads to no candidate Pauli operators being available to pair with the new fermionic operator. In such cases, as indicated at the bottom right of Figure 1, the method backtracks to a previous pairing and selects a new pairing e.g. $P_1$ pairs with $C_4$ instead and the method continues. This approach allows the method to identify dead ends and close them off without going to the computational expense of calculating an entire mapping.

The method continues until each fermionic operator has been paired with a Pauli operator, at which point a complete mapping, created in line with the cost model is provided. alternatively, the output may be that there is no legitimate encoding since all options lead to a dead end. The general feature of reliably and procedurally finding an encoding/mapping which works (i.e. which preserves the commutation and anticommutation relations of the system) is an advantage of this method over known methods. Note that, as discussed above, even enumerating the possible encodings is itself not an obvious operation for a general system, so even enumerating the encodings is a useful development of the field. Further selecting or otherwise arriving at an encoding from the set which is better than a naïve initial guess is an additional benefit of the above method. Note that even brute force methods (calculate the cost of every possible encoding) would require an enumeration of the full set, which has hitherto not been available. From this identification of a set of appropriate complete encodings, a relatively low-cost mapping is selected.

The very first assigning step in the method may be made in any suitable way. At this initial stage in the method, there are no pre-existing assignments which limit the assignment to those which comply with commutation and anticommutation relations, so the choice is much more of a free choice and can be made with a view to achieving any goal. For example, retaining certain Pauli operators free for later assignments, making the first assignment a low cost assignment (e.g. in some cases the first Pauli operator may be chosen to have the lowest available cost in the cost model), or assigning the first fermionic operator to a preferred Pauli operator.

In other cases, the assignment may be randomly made. This can be particularly useful in cases where there is a high probability of the method backtracking because a legitimate solution cannot be found in view of the assignments already made. In particular, there are two conditions in which the method may include a backtracking step: where there are no further legitimate pairing options possible, and where the cost of any remaining legitimate pairings is too high. The first of these may adapt the method in the following manner. In the event that the list of candidate Pauli operators contains no entries, the method may be halted and method steps (a) to (c) are repeated on the (s-1)th fermionic operator, ensuring that the Pauli operator assigned to the (s-1)th fermionic operator in the repeated steps (a) to (c) is different from the Pauli operator assigned to the (s-1)th fermionic operator the previous time steps (a) to (c) were enacted on the (s-1)th fermionic operator. The second case referred to above may be thought of as in the event that during step (c) the optimum Pauli operator has a cost greater than the cost of any previously discovered mapping or some predetermined threshold, the method is halted and method steps (a) to (c) are repeated on the (s-1)th fermionic operator, ensuring that the Pauli operator assigned to the (s-1)th fermionic operator in the repeated steps (a) to (c) is different from the Pauli operator assigned to the (s-1)th fermionic operator the previous time steps (a) to (c) were enacted on the (s-1)th fermionic operator.

This "backtrack and try another pairing" feature allows the method to automatically close off dead ends of pairing and to explore the space of possible mappings more efficiently. Evidently the backtracking procedure can be repeated to "unpair" more than one of the more recent pairings in the case where no legitimate complete mapping is possible even when a single layer of backtracking is applied. In other words unpairing can be done repeatedly (and at any stage in the process - i.e. at any value of s) to backtrack until a suitable pairing is found. In some cases, this may result in backtracking so far as to re-assign the first pairing. In such cases, the method starting with a random assignment may be useful because there may be cases where the method repeatedly returns to the first pairing (i.e. there is a high likelihood of needing to backtrack), so making this assignment randomly helps to explore different (random) paths through possible mappings. In any case, it is apparent that the use of a backtracking procedure can help to explore the full space efficiently and identify legitimate mappings.

In some cases, each time a fermionic operator is assigned to a Pauli operator, subsequent fermionic operators are prohibited from also being assigned to that same Pauli operator. In other cases, the same Pauli operator may have two different fermionic operators assigned to it, however this would require an encoding in which it is not possible to distinguish between these operations, which can lead to knock-on issues since if the distinguishability of the two operations was not important, it is unlikely that they would be useful elements of the mapping.

Note that the cost model defines the parameters by which cost is measured and will in general be linked to the specific quantum computation hardware as well as on other factors as set out in more detail below. The above method does not necessarily provide the "best" (i.e. lowest possible cost) mapping, because specific parameters feeding into of the calculation of the cost of an individual assignment will affect the optimal pairings under those criteria. Different criteria will therefore lead to different lowest possible costs for a given association. In addition, the manner in which the individual assignments are aggregated together to determine a cost for the mapping overall may affect the overall costing for the mapping.

For example, in some examples, an aggregate cost for a complete mapping is related to or equal to the largest cost of any individual mapping between a fermionic operator and its corresponding Pauli operator. In such a case, selecting the assignment which has the lowest available cost at each iteration of steps (a) to (c) above can lead to an aggregate cost which is also minimised, because the aggregate cost is expressly tied to the individual costs which are themselves minimised.

In other examples the complete mapping may be derived first, and the cost model is applied to the complete mapping to determine a relative cost for the complete mapping. In such cases, the method may then be repeated at least one further time to determine a relative cost of at least a second, different, complete mapping. The method in such cases further comprises selecting the lowest cost complete mapping from the at least two complete mappings derived in this manner.

Depending on the cost model being employed, and in particular the manner in which the aggregate cost is derived from the individual costs, the model may be susceptible to local minima effects in which locally selecting the lowest individual costs does not lead to the lowest overall cost. For example, the aggregate cost may be based on one or more of: an average Pauli weight of the Pauli operators; an operator weight of stabilizers associated with the encoding; a probability of an undetectable error given a hardware noise model for the quantum information processor; a total circuit depth of an algorithm for implementing logical operations on the qubits of the quantum information processor onto which the fermionic operators have been mapped. In these cases, reducing the overall cost may best be performed by identifying a set of acceptable mappings (i.e. ones which preserve the commutation and anticommutation relationships) and then selecting the lowest cost complete mapping, because the complex interrelations between the individual assignment costings can lead to a higher cost overall in these examples when the lowest possible available mapping is used for each assignment.

The cost models which can be used in judging which is the better pairing to make can vary depending on the intended outcomes (i.e. which properties are to be encourage and which to be inhibited). An example cost model considered herein is as follows. Given an encoding, every term in the set of fermionic operators is mapped to a qubit operator, which has support on a subset of qubits. In order to simulate the term, these qubits must be made to mutually interact. This requires interactions across at least all edges of a minimal Steiner tree (on the hardware graph) that contains these qubits. Thus, an effective proxy for the circuit depth of simulating this term is the number of edges in this Steiner tree, and the aggregate cost of a given complete mapping is the maximum of this metric over all terms in the set because this maximum determines a depth or complexity of the eventual quantum circuit which will need to be created to implement each term. This circuit depth is currently a core consideration for quantum computations due to current limitations on circuit noise and fidelity. Of course there are other criteria which can become important in cases where noise and fidelity are no longer (the main) limiting factors.

The above method is brute force at its most general, yet a branch-and-bound algorithm can be employed to search the space of possible encodings (as e.g. in the backtracking examples above). The size of the search space grows very rapidly with the number of fermionic terms in the set and the size of the hardware graph. A number of strategies to reduce the size of this search space and exit branches early are provided herein, which makes it possible to solve small problem sizes.

In addition, where both the system being modelled and the hardware graph each possess translational symmetry and may be described concisely by a unit cell. Translational symmetry is ubiquitous in physics and so makes sense for modelling physical systems, such as in material science and condensed matter, where the majority of systems of interest possess translational symmetry. Furthermore, as superconducting quantum computers scale up, qubits are being arranged in a tiled pattern. This trend is expected to continue, as it lends itself well to large scale manufacturing. As such, in some examples the set of fermionic operators may include translation invariant terms and the one or more commutation relations and/or anticommutation relations may be presented in a manner which respects translations relative to a central unit cell.

Some kinds of cost models are better suited to the particular algorithmic strategy being considered. Cost models that give a lower bound on the cost of a partially specified encoding allow for identification of "dead ends" and allow for an early abandonment where the aggregate (partial) encoding cost is already larger than a pre-specified upper bound on cost. This reduces the expected runtime of the algorithm. More specifically, if the algorithm is attempting to complete a partially specified encoding, and it finds that the lower bound on the cost of this partially specified encoding is higher than the cost of the best encoding it has found thus far, then it is free to abandon this partially specified encoding and move on to the next case.

In addition, since each code is built up of a sequence of Pauli operators, if the cost model can be lower bounded by looking at an individual Pauli operator then this yields further improvements in the algorithmic runtime. More specifically the Pauli operators may be considered in order of ascending cost in the algorithm at each assignment step, and during the process of populating the encoding the algorithm need only consider those Pauli operators below some threshold determined by the best cost found so far. In this way one may further accelerate the search process. Furthermore this case allows for a guarantee that the encoding found is optimal without having to exhaustively search through all possible combinations.

Cost models may satisfy up to three different criteria, with each subsequent criterion giving rise to more powerful results in the algorithm:

Criterion 1: assigns a number (the cost) to every encoding.
Criterion 2: assigns a number to every partial encoding which lower bounds the cost of any encoding that is compatible with the partial assignment
Criterion 3: assigns a number to every Pauli operator which lower bounds the cost of any encoding which contains that Pauli operator.

Here, Criterion 3 implies Criterion 2 which implies Criterion 1.

A cost model we consider here is one that satisfies all criteria. To each Pauli operator it assigns a number (cost), given by the number of edges in the smallest tree on the hardware connectivity graph that contains the qubits on which the Pauli has support. Then the total cost of an encoding is the worst costing (most "expensive") Pauli.

The above logic generalizes. Any cost function which assigns a cost to any Pauli operator may then be used as a cost model for an encoding which satisfies all three criteria by taking the cost of the encoding to be the worst cost of any Pauli operator in the encoding.

In general the cost model may be applied to one, a plurality of, or each iteration of step (c) to identify the optimum of the candidate Pauli operators to which $F_s$ should be assigned during that step. In other words, the best available assignment is made at each assignment. As noted above, in cases where the aggregate cost of the complete mapping is the maximal cost of a single assignment, this leads to the best possible (lowest cost) complete mapping and/or an early identification of a dead end in the assignment process.

Some examples of alternative cost models satisfying all three criteria include: The number of qubits on which the Pauli has support; A tree like cost model -- similar to the one discussed above -- that also accounts for the possibility that some interactions may be higher quality than others (i.e. by weighting the edges); Any Criterion 3 cost function combined with a blacklist or whitelist specifying allowed Pauli operators (weighting disallowed Pauli operators by some very high value or simply refusing to allow them to be used).

Examples of cost functions which satisfy criterion 1 but not 2 and 3 include: The average Pauli weight of the Pauli operators; The operator weight of the stabilizers associated with the encoding; The probability of an undetectable error given a hardware noise model; The total circuit depth of a specific algorithm. that is to say that the cost model may be based on at least one of: the number of qubits on which a given Pauli operator has support; a weighted sum or average of the number of qubit-qubit connections spanned by a given Pauli operator; a blacklist of forbidden Pauli operators for assignment to one or more fermionic operators; and/or a whitelist of forced assignments of Pauli operators for one or more fermionic operators.

The method above takes a collection of fermionic operators and may further receive information relating to a hardware layout and finds the best encoding. For example, the cost model may be based on properties of the quantum information processor, for example the physical arrangement (and interconnections between, including e.g. weighting the interconnections based on a notion of "quality" of connection) qubits forming part of the quantum information processor. In some cases this may be used to evaluate potential hardware designs best suited to simulate a set of fermionic operators, for example by fixing the set of operators, then iterate over hardware designs and run the procedure to find the best code for that particular layout. This process can be repeated until a layout is found that gives the best (lowest cost) code implementation from the family of layouts under consideration. In other words, the disclosure extends to a use of the method in identifying improved hardware layouts for an encoding which maps the fermionic operators onto qubits of a quantum information processor, the use comprising: selecting a hardware layout from a set of hardware layouts; executing the method of any one of the preceding claims to identify the optimum mapping for that hardware layout; selecting a new hardware layout from the set of hardware layouts; and selecting the hardware layout and associated optimum encoding which results in the lowest cost according to the cost model.

In a similar fashion this can be used to choose among a set of candidate fermionic systems to simulate on a given piece of hardware. This includes the steps of fixing the hardware layout, then iterating over fermionic systems each described by a set of fermionic interactions. the method is then run to find the best code for that particular set of interactions. These steps are repeated until a system is found that gives the best code for the available layout.

Here the term "hardware layout" refers to the available qubit interactions on the hardware. Any circuit operation will need to be decomposed into these interactions, and so this ultimately determines the cost of performing the operation. If for example the layout is a chain, where each qubit only is able to interact with its neighbouring qubit, then any interaction involving two qubits on either end of the chain would necessarily need to be mediated by all of the interactions on the chain, and ultimately be quite costly. This is why it is desirable to tailor the description of the fermionic operations to the layout of the hardware since this kind of tailoring can have a dramatic effect on the efficiency. Some of the cost models set out herein are directed at capturing this added cost of getting different qubits to talk to one another. This is analogous to contiguous memory concerns in optimizing algorithms on classical computers, wherein the execution of certain computations are optimized to operate on parts of memory that are stored physically close to one another on the actual hard drive, to minimize the length of time it takes for the read-head to move to the relevant location. Even though classical computers have become more powerful and these concerns have become more niche they remain highly relevant for programmers interested in getting the most performance out.

In other examples the cost model is based on a number of hardware-native operations required to implement a unitary rotation generated by a given Pauli operator. In other words, the direct end product of the method is assessed based on the specific interactions and processes which are to be implemented, and the cost model is constructed to reflect those processes and to provide a mapping which lowers the burden of implementing them.

For example, algorithms for implementing the logical operations may be understood in line with the following. In any instance where a fermionic encoding is used, it will be intended that some kind of logical operation is performed on a representation of a fermionic system on a quantum computer e.g., as a subroutine (or full process) of some quantum algorithm. In cases where the form of such an algorithm is known, but it has not yet been resolved which encoding will be used, different encodings will affect the total circuit depth of the particular quantum algorithm because they effect the representation of the operations on the device. As an example, the operations ($U$) which are to be performed are unitary operators generated by the elements of the fermionic algebra, i.e., for a fermionic operator **$F$**:

$$U = \exp(it\boldsymbol{F})$$

When translated to qubit operations, this looks like:

$$U = \exp(it\boldsymbol{P})$$

where $\boldsymbol{P}$ is an appropriate Pauli operator. This unitary operation is then decomposed into a sequence of hardware-native gates, the complexity of which typically depends on the form of $\boldsymbol{P}$ (how many qubits it acts on etc.) and on the arrangement of the hardware (i.e. the available interactions between the qubits on which the gate finds support and between those qubits and other qubits). From this, it can be seen that the complexity of mapping a given operator to the hardware can be used to identify higher or lower costs, and thereby to affect the association of fermionic operators with Pauli operators on an individual or aggregate level.

**Optional Developments**

As the number of qubits $n$ grows, the number of Pauli operators grows exponentially, and as the number of elements $J$ grows, the depth of the search tree grows, exponentially compounding the size of the search space. By keeping the size of J and n small by considering translationally invariant unit cells, and by making judicious optimizations of the algorithm, it is possible to search for encodings in practically useful scenarios.

A core point of optimization is in in how the iterator over Pauli operators $\mathcal{P}_n$ is ordered and pruned. Ideally we would like for $\mathcal{P}_n$ to be ordered by cost. In this case the algorithm can terminate iterating over $\mathcal{P}_n$ when the cost of a Pauli exceeds the best cost, and the best solution is the first complete solution found. In the small instances considered by the inventors it has been found that it is possible to cache a pre-ordered list of Pauli operators, which dramatically improves the runtime of the algorithm. However as the number of qubits grows this begins to become infeasible. It is possible to dynamically generate Pauli operators ordered by weight (number of qubits on which the Pauli operator has support), and for the cost function we consider the Pauli weight lower-bounds the cost. Thus in the case where it is not possible to pre-order the Pauli operators by cost it is at least possible to terminate iterating over $\mathcal{P}_n$ when the Pauli weight exceeds the best cost.

If the number of Pauli operators is small enough to pre-order by cost, then it is also possible to precompute look-up tables for all operators which anti-commute and all operators which commute with a given Pauli operator. With these look-up tables one may prune $\mathcal{P}_n$ to only contain Pauli operators which satisfy the requisite (anti-)commutation relations - specified by the prior choices of Pauli operators - by taking intersections of these sets. In conjunction with an ordering of the cost this means the search algorithm need only check if the intersections are empty, or otherwise take the first element in the list. Given that the (anti-)commutation relations are highly structured, we conjecture that look-up tables may not need to be precomputed, and instead it may be possible to dynamically generate a pruned $\mathcal{P}_n$ containing only valid Pauli operators for the given circumstance.

In the case of translationally invariant systems, $\mathcal{P}_n$ may also be prunes so that it only includes Pauli operators with support on the central unit cell (i.e. the column contains at least one entry with a 1 in it). Furthermore we can bound the range of the support of the Pauli operators to, for example, only extend to nearest or next nearest neighbouring cells.

Further minor pruning of $\mathcal{P}_n$ includes the obvious step of setting a max Pauli weight and the more complicated step of avoiding iterating over solutions that are equivalent up to single qubit Clifford operations.

**Cost Function**

It is beneficial to tailor the encoding to a particular use case. This is generally enforced by the cost function. The example algorithm described above makes use of a particular feature, which is that the total cost is given by the max cost over the chosen Pauli operators. Further optimizations make use of the fact that the cost function is lower bounded by the weight of the Pauli operators, but this is not essential. Otherwise we are free to set the cost function as we wish.

For the purposes of demonstration consider a concrete cost function motivated by the following consideration. Although Pauli weight of operators is natural, and a convenient choice of cost for the purposes of search optimization, it is generally divorced from the details of any hardware. Generally it is beneficial to lower the Pauli weight of our logical fermionic operators in order to more efficiently execute unitary operations generated by those operators. This is central to dynamical simulations using product formulas for time-evolution as well as in variational quantum algorithms for ground state problems with, for example, the Hamiltonian variational ansatz.

In order to perform a unitary generated by a multi-qubit Pauli operator, the standard circuit is to apply single qubit Clifford gates that, upon conjugation, map the Pauli operator to a product of Zs with the same support. Then a series of CNOT gates is applied to collect parities onto a single qubit to which a single qubit rotation is then applied. The parity collection and single-qubit Clifford gates are then undone. The depth of the described circuit block is determined by the number of two-qubit gates which must be performed.

The qubits in some quantum computing platforms, for example superconducting circuits, are subject to connectivity constraints. There is a fixed graph with qubits at vertices and edges connecting qubits that can be jointly acted upon by two-qubit gates.

Suppose an operator acted on two qubits that were not adjacent on the graph. The circuit that performs a rotation generated by such an operator must act on all the qubits in a path terminating on the associated vertices. As such, the cost we associate to the operator is not the weight, but rather the number of edges in the shortest path connecting the two vertices. We would like to generalize this notion to higher weight Pauli operators. Specifically, for a Pauli operator acting on a collection of qubits associated to vertices of a graph, we define the cost of the operator to be the number of edges in the minimum Steiner tree for the marked vertices on the hardware graph.

Note that this cost is a more restrictive notion than weight. In particular, if an operator in the Pauli group on $n$ qubits, $p \in \mathcal{P}_n$, has a weight of weight($p$), then the cost of the operator, cost($p$) $\geq$ weight($p$) - 1. Therefore:

$$\{p \in \mathcal{P}_n | \mathrm{cost}(p) \leq w - 1\} \subseteq \{p \in \mathcal{P}_n | \mathrm{weight}(p) \leq w\} \qquad (43)$$

In principle further refinements on the cost function could be included to reflect important details in the hardware, for example the edges of the hardware connectivity graph could be weighted with the quality of the 2-qubit interaction on the device.

## Optimality of the Solution

The method described here has the added advantage that any encoding found is often certified to be optimal with respect to the chosen cost by the nature of the brute force search - provided the algorithm is allowed to terminate. However further points are worth mentioning regarding optimality when translationally invariant systems are considered.

Firstly, the method takes as input a unit cell for both the fermionic lattice system as well as the hardware layout. Importantly, the choice of unit cell to provide as input is generically not unique. For example, on a square lattice one could choose a single-mode unit cell with x- and y-direction translations along the rows and columns of the lattice. However, one could just as well have chosen a two-mode unit cell or indeed any number of modes in each unit cell. Furthermore, once a unit cell is chosen, one also has to specify how the unit cell tiles the plane. In particular, the choice of lattice translations is not in general unique. For example suppose we fix a two-qubit unit cell for the hardware lattice with the qubits in adjacent columns and the same row. We can choose the unit x-translation to map each column to the column two to the right and the unit y-translation to map each row to the row above. We could also choose the unit x-translation to be one spacing to the right and one down and the unit y-translation to be one spacing to the right and one up.

Both of these types of choices can have an effect on the outcome of an encoding search. Thus there may be encodings associated with a different choice of unit cell that have a better cost than the one found. It may even be the case that for one choice of unit cell a solution does not exist for the specified search domain whereas for another choice of unit cell on the same graph a solution does exist.

Additionally, in principle one may be able to find better encodings if one loosens the restriction on the neighbourhood within which Pauli operators are allowed to act, or if one loosens the constraint that Pauli operators need act on the central unit cell.

## Results

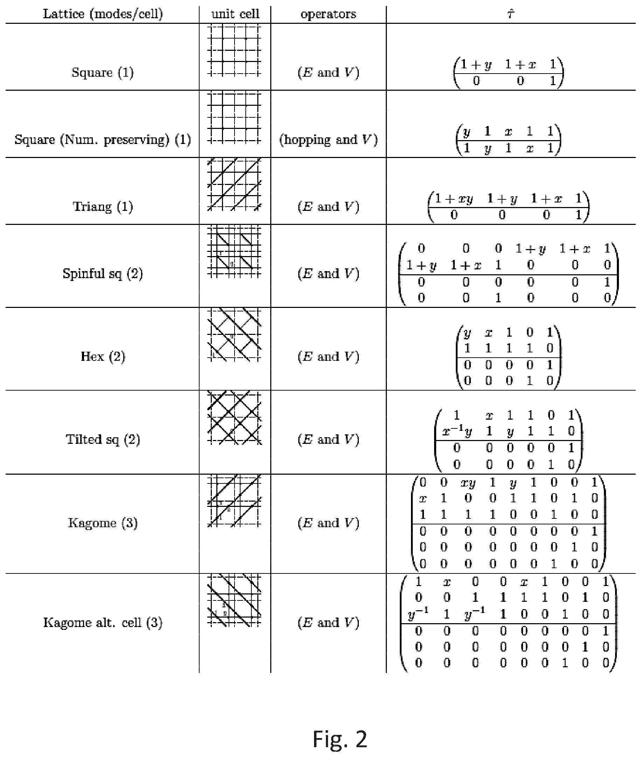

The method has been tested to find encodings for a number of fermionic systems on a variety of device layouts. Classes of fermionic algebras are considered, generated by privileged edge ($E_{ij}$) and vertex ($V_i$) operators associated with the edges and vertices of various 2D translationally invariant lattices - namely the square, hexagonal, triangular and Kagome lattice with unit cells chosen to include up to 3 modes. Encoding of the number-preserving hopping operators $E_{ij}V_j$ and $V_jE_{ij}$ are also considered instead of the edge operators. Searching over these increases the size of the search space. The fermionic systems which have been considered are presented in Figure 2 which shows the choices of unit cells and the privileged operators sought in each case.

The device layouts considered are the square, hexagonal, and triangular lattices, as well as layouts currently used in superconducting devices, namely the heavy hexagon layout employed by IBM and the 4-8-4-8 regular tiling employed by Rigetti. We also considered a small number of instances of layouts with non-planar connectivity. The largest unit cell in terms of number of qubits was 5.

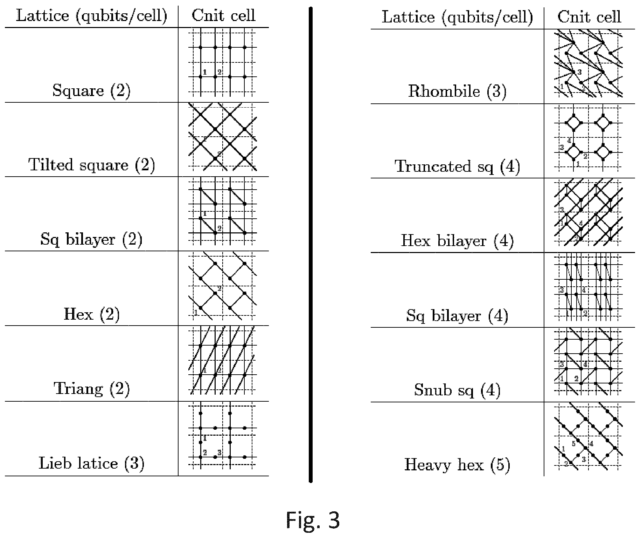

The encoding generator was used to find encodings of each fermionic system listed in Figure 2 embedded on each hardware graph listed in Figure 3. Combinations where the number of qubits in the unit cell was not greater than the number of modes in a unit cell were not attempted. A maximum allowed weight was specified in each search of 3 and a maximum allowed cost of 2. In some cases the search returned a previously known encoding, thereby showing that such an encoding is optimal in the restricted sense given above. In other case the returned encodings is new, not fitting into any previously known encoding construction, thereby demonstrating the advancements in the field provided by the methods and apparatuses disclosed herein.

**Newly identified encodings**

A number of the encodings generated were previously unknown and some are noteworthy for a variety of reasons.

The algorithm returned an encoding of a Kagome lattice with 3 fermionic modes per unit cell with edge and vertex operators onto the truncated square lattice for which we specified a 4 qubit unit cell. At 4/3 this is the local encoding with the lowest qubit/mode ratio known to the inventors. Other general constructions to encode a fermionic model such as the Bravyi-Kitaev superfast or the generalized superfast encoding would both require 6 qubits and the operator weight and cost would be no better than what was found by our algorithm.

**Optimality for previously known encodings**

The encoding generation algorithm was applied to a number of fermion lattice systems and hardware lattices. We then visually inspected some of the encodings to see if they were instances of previously proposed constructions. It should be noted that while some previous encoding constructions are rigid, with exactly specified operator forms, others have some flexibility in their construction. Given this flexibility it is sometimes not immediately obvious when an encoding is a member of an existing family. Despite this, the method was able to identify a number of instances of previously proposed encoding constructions.

First, for the square lattice with one mode per unit cell and specified operators consisting of horizontal and vertical operators and single vertex operator, the following graphs containing 2 qubits per unit cell returned an instance of a GSE encoding: square (2), square bilayer (2), tilted square (2), hexagonal (2), and triangular (2). Our algorithm also constructed encodings on qubit lattices with 4 modes per unit cell for this system that did not use all the available qubits. In particular for this system a GSE-style encoding was generated for the 4 qubit per cell hexagonal bilayer (4) and square bilayer (4). In these two instances, two of the four qubits per cell were unused.

Recall that this implies that of the class of encodings with encoded operators invariant under translation under one unit cell, the GSE provides an optimal encoding given the cost metric discussed previously.

Other previously known mappings that were returned include a mapping of the tilted square lattice onto the Lieb lattice (also known as the decorated square). This mapping was equivalent up to single-qubit Cliffords to the Derby-Klassen Compact encoding.

An additional interesting encoding generated by the algorithm was of the triangular (1) onto the tilted square (2). This mapping lies outside the family of those generated by naively applying the GSE to the triangular lattice, as this would require a 3 qubits per fermionic mode. Upon closer inspection, one finds that the diagonal edge operators in the xy-direction are actually a product of edge operators in the y-direction and the x-direction however translated by one unit cell.

**Error-detecting codes**

An $[[n, k, d]]$ stabilizer code is characterized by the number of physical qubits n, the number of logical qubits encoded k, and the code distance d. The number of physical qubits minus the number of logical qubits is equal to the number of independent generators for the stabilizer group of the code, $|S| = 2^{n-k}$. The code distance is the minimum number of qubits that supports an operator which commutes with all elements of the stabilizer group and which is not itself in the stabilizer group.

As mentioned above, local fermionic encodings in greater than one dimension are also a type of stabilizer code. They generically use more physical qubits than they encode fermionic modes and simulation takes place within a subspace defined as the common +1 eigenspace of an abelian group of Pauli operators. Typically, and as is the case here, a primary goal in designing a fermionic encodings is to identify a mapping which allows for the shortest circuit depth possible. This requires operators which are of low weight, ideally constant in the system size. This is fundamentally opposed to the features of codes sought out in quantum error correction where a high code distance is desirable to ensure logical qubits are well protected from errors.

Nevertheless, some encodings which are optimal in the sense described in the previous sections, happen to have non-trivial code distances. An encoding with a code distance of $d$ (by definition) has the property that any Pauli operator of weight up to $d$ - 1 anticommutes with at least one stabilizer generator. It is not enough to check that all of the encoded edge operators, vertex operators, and their products have weight at least $d$, as it is possible that some Pauli operators commute with all the stabilizer group elements but do not correspond to even parity fermion operators.

The generators of the stabilizer group can be identified by computing generators of the kernel of $\tau$, either by

Gaussian elimination in the case of a binary matrix, or computing syzygies in the case of a polynomial matrix (see above), and then applying the map $\sigma$ to find the associated Pauli operators. In the case where the kernel of $\sigma$ and the kernel of $\tau$ overlap, this generating set may be overcomplete, and include the identity.

Once a collection of stabilizer generators, $\{s_0, s_1, ...\}$, have been found that, along with their translations, generate the entire stabilizer group, we can collect the operators into a new object,

$$S = (s_0 \; s_1 \; ...)_q \qquad\qquad (44)$$

As logical operators commute with all elements of the stabilizer group, they will return 0 for their commutation value with each of $\{s_0, s_1, ...\}$. That is, they are elements of ker $S^\dagger \Lambda_Q$.

It suffices to check that each single-qubit operator acting on the reference cell has nonzero commutation relations with at least one of $\{s_0, s_1, ...\}$. If it can be verified that for each of the 3m such Pauli operators, $p \notin$ ker $S^\dagger \Lambda_Q$, then the encoding provides a distance 2 stabilizer code. Further, $S^\dagger \Lambda_Q p$ is a column vector describing the syndrome pattern for the single-qubit error. The $i$th entry of the vector gives the translations of $s_i$ which anticommute with the operator given by $p$.

It is possible that the optimal encoding for a given hardware graph consists of operators that do not act on all of the qubits in each cell. In this case, single-qubit operators on the unused qubits will commute with each element of the stabilizer group but will have a trivial action on the logical information. If all single qubit errors on all the qubits used by the encoding are detected, then the encoding consists of an error detecting code tensored with idle qubits. Despite the fact that the condition $p \notin$ ker $S^\dagger \Lambda$, V single-qubit $p$ is not strictly obeyed, the encoding can still be regarded as an error detecting code. It is also straightforward to check whether there are unused qubits.

The algorithm presented here allows for a simple filtering of encodings for error detecting codes. We will only focus on the simplest case of distance 2 codes. Firstly, by definition, in a distance 2 code, all logical operators are weight 2 or higher. Therefore, if the search is targeting error detecting codes, the Pauli operators we consider will be limited as encoded fermion operators to have minimum weight 2. When an encoding is found that satisfies the requisite (anti) commutation conditions, a check is performed that it is an error detecting code given the definition above. If it is, it is accepted and if not, we discard it and continue the search.

For the purposes of this work we have opted to eschew writing the algorithm for computing syzygies and instead compute the stabilizers of the encoding populated out to the 8 cells surrounding the unit cell. Although this does not in general guarantee all elements of the stabilizer group are computed, for the simple instances we consider we feel confident that this method suffices. Furthermore, in any case where we claim that error detection is achieved, any further stabilizers found would only strengthen this result.

Presented herein is a method for searching over an extremely broad family of fermionic encodings in order to find encodings tailored both to particular fermionic algebras and to particular hardware. The class of fermionic encodings we search over is all second quantized encodings that constitute algebra homomorphisms and that map from Majorana monomials to Pauli operators. An essential element of this method is a clear formulation of the search criteria in terms of binary matrix equations and a rigorous argument for why solutions to such equations always yield valid encodings, and how all encodings within this class fall within this framework. To this search criteria we have applied fairly well known brute force search methods to optimize for our particular cost model. We expect these search methods are likely ripe for further optimizations. The cost model we consider is meant merely to demonstrate the power of this method, and also to satisfy our curiosity about how compactly we can represent operators on various systems. The search method may also be applied to many alternative cost models not explored here. However, it is important to emphasize that in order to leverage many of the optimizations we have employed to improve runtime, one needs to be careful about how the cost of an individual Pauli assignment to a particular privileged fermionic operator relates to the total cost of the encoding.

It has been shown how the methods herein can be applied to translationally invariant systems with only minor modifications. This has the significant benefit of reducing the algorithmic cost of finding encodings for tiled fermionic and qubit systems, which is likely to be the most common use case. It should be emphasized that the encodings found using these methods need not require that the Hamiltonian that is simulated be translationally invariant, just that the privileged elements of the algebra used to generate the Hamiltonian be translationally invariant. For example coefficients of the Hamiltonian may vary however one wishes.

One feature of the method which we would like to strongly emphasize is its ability to leverage symmetries in the target algebra. As we have discussed, it may be the case that a particular system has symmetries which implies the algebra needed to represent the Hamiltonian is smaller than the whole fermionic algebra or the even fermionic algebra. The methods are able to automatically incorporate this fact, unlike many existing strategies which will often search for new encodings by applying variations on an established encoding that does not take advantage of these symmetries.

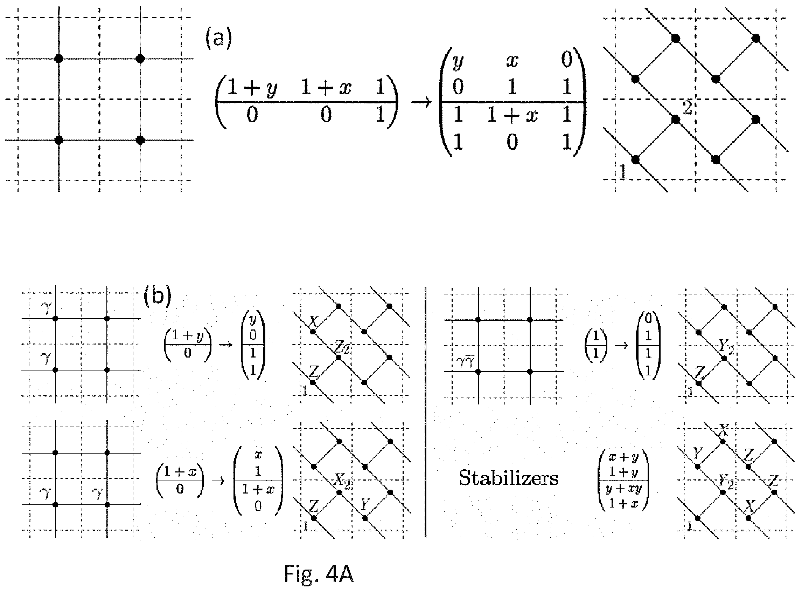

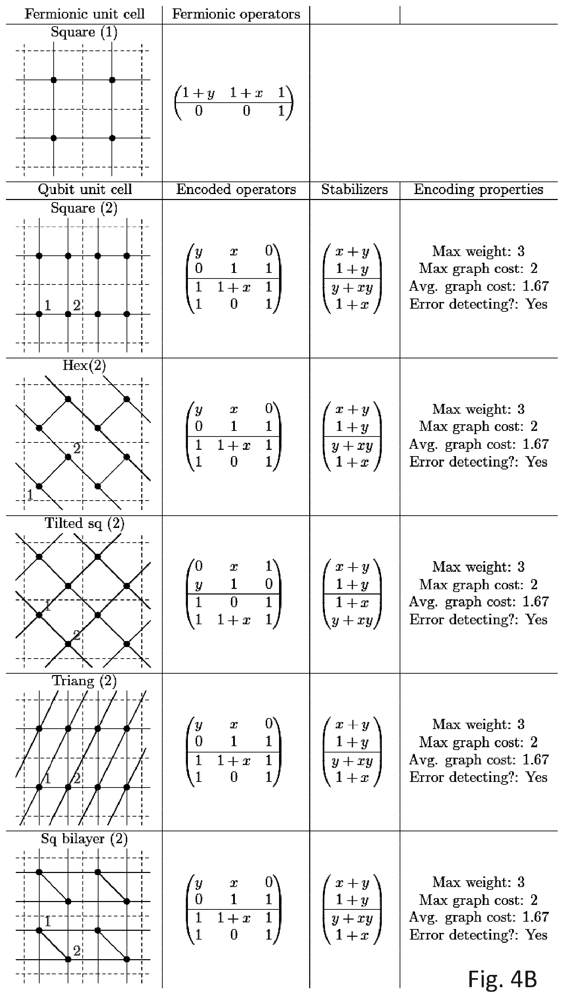

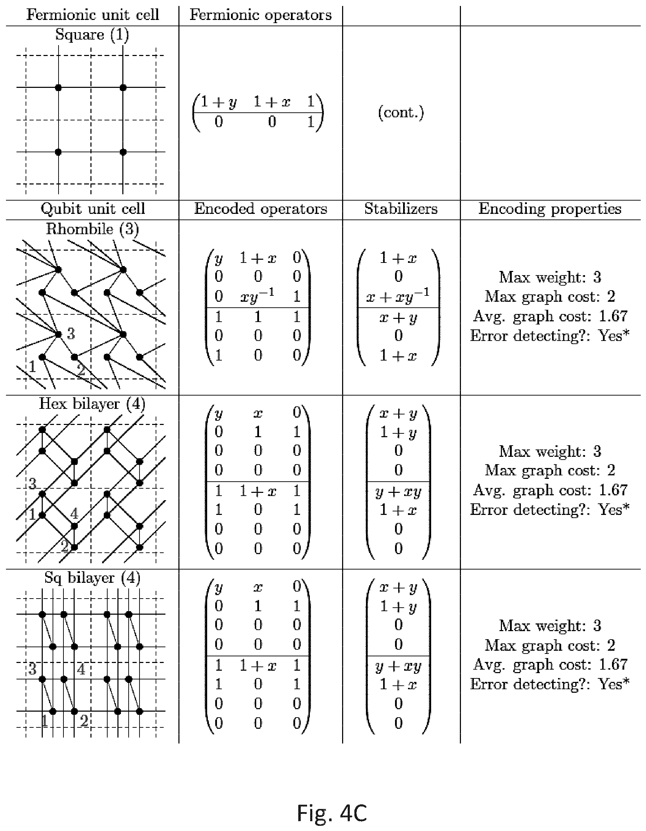

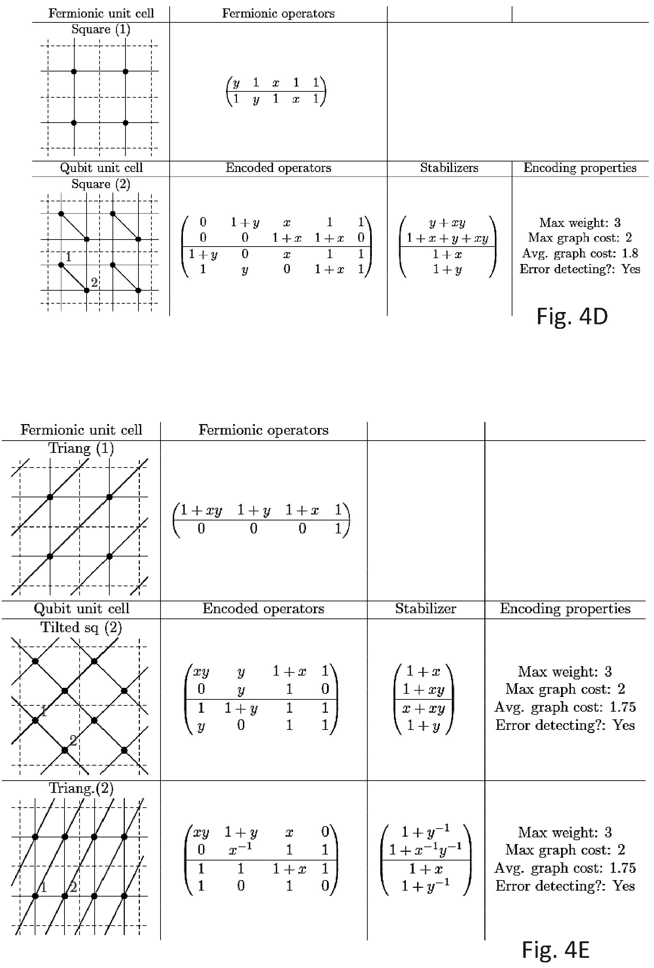

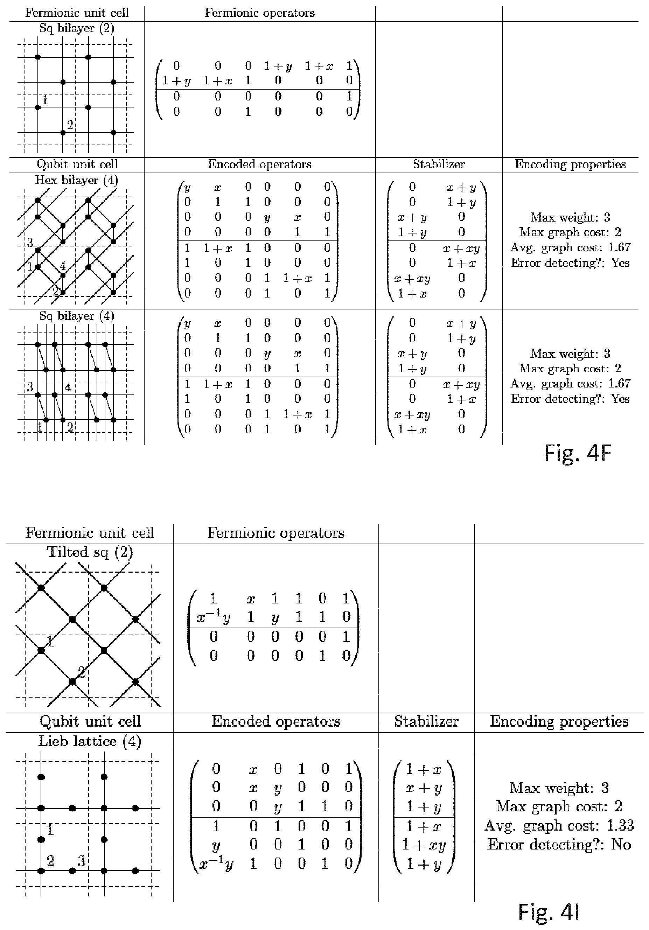

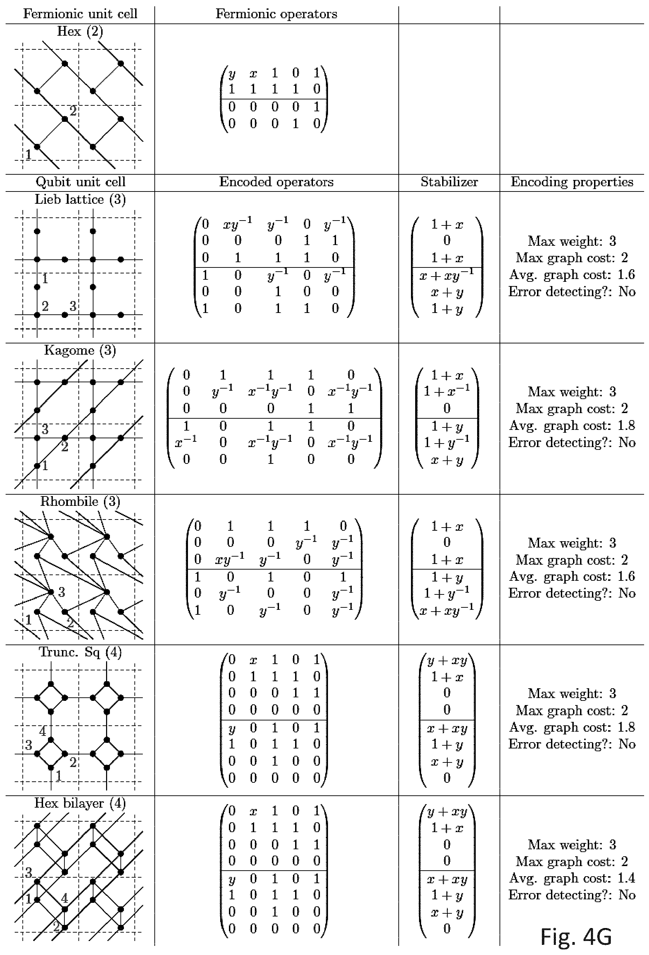

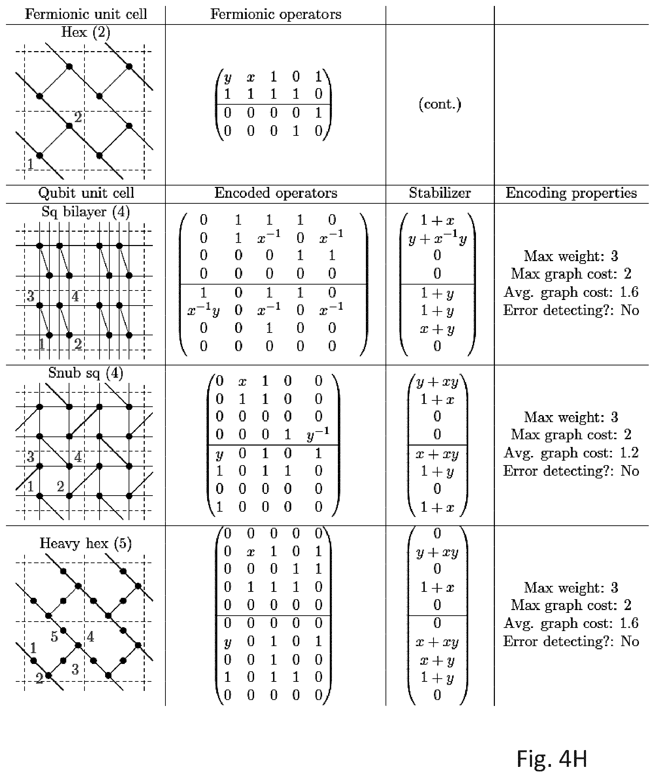

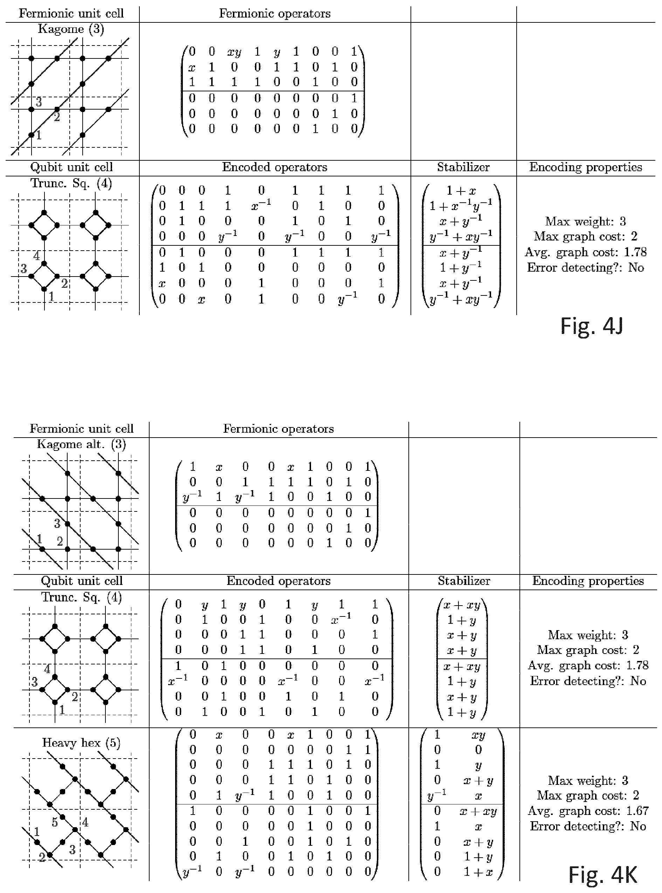

The method has been applied to the standard fermionic algebra of edge and vertex operators on various planar lattices as well as a square bilayer lattice, and we have also applied the method to the Fermi-Hubbard algebra on the square lattice. For these algebras we have found optimal encodings on planar and non-planar hardware layouts, inspired by current and prospective designs for superconducting chips. These are given in Figures 4A to 4K (referred to generally and/or collectively as Figure 4). The method has been able identify previously unknown encodings, as well as rediscover known encodings, certifying their optimality.

Before discussing these in detail, it is worth explaining briefly how to interpret Figures 4A to 4K. For a specified fermionic unit cell with $n_f$ modes and a collection of $|\mathcal{F}|$ operators specified as a $2n_f \times |\mathcal{F}|$ array of polynomials as well as qubit layout grid with $n_q$ qubits per unit cell, the output is a $2n_q \times |\mathcal{F}|$ array of polynomials. This process is shown schematically in the example of Figure 4A(a).

To construct the encoded Pauli operator duals of the fermionic operators, the columns of the output polynomial array a matched up with the input polynomial array. Unit cells with more than one mode or qubit have the vertices numbered. Recall that in the fermionic operators view, a 1 in the first entry corresponds to a Majorana $\gamma$ on the first mode in a reference unit cell, whereas an $x$ in the first entry gives a $\gamma$ in the first mode of the unit cell shifted by one in the $x$ direction. Equivalently, a $y$ in the first entry gives a $\gamma$ in the first mode of the unit cell shifted by one in the $y$ direction. Nonzero entries in the $n_f + 1$ through $2n_f$ entries of a column give the positions of the Majorana $\overline{\gamma}$ terms.

On the qubit side, the first $n_q$ entries in a column vector describe the positions of the $X$ operators, whereas the $n_q + 1$ through $2n_q$ entries give the positions of the $Z$ operators.

As an example, we illustrate the encoding of a fermionic system on a square lattice with specified operators $\gamma_0\gamma_y$, $\gamma_0\gamma_x$, and $\gamma_0\gamma_0$ into the qubit operators $Z_{0,1}Z_{0,2}X_{y,1}$, $Z_{0,1}X_{0,2}Y_{x,1}$, and $Z_{0,1}Y_{0,2}$ respectively. We also show the stabilizer generators for these cases. This process is shown in Figure 4A(b).

In the Figures 4B to 4K, the term "Error detecting?: Yes*" indicates that there are unused qubits in each unit cell but the encodings constitute an error detecting code on the qubits which are used.

Here it can be seen that both the system being modelled and the hardware graph each possess translational symmetry and may be described concisely by a unit cell. Figure 4 illustrates the fermionic and encoded operator forms for various hardware topologies (i.e. qubit unit cells). In addition, the form of the stabilisers is presented along with the properties of the encoding. Translational symmetry is ubiquitous in physics and so makes sense for modelling physical systems, such as in material science and condensed matter, where the majority of systems of interest possess translational symmetry. Furthermore, the hardware layouts shown reflect developments in superconducting quantum computers, which as they scale up are expected to continue to be arranged in regular arrays of various connectivities. Note that the cost model may be further nuanced by accounting for the possibility that some interactions may be higher quality than others (i.e. by weighting the edges), for example if the connections are subject to higher noise, higher crosstalk, occur over a longer distance or by a different interaction then the cost model may reflect this by weighing against pairing operators which have support across less favourable qubits/interconnections. In some cases, certain operators, pairings, etc. may be forbidden entirely by use of a blacklist. In these ways the method may take a collection of fermionic operators and may further receive information relating to a hardware layout and finds the best encoding for that hardware layout.

Here the term "hardware layout" refers to the available qubit interactions on the hardware. Any circuit operation will need to be decomposed into these interactions, and so this ultimately determines the cost of performing the operation. If for example the layout is a chain, where each qubit only is able to interact with its neighbouring qubit, then any interaction involving two qubits on either end of the chain would necessarily need to be mediated by all of the interactions on the chain, and ultimately be quite costly.

In some cases this may be used to evaluate potential hardware layouts best suited to simulate a set of fermionic operators, for example by fixing the set of operators, then iterate over hardware layouts and run the procedure to find the best code for that particular layout. This process can be repeated until a layout is found that gives the best (lowest cost) code implementation from the family of layouts under consideration. In other words, the disclosure extends to a use of the method in identifying improved hardware layouts for an encoding which maps the fermionic operators onto qubits of a quantum information processor, the use comprising: selecting a hardware layout from a set of hardware layouts; executing the method of any one of the preceding claims to identify the optimum mapping for that hardware layout; selecting a new hardware layout from the set of hardware layouts; and selecting the hardware layout and associated optimum encoding which results in the lowest cost according to the cost model.

In a similar fashion this can be used to choose among a set of candidate fermionic systems to simulate on a given piece of hardware. This includes the steps of fixing the hardware layout, then iterating over fermionic systems each described by a set of fermionic interactions. The method is then run to find the best code for that particular set of interactions. These steps are repeated until a system is found that gives the best code for the available layout.

The encodings considered include stabilizer codes, which is reflected in the tables in Figure 4, in which these stabilisers are shown expressly for different configurations. The ability of these stabilisers to detect errors has been certified in the error detecting capabilities of many of the encodings found. It is foreseen that the methods described here could be generalized to further tailor fermionic encodings to the particular noise profile of the hardware.

Stabilisers are mathematical objects formed from the product of two or more fermionic operators. Consider an example in which a particular set of fermionic operators leads to the identity $F_1F_4F_5F_9 = 1$, then the code space to represent the Pauli operators on the qubits is chosen so that the corresponding Pauli operator product, $P_1P_4P_5P_9$, also measures as 1 (note that since these are complex mathematical objects, ordering matters, so the above fermionic operator identity does not necessarily say anything about the Pauli operator product in a different order, such as $P_5P_1P_4P_9$). Note that there may be different products of fermionic operators which yield the identity in fermion space yet which map to the same Pauli stabiliser, or even map to the identity in the qubit picture. For example if $F_1F_2F_3 = 1$ and is mapped to the identity matrix in the Pauli picture, but if it is also the case that $F_4F_5F_6 = 1$ and is mapped to some stabilizer S, then $F_1F_2F_3F_4F_5F_6 = 1$ and can also be mapped to S. The stabilisers in the specific code space lead to the mapping acting as though the identity products are satisfied, since it is not in possible to directly satisfy the identity relations and the commutation/anticommutation relations simultaneously using an encoding or mapping alone.

The fermionic encoding is a stabiliser code, and it functions when all operations are performed within a subspace of the full Hilbert space of the multi-qubit system. This subspace is the "code space" discussed above. The projectors into that subspace are associated with Pauli operators, which are called "stabilisers". When these Pauli operators are measured they signal whether or not you are in the code space. Therefore, if an error occurs in the computation then it can be identified by measuring the stabilizers and seeing if there is any indication that you are no longer in the desired code space. In the case of fermionic encodings, fixing a mapping from fermionic operators to Pauli operators implicitly defines the stabilizers. For a given choice of mapping, it can therefore be computed what the form of such stabilizers is, and a check can be performed as to the types of errors they can detect. The mappings may be selected (e.g. via an appropriate choice of cost model) to be able to detect the maximum number of such errors.

Thus operationally the procedure one might use to cost an encoding based on its error detecting properties is to first specify the complete mapping, then compute what the stabilisers must be, then compute what errors these stabilisers detect, then assign a quality value to the encoding based on how important each of these errors are to detect. By iterating over many such complete mappings, the best one may be selected as the one which is able to detect the largest number of the most important (e.g. most fatal, most likely to occur, etc.) errors.

The mapping provided by the method may therefore include, for each pair of fermionic operators having a product relation equal to the identity matrix, a stabiliser formed from the product of the corresponding Pauli operators to which the pair of fermionic operators have been assigned; wherein a code space of the qubits is chosen so that a measurement of any stabiliser yields a value of 1. In such cases, the cost model may further be based at least in part on a number of computation or encoding errors detectable via a measurement of the stabilisers formed in a given encoding.

Beyond merely finding codes for particular algebras and hardware layouts, our method could also be used as a subroutine in the design of new hardware layouts tailored to a particular simulation task, or for searching for simulation tasks particularly well suited to a given hardware layout. Both of these use cases seem particularly relevant in the search for practical applications of quantum computers.

All existing encodings that employ additional qubits to reduce operator weights do so by way of projecting into a code space via the stabilizer formalism. The encodings produced by the presently disclosed method use the same strategy. An extra benefit of the presently disclosed strategy is that some encodings may also detect or even correct errors, due to their high code distance. We show how the methods set out herein can be made to restrict its search to fermionic encodings with a minimum code distance, and thus find low-cost encodings with good error mitigating features.

The method may also be used to find optimal encodings for spinful and spinless Fermi-Hubbard models on various geometries, mapped to a number of different translationally invariant hardware graphs, including many existing superconducting architectures. In some cases these optimal encodings are new, and in other cases they were already known. Importantly, even in the case where an encoding was known, the method certifies that the encoding chosen is the best choice for the given pairing (under the cost models discussed herein). The various results derived so far are shown in Figure 4 and illustrate the power and reach of the present invention.

As an example of the type of set of fermionic modes to which the method may be applied, the set of fermionic operators may collectively form a Hamiltonian. This can be useful in modelling real-world physical systems on a quantum information processor, for example.

The method may further comprise encoding the complete mapping onto the quantum information processor. This further step places the quantum information processor into a state by which the improved or optimal encoding is made use of and is ready for operations to be enacted on the encoded state. Accordingly, the method may further comprise performing a calculation and/or a time evolution on the encoded complete mapping.

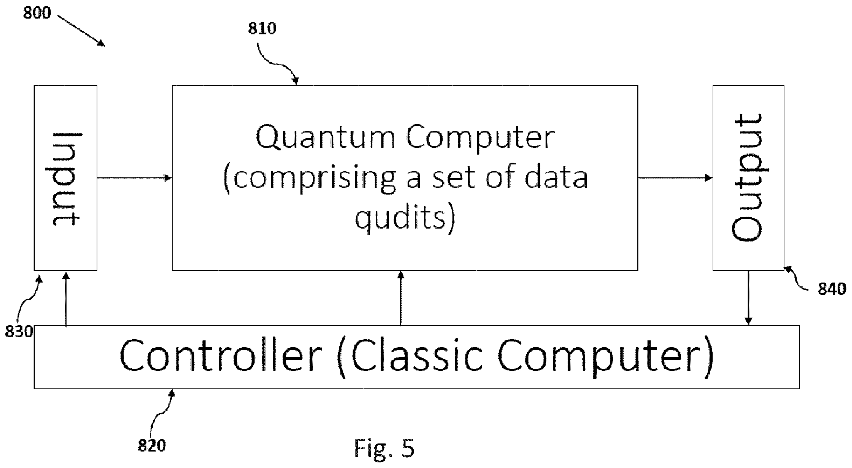

Figure 5 illustrates an example schematic of a quantum computer system 800 for implementing the methods described herein. The quantum computer system 800 comprises a controller 810 for example a "classical" computer; an input 830; a quantum computer 810 comprising a set of qudits such as the set of qubits described above, on which the fermionic operators are encoded (via Pauli operators); and an output 840. Note that while "qubits" has been used throughout this document to refer to the fundamental quantum information units (implying that these are based on two-level quantum systems), it is of course possible to use qudits (generalised d-level quantum systems) more generally to encode the operators and perform the calculations, as shown in Figure 5, for example.

The controller 820 can be used to control the input 830 for inputting parameters into the quantum computer 810, for example the input 830 may be used to control the gate connections and interactions between the qubits (or qudits) to enact the encoding and other logical operations described above. The output 840 outputs information measured from the data qudits of the quantum computer 810 and transmits the information to the controller 820 where it can be displayed to a user. The output 840 and input 830 may be the same, for example the ancilla qudit described above could be implemented as both the input and output in quantum computer system 800. Quantum computer system 800 is one example of a quantum computer system that could be used to perform the methods described herein. The quantum computer 810 may comprise photonic qubits; ion trap qubits or superconducting qubits. Other quantum computing qubits may also be used, the methods described herein are not restricted to any one particular quantum technology.

Also disclosed herein is a non-transient computer readable medium comprising instructions which cause a computer to enact any or all of the method steps described above. For example, the controller 820 in Figure 5 may be provided with a copy of such instructions in order to allow control of the operations performed by the quantum computer system.

## Claims

1. A method of generating an encoding for mapping fermionic operators onto qubits of a quantum information processor, the method comprising:

   receiving a set of fermionic operators, $F_i$, to be represented on the quantum information processor, wherein the set of fermionic operators is a subset of a group of Majorana monomials, $\mathcal{M}$;
   identifying a set including every Pauli operator, $P$, implementable on the quantum information processor;
   assigning a first fermionic operator, $F_1$, from the set $F_i$, to a first Pauli operator, $P_1$ in the set $P$;
   assigning a Pauli operator from the set $P$ to each subsequent fermionic operator, $F_s$, in the set $F_i$ by:

   (a) identifying one or more commutation relations and/or anticommutation relations between $F_s$ and the set of all fermionic operators $\{F_1 ... F_{(s-1)}\}$ which have already been assigned to Pauli operators in the set $\{P_1 ... P_{(s-1)}\}$;
   (b) identifying for the fermionic operator $F_s$ a set of candidate Pauli operators to which $F_s$ may be assigned, wherein a candidate Pauli operator is one which has the same commutation and anticommutation relations with each previously assigned Pauli operator $P_j$ as the commutation and anticommutation relations between $F_s$ and the corresponding $F_j$, for all $j$ in the range $1 \le j \le$ (s-1); and
   (c) selecting a Pauli operator, $P_s$, from the set of candidate Pauli operators and assigning $F_s$ to $P_s$; and

   repeating steps (a) to (c) using further subsequent fermionic operators in the set $F_i$ until each fermionic operator in $F_i$ has been assigned to a Pauli operator from the set $P$, thereby to provide a complete mapping in which each fermionic operator, $F_i$, is assigned to a corresponding Pauli operator $P_i$; wherein
   a cost model is applied to the assignment(s) and/or the complete mapping between fermionic operators and Pauli operators to enable selection of a relatively lower cost complete mapping; and
   encoding the selected relatively lower cost complete mapping onto the quantum information processor.

2. The method according to claim 1, wherein the cost model is based on properties of the quantum information processor; and/or wherein

   the cost model is based on the physical arrangement of qubits forming part of the quantum information processor; and/or wherein the cost model is based on a number of hardware-native operations required to implement a unitary rotation generated by a given Pauli operator; and/or wherein
   the cost model is based on at least one of:

   the number of qubits on which a given Pauli operator has support;
   a weighted sum or average of the number of qubit-qubit connections spanned by a given Pauli operator;
   a blacklist of forbidden Pauli operators for assignment to one or more fermionic operators; and/or
   a whitelist of forced assignments of Pauli operators for one or more fermionic operators.

3. The method according to any one of the preceding claims, wherein the mapping includes, for each pair of fermionic operators having a product relation equal to the identity matrix, a stabiliser formed from the product of the corresponding Pauli operators to which the pair of fermionic operators have been assigned; wherein

a code space of the qubits is chosen so that a measurement of any stabiliser yields a value of 1; optionally wherein the cost model is based at least in part on a number of computation or encoding errors detectable via a measurement of the stabilisers formed in a given encoding; and/or wherein

the cost model is applied to one, more, or each iteration of step (c) to identify an optimum of the candidate Pauli operators to which $F_s$ should be assigned.

4. The method according to any one of the preceding claims, wherein the cost model is applied to the complete mapping to determine a relative cost for the complete mapping; optionally wherein

the method is performed at least one further time for the same set of fermionic operators $F_i$ to determine a relative cost of at least a second, different, complete mapping, and wherein the method further comprises selecting the lowest cost complete mapping.

5. The method according to any one of the preceding claims, wherein an aggregate cost for a complete mapping is equal to the largest cost of any individual mapping between a fermionic operator and its corresponding Pauli operator.

6. The method according to any one of claims 1 to 4, wherein an aggregate cost for a complete mapping is based on one or more of:

an average Pauli weight of the Pauli operators;
an operator weight of stabilizers associated with the encoding;
a probability of an undetectable error given a hardware noise model for the quantum information processor; and/or
a total circuit depth of an algorithm for implementing logical operations on the qubits of the quantum information processor onto which the fermionic operators have been mapped.

7. The method according to any one of the preceding claims, wherein $P_1$ is chosen to have the lowest available cost in the cost model; and/or further including

wherein the cost model is based on, at least, the number of qubits on which a given Pauli operator has support and the number of qubits in the quantum information processor, and the cost model is applied to the set of candidate Pauli operators to identify, for each previously assigned Pauli operator, a first set of other Pauli operators which commute with that Pauli operator, the first set being ordered from lowest cost to highest cost; optionally wherein the first set of Pauli operators is used in steps (b) and (c) to identify an/the optimum candidate Pauli operator.

8. The method of any one of the preceding claims, further including wherein the cost model is based on, at least, the number of qubits on which a given Pauli operator has support and the number of qubits in the quantum information processor, and the cost model is applied to the set of candidate Pauli operators to identify, for each previously assigned Pauli operator, a second set of other Pauli operators which anticommute with that Pauli operator, the second set being ordered from lowest cost to highest cost; optionally wherein

the second set of Pauli operators is used in steps (b) and (c) to identify an/the optimum candidate Pauli operator.

9. The method of any one of the preceding claims, wherein each time a fermionic operator is assigned to a Pauli operator, subsequent fermionic operators are prohibited from also being assigned to that same Pauli operator; and/or

wherein, a/the cost model is applied to the assignment(s) of step (c) and in the event that during step (c) an/the optimum Pauli operator has a cost greater than the cost of any previously provided mapping or some predetermined threshold, the method is halted and method steps (a) to (c) are repeated on the $(s-1)^{th}$ fermionic operator, ensuring that the Pauli operator assigned to the $(s-1)^{th}$ fermionic operator in the repeated steps (a) to (c) is different from the Pauli operator assigned to the $(s-1)^{th}$ fermionic operator the previous time steps (a) to (c) were enacted on the $(s-1)^{th}$ fermionic operator; and/or

wherein in the event that the list of candidate Pauli operators contains no entries, the method is halted and method steps (a) to (c) are repeated on the $(s-1)^{th}$ fermionic operator, ensuring that the Pauli operator assigned to the $(s-1)^{th}$ fermionic operator in the repeated steps (a) to (c) is different from the Pauli operator assigned to the $(s-1)^{th}$ fermionic operator the previous time steps (a) to (c) were enacted on the $(s-1)^{th}$ fermionic operator; and/or

the method further comprising performing a calculation and/or a time evolution on the encoded complete mapping.

10. The method according to any one of the preceding claims, wherein the set of fermionic operators includes translation invariant terms and wherein the one or more commutation relations and/or anticommutation relations are presented in a manner which respects translations relative to a unit cell.

11. The method according to any one of the preceding claims, wherein the set of fermionic operators collectively form a Hamiltonian.

12. A use of the method of any one of the preceding claims in identifying improved hardware layouts for an encoding which maps the fermionic operators onto qubits of a quantum information processor, the use comprising:

   selecting a hardware layout from a set of hardware layouts;
   executing the method of any one of the preceding claims to identify an optimum mapping for that hardware layout;
   selecting a new hardware layout from the set of hardware layouts; and
   selecting the hardware layout and associated optimum encoding which results in the lowest cost according to the cost model.

13. A control apparatus for a quantum information processor, the apparatus configured to compile a quantum circuit for performing quantum operations on a quantum information processor, the apparatus comprising:
   a processor configured to perform the method of any one of claims 1 to 11.

14. The apparatus of claim 13, further including the quantum information processor.

15. A non-transient computer readable medium comprising instructions which, when executed by a computer, cause the computer to carry out the method of any one of claims 1 to 11.

**Patentansprüche**

1. Verfahren zum Erzeugen einer Codierung zum Abbilden fermionischer Operatoren auf Qubits eines Quanteninformationsprozessors, wobei das Verfahren Folgendes umfasst:

   Empfangen einer Menge von fermionischen Operatoren, $F_i$, die auf dem Quanteninformationsprozessor dargestellt werden sollen, wobei die Menge der fermionischen Operatoren eine Teilmenge einer Gruppe von Majorana-Monomialen, $M$, ist;
   Identifizieren einer Menge, die jeden Pauli-Operator, $P$, enthält, der auf dem Quanteninformationsprozessor implementierbar ist;
   Zuordnen eines ersten fermionischen Operators $F_1$ aus der Menge $F_i$ zu einem ersten Pauli-Operator $P_1$ in der Menge $P$;
   Zuordnen eines Pauli-Operators aus der Menge $P$ zu jedem nachfolgenden fermionischen Operator $F_s$ in der Menge $F_i$ durch:

   (a) Identifizieren einer oder mehrerer Kommutationsbeziehungen und/oder Antikommutationsbeziehungen zwischen $F_s$ und der Menge aller fermionischen Operatoren $\{F_1...F_{(s-1)}\}$; die bereits Pauli-Operatoren in der Menge $\{P_1...P_{(s-1)}\}$ zugeordnet sind;
   (b) Identifizieren einer Menge von Kandidaten-Pauli-Operatoren für den fermionischen Operator $F_s$, denen $F_s$ zugeordnet werden kann, wobei ein Kandidaten-Pauli-Operator ein solcher ist, der die gleichen Kommutations- und Antikommutationsbeziehungen mit jedem zuvor zugewiesenen Pauli-Operator $P_j$ aufweist wie die Kommutations- und Antikommutationsbeziehungen zwischen $F_s$ und dem entsprechenden $F_j$ für alle $j$ im Bereich $1 \leq j \leq (s-1)$; und
   (c) Auswählen eines Pauli-Operators $P_s$ aus der Menge der Kandidaten-Pauli-Operatoren und Zuordnen von $F_s$ zu $P_s$; und

   Wiederholen der Schritte (a) bis (c) unter Verwendung weiterer nachfolgender fermionischer Operatoren in der Menge $Fi$, bis jeder fermionische Operator in $Fi$ einem Pauli-Operator aus der Menge $P$ zugeordnet worden ist, um dadurch ein vollständiges Mapping bereitzustellen, in dem jeder fermionische Operator, $F_i$, einem entsprechenden Pauli-Operator $P_i$ zugeordnet ist; wobei
   ein Kostenmodell auf die Zuordnung(en) und/oder das vollständige Mapping zwischen fermionischen Operatoren und Pauli-Operatoren angewendet wird, um die Auswahl eines vollständigen Mappings mit relativ geringeren Kosten zu ermöglichen; und

Codieren des ausgewählten vollständigen Mappings mit relativ geringeren Kosten in den Quanteninformationsprozessor.

2. Verfahren nach Anspruch 1, wobei das Kostenmodell auf den Eigenschaften des Quanteninformationsprozessors basiert; und/oder wobei

das Kostenmodell auf der physikalischen Anordnung von Qubits basiert, die Teil des Quanteninformationsprozessors sind; und/oder wobei das Kostenmodell auf einer Anzahl von Hardware-nativen Operationen basiert, die erforderlich sind, um eine von einem gegebenen Pauli-Operator erzeugte unitäre Drehung zu implementieren; und/oder wobei
das Kostenmodell auf mindestens einem der Folgenden basiert:

der Anzahl von Qubits, auf denen ein gegebener Pauli-Operator Unterstützung hat;
einer gewichteten Summe oder einem gewichteten Durchschnitt der Anzahl von Qubit-Qubit-Verbindungen, die von einem gegebenen Pauli-Operator überspannt werden;
eine schwarze Liste verbotener Pauli-Operatoren für die Zuordnung zu einem oder mehreren fermionischen Operatoren; und/oder
eine weiße Liste von erzwungenen Zuweisungen von Pauli-Operatoren für einen oder mehrere fermionische Operatoren.

3. Verfahren nach einem der vorhergehenden Ansprüche, wobei das Mapping für jedes Paar von fermionischen Operatoren mit einer Produktbeziehung gleich der Identitätsmatrix einen Stabilisator enthält, der aus dem Produkt der entsprechenden Pauli-Operatoren gebildet wird, denen das Paar von fermionischen Operatoren zugeordnet wurde; wobei

ein Codierraum der Qubits so gewählt wird, dass eine Messung eines beliebigen Stabilisators einen Wert von 1 ergibt; optional
wobei das Kostenmodell mindestens teilweise auf einer Anzahl von Berechnungs- oder Codierungsfehlern basiert, die über eine Messung der in einer gegebenen Codierung gebildeten Stabilisatoren erfasst werden können; und/oder wobei
das Kostenmodell auf eine, mehrere oder jede Iteration von Schritt (c) angewandt wird, um ein Optimum der Kandidaten-Pauli-Operatoren zu identifizieren, denen $F_s$ zugewiesen werden sollte.

4. Verfahren nach einem der vorhergehenden Ansprüche, wobei das Kostenmodell auf das vollständige Mapping angewendet wird, um relative Kosten für das vollständige Mapping zu bestimmen; optional wobei
das Verfahren mindestens ein weiteres Mal für dieselbe Menge von fermionischen Operatoren $F_i$ durchgeführt wird; um die relativen Kosten mindestens eines zweiten, unterschiedlichen, vollständigen Mappings zu bestimmen, und wobei das Verfahren ferner das Auswählen des vollständigen Mappings mit den niedrigsten Kosten umfasst.

5. Verfahren nach einem der vorhergehenden Ansprüche, wobei die Gesamtkosten für ein vollständiges Mapping gleich den größten Kosten für jedes einzelne Mapping zwischen einem fermionischen Operator und seinem entsprechenden Pauli-Operator sind.

6. Verfahren nach einem der Ansprüche 1 bis 4, wobei die Gesamtkosten für ein vollständiges Mapping auf einem oder mehreren der folgenden Faktoren basieren:

einem durchschnittlichen Pauli-Gewicht der Pauli-Operatoren;
einem Operatorgewicht von Stabilisatoren, die der Codierung zugeordnet sind;
einer Wahrscheinlichkeit eines nicht nachweisbaren Fehlers bei einem Hardware-Rauschmodell für den Quanteninformationsprozessor; und/oder
einer Gesamtschaltungstiefe eines Algorithmus zum Implementieren logischer Operationen auf den Qubits des Quanteninformationsprozessors, auf die die fermionischen Operatoren abgebildet wurden.

7. Verfahren nach einem der vorhergehenden Ansprüche, wobei $P_1$ so gewählt wird, dass es die niedrigsten verfügbaren Kosten in dem Kostenmodell hat; und/oder ferner Folgendes enthält:

wobei das Kostenmodell mindestens auf der Anzahl der Qubits, auf denen ein gegebener Pauli-Operator Unterstützung hat, und der Anzahl der Qubits im Quanteninformationsprozessor basiert, und das Kostenmodell auf die Menge von Kandidaten-Pauli-Operatoren angewendet wird, um für jeden zuvor zugewiesenen Pauli-Operator eine erste Menge von anderen Pauli-Operatoren zu identifizieren, die mit diesem Pauli-Operator kommutieren, wobei die erste Menge von den niedrigsten Kosten zu den höchsten Kosten geordnet ist; wobei optional

die erste Menge von Pauli-Operatoren in den Schritten (b) und (c) verwendet wird, um einen/den optimalen Kandidaten-Pauli-Operator zu identifizieren.

8. Verfahren nach einem der vorhergehenden Ansprüche, das ferner Folgendes enthält: wobei das Kostenmodell mindestens auf der Anzahl der Qubits, auf denen ein gegebener Pauli-Operator Unterstützung hat, und der Anzahl der Qubits im Quanteninformationsprozessor basiert, und das Kostenmodell auf die Menge von Kandidaten-Pauli-Operatoren angewendet wird, um für jeden zuvor zugewiesenen Pauli-Operator eine zweite Menge von anderen Pauli-Operatoren zu identifizieren, die mit diesem Pauli-Operator antikommutieren, wobei die zweite Menge von den niedrigsten Kosten zu den höchsten Kosten geordnet ist; optional wobei
die zweite Menge von Pauli-Operatoren in den Schritten (b) und (c) verwendet wird, um einen/den optimalen Kandidaten-Pauli-Operator zu identifizieren.

9. Verfahren nach einem der vorhergehenden Ansprüche, wobei jedes Mal, wenn ein fermionischer Operator einem Pauli-Operator zugewiesen wird, verhindert wird, dass nachfolgende fermionische Operatoren ebenfalls demselben Pauli-Operator zugewiesen werden; und/oder

wobei auf die Zuweisung(en) des Schritts (c) ein/das Kostenmodell angewendet wird und für den Fall, dass während des Schritts (c) ein/der optimale Pauli-Operator Kosten aufweist, die größer sind als die Kosten jeder zuvor bereitgestellten Zuordnung oder eines vorbestimmten Schwellenwerts, das Verfahren angehalten wird und die Verfahrensschritte (a) bis (c) für den $(s-1)$-ten fermionischen Operator wiederholt werden, wodurch sichergestellt wird, dass der Pauli-Operator, der dem $(s-1)$-ten fermionischen Operator in den wiederholten Schritten (a) bis (c) zugewiesen wird, sich von dem Pauli-Operator unterscheidet, der dem $(s-1)$-ten fermionischen Operator zugewiesen wurde, als die vorherigen Schritte (a) bis (c) für den $(s-1)$-ten fermionischen Operator ausgeführt wurden; und/oder
wobei für den Fall, dass die Liste der Kandidaten-Pauli-Operatoren keine Einträge enthält, das Verfahren angehalten wird und die Verfahrensschritte (a) bis (c) für den $(s-1)$-ten fermionischen Operator wiederholt werden, wodurch sichergestellt wird, dass der Pauli-Operator, der dem $(s-1)$-ten fermionischen Operator in den wiederholten Schritten (a) bis (c) zugewiesen wird, sich von dem Pauli-Operator unterscheidet, der dem $(s-1)$-ten fermionischen Operator zugewiesen wurde, als die vorherigen Schritte (a) bis (c) für den $(s-1)$-ten fermionischen Operator ausgeführt wurden; und/oder
das Verfahren ferner das Durchführen einer Berechnung und/oder einer zeitlichen Entwicklung auf dem codierten vollständigen Mapping umfasst.

10. Verfahren nach einem der vorhergehenden Ansprüche, wobei die Menge der fermionischen Operatoren translationsinvariante Terme enthält und wobei die eine oder mehreren Kommutationsbeziehungen und/oder Antikommutationsbeziehungen in einer Weise dargestellt werden, die Translationen relativ zu einer Einheitszelle berücksichtigt.

11. Verfahren nach einem der vorhergehenden Ansprüche, wobei die Menge der fermionischen Operatoren gemeinsam einen Hamiltonian bilden.

12. Verwendung des Verfahrens nach einem der vorhergehenden Ansprüche zum Identifizieren verbesserter Hardware-Layouts für eine Codierung, die die fermionischen Operatoren auf Qubits eines Quanteninformationsprozessors abbildet, wobei die Verwendung Folgendes umfasst:

Auswählen eines Hardware-Layouts aus einer Menge von Hardware-Layouts;
Ausführen des Verfahrens nach einem der vorhergehenden Ansprüche, um ein optimales Mapping für dieses Hardware-Layout zu identifizieren;
Auswählen eines neuen Hardware-Layouts aus der Menge von Hardware-Layouts; und
Auswählen des Hardware-Layouts und der zugeordneten optimalen Codierung, die zu den niedrigsten Kosten gemäß dem Kostenmodell führt.

13. Steuervorrichtung für einen Quanteninformationsprozessor, wobei die Vorrichtung dafür konfiguriert ist, eine Quantenschaltung zum Durchführen von Quantenoperationen auf einem Quanteninformationsprozessor zu kompilieren, wobei die Vorrichtung Folgendes umfasst:

**EP 4 343 641 B1**

einen Prozessor, der dafür konfiguriert ist, das Verfahren nach einem der Ansprüche 1 bis 11 durchzuführen.

**14.** Vorrichtung nach Anspruch 13, die ferner den Quanteninformationsprozessor enthält.

**15.** Nicht-flüchtiges computerlesbares Medium, das Anweisungen umfasst, die, wenn sie von einem Computer ausgeführt werden, den Computer veranlassen, das Verfahren nach einem der Ansprüche 1 bis 11 auszuführen.


**Revendications**

**1.** Procédé de génération d'un codage pour le mappage d'opérateurs fermioniques sur des qubits d'un processeur d'information quantique, le procédé comprenant :

la réception d'un ensemble d'opérateurs fermioniques, $F_i$, à représenter sur le processeur d'information quantique, dans lequel l'ensemble d'opérateurs fermioniques est un sous-ensemble d'un groupe de monômes de Majorana, $M$ ;
l'identification d'un ensemble comportant chaque opérateur de Pauli, $P$, pouvant être implémenté sur le processeur d'information quantique ;
l'affectation d'un premier opérateur fermionique, $F_1$, de l'ensemble $F_i$, à un premier opérateur de Pauli, $P_1$, de l'ensemble $P_i$ ;
l'affectation d'un opérateur de Pauli de l'ensemble $P$ à chaque opérateur fermionique suivant, $F_s$, de l'ensemble $F_i$ par :

(a) l'identification d'une ou plusieurs relations de commutation et/ou relations d'anticommutation entre $F_s$ et l'ensemble de tous les opérateurs fermioniques $\{F_1 ... F_{(s-1)}\}$ qui ont déjà été affectés à des opérateurs de Pauli dans l'ensemble $\{P_1 ... P_{(s-1)}\}$ ;
(b) l'identification pour l'opérateur fermionique $F_s$ d'un ensemble d'opérateurs de Pauli candidats auxquels $F_s$ peut être affecté, dans lequel un opérateur de Pauli candidat est un opérateur qui a les mêmes relations de commutation et d'anticommutation avec chaque opérateur de Pauli $P_j$ précédemment affecté que les relations de commutation et d'anticommutation entre $F_s$ et le $F_j$ correspondant, pour tous les $j$ dans l'intervalle $1 \leq j \leq (s-1)$ ; et
(c) la sélection d'un opérateur de Pauli, $P_s$, dans l'ensemble d'opérateurs de Pauli candidats et l'affectation de $F_s$ à $P_s$ ; et

la répétition des étapes (a) à (c) en utilisant d'autres opérateurs fermioniques de l'ensemble $F_i$ jusqu'à ce que chaque opérateur fermionique dans $F_i$ ait été affecté à un opérateur de Pauli de l'ensemble $P$, afin d'obtenir un mappage complet dans lequel chaque opérateur fermionique, $F_1$, est affecté à un opérateur de Pauli correspondant, $P_i$ ; dans lequel
un modèle de coût est appliqué à la (aux) affectation(s) et/ou au mappage complet entre des opérateurs fermioniques et des opérateurs de Pauli afin de permettre la sélection d'un mappage complet relativement moins coûteux ; et
le codage du mappage complet relativement moins coûteux sélectionné sur le processeur d'information quantique.

**2.** Procédé selon la revendication 1, dans lequel le modèle de coût est basé sur des propriétés du processeur d'information quantique ; et/ou dans lequel

le modèle de coût est basé sur l'agencement physique des qubits faisant partie du processeur d'information quantique ; et/ou dans lequel le modèle de coût est basé sur un nombre d'opérations matérielles natives requises pour implémenter une rotation unitaire générée par un opérateur de Pauli donné ; et/ou dans lequel
le modèle de coût est basé sur au moins l'un parmi :

le nombre de qubits sur lesquels un opérateur de Pauli donné a un support ;
une somme ou une moyenne pondérée du nombre de connexions qubit-qubit couvertes par un opérateur de Pauli donné ;
une liste noire d'opérateurs de Pauli interdits à affecter à un ou plusieurs opérateurs fermioniques ; et/ou
une liste blanche d'affectations forcées d'opérateurs de Pauli pour un ou plusieurs opérateurs fermioniques.

3. Procédé selon l'une quelconque des revendications précédentes, dans lequel le mappage comporte, pour chaque paire d'opérateurs fermioniques ayant une relation de produit égale à la matrice d'identité, un stabilisateur formé à partir du produit des opérateurs de Pauli correspondants auxquels la paire d'opérateurs fermioniques a été affectée ; dans lequel

un espace de code des qubits est choisi de telle sorte qu'une mesure de n'importe quel stabilisateur donne une valeur de 1 ; éventuellement
dans lequel le modèle de coût est basé au moins en partie sur un nombre d'erreurs de calcul ou de codage détectables par une mesure des stabilisateurs formés dans un codage donné ; et/ou dans lequel
le modèle de coût est appliqué à une, plusieurs ou chaque itération de l'étape (c) afin d'identifier un optimum des opérateurs de Pauli candidats auxquels $F_s$ devrait être affecté.

4. Procédé selon l'une quelconque des revendications précédentes, dans lequel le modèle de coût est appliqué au mappage complet pour déterminer un coût relatif pour le mappage complet ; éventuellement dans lequel
le procédé est effectué au moins une fois de plus pour le même ensemble d'opérateurs fermioniques $Fi$ pour déterminer un coût relatif d'au moins un second mappage complet différent, et dans lequel le procédé comprend en outre la sélection du mappage complet le moins couteux.

5. Procédé selon l'une quelconque des revendications précédentes, dans lequel un coût global d'un mappage complet est égal au coût le plus élevé de tout mappage individuel entre un opérateur fermionique et son opérateur de Pauli correspondant.

6. Procédé selon l'une quelconque des revendications 1 à 4, dans lequel un coût global pour un mappage complet est basé sur l'un ou plusieurs parmi :

un poids de Pauli moyen des opérateurs de Pauli ;
un poids d'opérateur de stabilisateurs associés au codage ;
une probabilité d'une erreur indétectable compte tenu d'un modèle de bruit matériel pour le processeur d'information quantique ; et/ou
une profondeur de circuit totale d'un algorithme pour l'implémentation d'opérations logiques sur les qubits du processeur d'information quantique sur lesquels les opérateurs fermioniques ont été mappés.

7. Procédé selon l'une quelconque des revendications précédentes, dans lequel $P_1$ est choisi pour avoir le coût disponible le plus bas dans le modèle de coût ; et/ou comportant en outre

dans lequel le modèle de coût est basé sur, au moins, le nombre de qubits sur lesquels un opérateur de Pauli donné a un support et le nombre de qubits dans le processeur d'information quantique, et le modèle de coût est appliqué à l'ensemble des opérateurs de Pauli candidats afin d'identifier, pour chaque opérateur de Pauli précédemment affecté, un premier ensemble d'autres opérateurs de Pauli qui sont commutatifs avec cet opérateur de Pauli, le premier ensemble étant ordonné du coût le plus faible au coût le plus élevé ; éventuellement dans lequel
le premier ensemble d'opérateurs de Pauli est utilisé dans les étapes (b) et (c) pour identifier un/l'opérateur de Pauli candidat optimal.

8. Procédé selon l'une quelconque des revendications précédentes, comportant en outre dans lequel le modèle de coût est basé sur, au moins, le nombre de qubits sur lesquels un opérateur de Pauli donné a un support et le nombre de qubits dans le processeur d'information quantique, et le modèle de coût est appliqué à l'ensemble des opérateurs de Pauli candidats afin d'identifier, pour chaque opérateur de Pauli précédemment affecté, un second ensemble d'autres opérateurs de Pauli qui sont sont anticommutatifs avec cet opérateur de Pauli, le second ensemble étant ordonné du coût le plus faible au coût le plus élevé ; éventuellement dans lequel
le second ensemble d'opérateurs de Pauli est utilisé dans les étapes (b) et (c) pour identifier un/l'opérateur de Pauli candidat optimal.

9. Procédé selon l'une quelconque des revendications précédentes, dans lequel chaque fois qu'un opérateur fermionique est affecté à un opérateur de Pauli, des opérateurs fermioniques suivants sont empêchés d'être également affectés à ce même opérateur de Pauli ; et/ou

dans lequel un/le modèle de coût est appliqué à l'affectation (aux affectations) de l'étape (c) et dans le cas où, au cours de l'étape (c), un opérateur/l'opérateur de Pauli optimal a un coût supérieur au coût de tout mappage précédemment fourni ou à un seuil prédéterminé, le procédé est interrompu et les étapes de procédé (a) à (c) sont répétées sur le (s-1)ème opérateur fermionique, en veillant à ce que l'opérateur de Pauli affecté au (s-1)ème opérateur fermionique dans les étapes répétées (a) à (c) soit différent de l'opérateur de Pauli affecté au (s-1)ème opérateur fermionique la fois précédente où les étapes (a) à (c) ont été exécutées sur le (s-1)ème opérateur fermionique ; et/ou

dans lequel, si la liste d'opérateurs de Pauli candidats ne contient aucune entrée, le procédé est interrompu et les étapes de procédé (a) à (c) sont répétées sur le (s-1)ème opérateur fermionique, en veillant à ce que l'opérateur de Pauli affecté au (*s-1*)ème opérateur fermionique dans les étapes répétées (a) à (c) soit différent de l'opérateur de Pauli affecté au (s-1)ème opérateur fermionique la fois précédente où les étapes (a) à (c) ont été exécutées sur le (s-1)ème opérateur fermionique ; et/ou

le procédé comprend en outre l'effection d'un calcul et/ou d'une évolution temporelle sur le mappage complet codé.

10. Procédé selon l'une quelconque des revendications précédentes, dans lequel l'ensemble d'opérateurs fermioniques comporte des termes invariants par rapport à la translation et dans lequel la ou les relations de commutation et/ou relations d'anticommutation sont présentées d'une manière qui respecte des translations par rapport à une cellule unitaire.

11. Procédé selon l'une quelconque des revendications précédentes, dans lequel l'ensemble des opérateurs fermioniques forment collectivement un hamiltonien.

12. Utilisation du procédé selon l'une quelconque des revendications précédentes pour identifier de meilleures configurations matérielles pour un codage qui mappe les opérateurs fermioniques sur les qubits d'un processeur d'information quantique, l'utilisation comprenant :

la sélection d'une configuration matérielle parmi un ensemble de configurations matérielles ;
l'exécution du procédé selon l'une quelconque des revendications précédentes pour identifier un mappage optimal pour cette configuration matérielle ;
la sélection d'une nouvelle configuration matérielle dans l'ensemble de configurations matérielles ; et
la sélection de la configuration matérielle et du codage optimal associé qui permet d'obtenir le plus bas coût selon le modèle de coût.

13. Appareil de commande pour un processeur d'information quantique, l'appareil étant configuré pour compiler un circuit quantique afin d'effectuer des opérations quantiques sur un processeur d'information quantique, l'appareil comprenant :
un processeur configuré pour effectuer le procédé selon l'une quelconque des revendications 1 à 11.

14. Appareil selon la revendication 13, comportant en outre le processeur d'information quantique.

15. Support lisible par ordinateur non transitoire comprenant des instructions qui, lorsqu'elles sont exécutées par un ordinateur, amènent l'ordinateur à mettre en œuvre le procédé selon l'une quelconque des revendications 1 à 11.

$$\begin{pmatrix} | & \cdot & \cdot \\ P_1 & \cdot & \cdot \\ | & \cdot & \cdot \end{pmatrix}$$ Partially Completed Encoding

$$\begin{pmatrix} | & | & \cdot \\ P_1 & C_1 & \cdot \\ | & | & \cdot \end{pmatrix} \quad \begin{pmatrix} | & | & \cdot \\ P_1 & C_2 & \cdot \\ | & | & \cdot \end{pmatrix} \quad \begin{pmatrix} | & | & \cdot \\ P_1 & C_3 & \cdot \\ | & | & \cdot \end{pmatrix} \quad \begin{pmatrix} | & | & \cdot \\ P_1 & C_4 & \cdot \\ | & | & \cdot \end{pmatrix}$$ Populate with Candidate Pauli Operators

X
cost too high

X
Invalid Encoding

Valid Encoding
Continue Populating

Backtrack if no valid completion found

Fig. 1

| Lattice (modes/cell) | unit cell | operators | $\hat{\tau}$ |
|---|---|---|---|
| Square (1) | | ($E$ and $V$) | $\left(\begin{array}{ccc} 1+y & 1+x & 1 \\ \hline 0 & 0 & 1 \end{array}\right)$ |
| Square (Num. preserving) (1) | | (hopping and $V$) | $\left(\begin{array}{ccccc} y & 1 & x & 1 & 1 \\ \hline 1 & y & 1 & x & 1 \end{array}\right)$ |
| Triang (1) | | ($E$ and $V$) | $\left(\begin{array}{cccc} 1+xy & 1+y & 1+x & 1 \\ \hline 0 & 0 & 0 & 1 \end{array}\right)$ |
| Spinful sq (2) | | ($E$ and $V$) | $\left(\begin{array}{cccccc} 0 & 0 & 0 & 1+y & 1+x & 1 \\ 1+y & 1+x & 1 & 0 & 0 & 0 \\ \hline 0 & 0 & 0 & 0 & 0 & 1 \\ 0 & 0 & 1 & 0 & 0 & 0 \end{array}\right)$ |
| Hex (2) | | ($E$ and $V$) | $\left(\begin{array}{ccccc} y & x & 1 & 0 & 1 \\ 1 & 1 & 1 & 1 & 0 \\ \hline 0 & 0 & 0 & 0 & 1 \\ 0 & 0 & 0 & 1 & 0 \end{array}\right)$ |
| Tilted sq (2) | | ($E$ and $V$) | $\left(\begin{array}{cccccc} 1 & x & 1 & 1 & 0 & 1 \\ x^{-1}y & 1 & y & 1 & 1 & 0 \\ \hline 0 & 0 & 0 & 0 & 0 & 1 \\ 0 & 0 & 0 & 0 & 1 & 0 \end{array}\right)$ |
| Kagome (3) | | ($E$ and $V$) | $\left(\begin{array}{ccccccccc} 0 & 0 & xy & 1 & y & 1 & 0 & 0 & 1 \\ x & 1 & 0 & 0 & 1 & 1 & 0 & 1 & 0 \\ 1 & 1 & 1 & 1 & 0 & 0 & 1 & 0 & 0 \\ \hline 0 & 0 & 0 & 0 & 0 & 0 & 0 & 0 & 1 \\ 0 & 0 & 0 & 0 & 0 & 0 & 0 & 1 & 0 \\ 0 & 0 & 0 & 0 & 0 & 0 & 1 & 0 & 0 \end{array}\right)$ |
| Kagome alt. cell (3) | | ($E$ and $V$) | $\left(\begin{array}{ccccccccc} 1 & x & 0 & 0 & x & 1 & 0 & 0 & 1 \\ 0 & 0 & 1 & 1 & 1 & 1 & 0 & 1 & 0 \\ y^{-1} & 1 & y^{-1} & 1 & 0 & 0 & 1 & 0 & 0 \\ \hline 0 & 0 & 0 & 0 & 0 & 0 & 0 & 0 & 1 \\ 0 & 0 & 0 & 0 & 0 & 0 & 0 & 1 & 0 \\ 0 & 0 & 0 & 0 & 0 & 0 & 1 & 0 & 0 \end{array}\right)$ |

## Fig. 2

| Lattice (qubits/cell) | Cnit cell |
|---|---|
| Square (2) | |
| Tilted square (2) | |
| Sq bilayer (2) | |
| Hex (2) | |
| Triang (2) | |
| Lieb lattice (3) | |

| Lattice (qubits/cell) | Cnit cell |
|---|---|
| Rhombile (3) | |
| Truncated sq (4) | |
| Hex bilayer (4) | |
| Sq bilayer (4) | |
| Snub sq (4) | |
| Heavy hex (5) | |

Fig. 3

Fig. 4A

EP 4 343 641 B1

| Fermionic unit cell | Fermionic operators | | |
|---|---|---|---|
| Square (1) | $\begin{pmatrix} 1+y & 1+x & 1 \\ 0 & 0 & 1 \end{pmatrix}$ | | |

| Qubit unit cell | Encoded operators | Stabilizers | Encoding properties |
|---|---|---|---|
| Square (2) | $\begin{pmatrix} y & x & 0 \\ 0 & 1 & 1 \\ \hline 1 & 1+x & 1 \\ 1 & 0 & 1 \end{pmatrix}$ | $\begin{pmatrix} x+y \\ 1+y \\ \hline y+xy \\ 1+x \end{pmatrix}$ | Max weight: 3<br>Max graph cost: 2<br>Avg. graph cost: 1.67<br>Error detecting?: Yes |
| Hex(2) | $\begin{pmatrix} y & x & 0 \\ 0 & 1 & 1 \\ \hline 1 & 1+x & 1 \\ 1 & 0 & 1 \end{pmatrix}$ | $\begin{pmatrix} x+y \\ 1+y \\ \hline y+xy \\ 1+x \end{pmatrix}$ | Max weight: 3<br>Max graph cost: 2<br>Avg. graph cost: 1.67<br>Error detecting?: Yes |
| Tilted sq (2) | $\begin{pmatrix} 0 & x & 1 \\ y & 1 & 0 \\ \hline 1 & 0 & 1 \\ 1 & 1+x & 1 \end{pmatrix}$ | $\begin{pmatrix} x+y \\ 1+y \\ \hline 1+x \\ y+xy \end{pmatrix}$ | Max weight: 3<br>Max graph cost: 2<br>Avg. graph cost: 1.67<br>Error detecting?: Yes |
| Triang (2) | $\begin{pmatrix} y & x & 0 \\ 0 & 1 & 1 \\ \hline 1 & 1+x & 1 \\ 1 & 0 & 1 \end{pmatrix}$ | $\begin{pmatrix} x+y \\ 1+y \\ \hline y+xy \\ 1+x \end{pmatrix}$ | Max weight: 3<br>Max graph cost: 2<br>Avg. graph cost: 1.67<br>Error detecting?: Yes |
| Sq bilayer (2) | $\begin{pmatrix} y & x & 0 \\ 0 & 1 & 1 \\ \hline 1 & 1+x & 1 \\ 1 & 0 & 1 \end{pmatrix}$ | $\begin{pmatrix} x+y \\ 1+y \\ \hline y+xy \\ 1+x \end{pmatrix}$ | Max weight: 3<br>Max graph cost: 2<br>Avg. graph cost: 1.67<br>Error detecting?: Yes |

Fig. 4B

| Fermionic unit cell | Fermionic operators | | |
|---|---|---|---|
| Square (1) | $\begin{pmatrix} 1+y & 1+x & 1 \\ 0 & 0 & 1 \end{pmatrix}$ | (cont.) | |

| Qubit unit cell | Encoded operators | Stabilizers | Encoding properties |
|---|---|---|---|
| Rhombile (3) | $\begin{pmatrix} y & 1+x & 0 \\ 0 & 0 & 0 \\ 0 & xy^{-1} & 1 \\ \hline 1 & 1 & 1 \\ 0 & 0 & 0 \\ 1 & 0 & 0 \end{pmatrix}$ | $\begin{pmatrix} 1+x \\ 0 \\ x+xy^{-1} \\ \hline x+y \\ 0 \\ 1+x \end{pmatrix}$ | Max weight: 3<br>Max graph cost: 2<br>Avg. graph cost: 1.67<br>Error detecting?: Yes* |
| Hex bilayer (4) | $\begin{pmatrix} y & x & 0 \\ 0 & 1 & 1 \\ 0 & 0 & 0 \\ 0 & 0 & 0 \\ \hline 1 & 1+x & 1 \\ 1 & 0 & 1 \\ 0 & 0 & 0 \\ 0 & 0 & 0 \end{pmatrix}$ | $\begin{pmatrix} x+y \\ 1+y \\ 0 \\ 0 \\ \hline y+xy \\ 1+x \\ 0 \\ 0 \end{pmatrix}$ | Max weight: 3<br>Max graph cost: 2<br>Avg. graph cost: 1.67<br>Error detecting?: Yes* |
| Sq bilayer (4) | $\begin{pmatrix} y & x & 0 \\ 0 & 1 & 1 \\ 0 & 0 & 0 \\ 0 & 0 & 0 \\ \hline 1 & 1+x & 1 \\ 1 & 0 & 1 \\ 0 & 0 & 0 \\ 0 & 0 & 0 \end{pmatrix}$ | $\begin{pmatrix} x+y \\ 1+y \\ 0 \\ 0 \\ \hline y+xy \\ 1+x \\ 0 \\ 0 \end{pmatrix}$ | Max weight: 3<br>Max graph cost: 2<br>Avg. graph cost: 1.67<br>Error detecting?: Yes* |

Fig. 4C

| Fermionic unit cell | Fermionic operators | | |
|---|---|---|---|
| Square (1) | $\begin{pmatrix} y & 1 & x & 1 & 1 \\ 1 & y & 1 & x & 1 \end{pmatrix}$ | | |

| Qubit unit cell | Encoded operators | Stabilizers | Encoding properties |
|---|---|---|---|
| Square (2) | $\begin{pmatrix} 0 & 1+y & x & 1 & 1 \\ 0 & 0 & 1+x & 1+x & 0 \\ 1+y & 0 & x & 1 & 1 \\ 1 & y & 0 & 1+x & 1 \end{pmatrix}$ | $\begin{pmatrix} y+xy \\ 1+x+y+xy \\ 1+x \\ 1+y \end{pmatrix}$ | Max weight: 3<br>Max graph cost: 2<br>Avg. graph cost: 1.8<br>Error detecting?: Yes |

## Fig. 4D

| Fermionic unit cell | Fermionic operators | | |
|---|---|---|---|
| Triang (1) | $\begin{pmatrix} 1+xy & 1+y & 1+x & 1 \\ 0 & 0 & 0 & 1 \end{pmatrix}$ | | |

| Qubit unit cell | Encoded operators | Stabilizer | Encoding properties |
|---|---|---|---|
| Tilted sq (2) | $\begin{pmatrix} xy & y & 1+x & 1 \\ 0 & y & 1 & 0 \\ 1 & 1+y & 1 & 1 \\ y & 0 & 1 & 1 \end{pmatrix}$ | $\begin{pmatrix} 1+x \\ 1+xy \\ x+xy \\ 1+y \end{pmatrix}$ | Max weight: 3<br>Max graph cost: 2<br>Avg. graph cost: 1.75<br>Error detecting?: Yes |
| Triang.(2) | $\begin{pmatrix} xy & 1+y & x & 0 \\ 0 & x^{-1} & 1 & 1 \\ 1 & 1 & 1+x & 1 \\ 1 & 0 & 1 & 0 \end{pmatrix}$ | $\begin{pmatrix} 1+y^{-1} \\ 1+x^{-1}y^{-1} \\ 1+x \\ 1+y^{-1} \end{pmatrix}$ | Max weight: 3<br>Max graph cost: 2<br>Avg. graph cost: 1.75<br>Error detecting?: Yes |

## Fig. 4E

EP 4 343 641 B1

| Fermionic unit cell | Fermionic operators | | |
|---|---|---|---|
| Sq bilayer (2) | $$\begin{pmatrix} 0 & 0 & 0 & 1+y & 1+x & 1 \\ 1+y & 1+x & 1 & 0 & 0 & 0 \\ 0 & 0 & 0 & 0 & 0 & 1 \\ 0 & 0 & 1 & 0 & 0 & 0 \end{pmatrix}$$ | | |

| Qubit unit cell | Encoded operators | Stabilizer | Encoding properties |
|---|---|---|---|
| Hex bilayer (4) | $$\begin{pmatrix} y & x & 0 & 0 & 0 & 0 \\ 0 & 1 & 1 & 0 & 0 & 0 \\ 0 & 0 & 0 & y & x & 0 \\ 0 & 0 & 0 & 0 & 1 & 1 \\ 1 & 1+x & 1 & 0 & 0 & 0 \\ 1 & 0 & 1 & 0 & 0 & 0 \\ 0 & 0 & 0 & 1 & 1+x & 1 \\ 0 & 0 & 0 & 1 & 0 & 1 \end{pmatrix}$$ | $$\begin{pmatrix} 0 & x+y \\ 0 & 1+y \\ x+y & 0 \\ 1+y & 0 \\ 0 & x+xy \\ 0 & 1+x \\ x+xy & 0 \\ 1+x & 0 \end{pmatrix}$$ | Max weight: 3 <br> Max graph cost: 2 <br> Avg. graph cost: 1.67 <br> Error detecting?: Yes |
| Sq bilayer (4) | $$\begin{pmatrix} y & x & 0 & 0 & 0 & 0 \\ 0 & 1 & 1 & 0 & 0 & 0 \\ 0 & 0 & 0 & y & x & 0 \\ 0 & 0 & 0 & 0 & 1 & 1 \\ 1 & 1+x & 1 & 0 & 0 & 0 \\ 1 & 0 & 1 & 0 & 0 & 0 \\ 0 & 0 & 0 & 1 & 1+x & 1 \\ 0 & 0 & 0 & 1 & 0 & 1 \end{pmatrix}$$ | $$\begin{pmatrix} 0 & x+y \\ 0 & 1+y \\ x+y & 0 \\ 1+y & 0 \\ 0 & x+xy \\ 0 & 1+x \\ x+xy & 0 \\ 1+x & 0 \end{pmatrix}$$ | Max weight: 3 <br> Max graph cost: 2 <br> Avg. graph cost: 1.67 <br> Error detecting?: Yes |

Fig. 4F

| Fermionic unit cell | Fermionic operators | | |
|---|---|---|---|
| Tilted sq (2) | $$\begin{pmatrix} 1 & x & 1 & 1 & 0 & 1 \\ x^{-1}y & 1 & y & 1 & 1 & 0 \\ 0 & 0 & 0 & 0 & 0 & 1 \\ 0 & 0 & 0 & 0 & 1 & 0 \end{pmatrix}$$ | | |

| Qubit unit cell | Encoded operators | Stabilizer | Encoding properties |
|---|---|---|---|
| Lieb lattice (4) | $$\begin{pmatrix} 0 & x & 0 & 1 & 0 & 1 \\ 0 & x & y & 0 & 0 & 0 \\ 0 & 0 & y & 1 & 1 & 0 \\ 1 & 0 & 1 & 0 & 0 & 1 \\ y & 0 & 0 & 1 & 0 & 0 \\ x^{-1}y & 1 & 0 & 0 & 1 & 0 \end{pmatrix}$$ | $$\begin{pmatrix} 1+x \\ x+y \\ 1+y \\ 1+x \\ 1+xy \\ 1+y \end{pmatrix}$$ | Max weight: 3 <br> Max graph cost: 2 <br> Avg. graph cost: 1.33 <br> Error detecting?: No |

Fig. 4I

| Fermionic unit cell | Fermionic operators | | |
|---|---|---|---|
| Hex (2) | $\begin{pmatrix} y & x & 1 & 0 & 1 \\ 1 & 1 & 1 & 1 & 0 \\ 0 & 0 & 0 & 0 & 1 \\ 0 & 0 & 0 & 1 & 0 \end{pmatrix}$ | | |

| Qubit unit cell | Encoded operators | Stabilizer | Encoding properties |
|---|---|---|---|
| Lieb lattice (3) | $\left(\begin{array}{ccccc} 0 & xy^{-1} & y^{-1} & 0 & y^{-1} \\ 0 & 0 & 0 & 1 & 1 \\ 0 & 1 & 1 & 1 & 0 \\ \hline 1 & 0 & y^{-1} & 0 & y^{-1} \\ 0 & 0 & 1 & 0 & 0 \\ 1 & 0 & 1 & 1 & 0 \end{array}\right)$ | $\left(\begin{array}{c} 1+x \\ 0 \\ 1+x \\ \hline x+xy^{-1} \\ x+y \\ 1+y \end{array}\right)$ | Max weight: 3<br>Max graph cost: 2<br>Avg. graph cost: 1.6<br>Error detecting?: No |
| Kagome (3) | $\left(\begin{array}{ccccc} 0 & 1 & 1 & 1 & 0 \\ 0 & y^{-1} & x^{-1}y^{-1} & 0 & x^{-1}y^{-1} \\ 0 & 0 & 0 & 1 & 1 \\ \hline 1 & 0 & 1 & 1 & 0 \\ x^{-1} & 0 & x^{-1}y^{-1} & 0 & x^{-1}y^{-1} \\ 0 & 0 & 1 & 0 & 0 \end{array}\right)$ | $\left(\begin{array}{c} 1+x \\ 1+x^{-1} \\ 0 \\ \hline 1+y \\ 1+y^{-1} \\ x+y \end{array}\right)$ | Max weight: 3<br>Max graph cost: 2<br>Avg. graph cost: 1.8<br>Error detecting?: No |
| Rhombile (3) | $\left(\begin{array}{ccccc} 0 & 1 & 1 & 1 & 0 \\ 0 & 0 & 0 & y^{-1} & y^{-1} \\ 0 & xy^{-1} & y^{-1} & 0 & y^{-1} \\ \hline 1 & 0 & 1 & 0 & 1 \\ 0 & y^{-1} & 0 & 0 & y^{-1} \\ 1 & 0 & y^{-1} & 0 & y^{-1} \end{array}\right)$ | $\left(\begin{array}{c} 1+x \\ 0 \\ 1+x \\ \hline 1+y \\ 1+y^{-1} \\ x+xy^{-1} \end{array}\right)$ | Max weight: 3<br>Max graph cost: 2<br>Avg. graph cost: 1.6<br>Error detecting?: No |
| Trunc. Sq (4) | $\left(\begin{array}{ccccc} 0 & x & 1 & 0 & 1 \\ 0 & 1 & 1 & 1 & 0 \\ 0 & 0 & 0 & 1 & 1 \\ 0 & 0 & 0 & 0 & 0 \\ \hline y & 0 & 1 & 0 & 1 \\ 1 & 0 & 1 & 1 & 0 \\ 0 & 0 & 1 & 0 & 0 \\ 0 & 0 & 0 & 0 & 0 \end{array}\right)$ | $\left(\begin{array}{c} y+xy \\ 1+x \\ 0 \\ 0 \\ \hline x+xy \\ 1+y \\ x+y \\ 0 \end{array}\right)$ | Max weight: 3<br>Max graph cost: 2<br>Avg. graph cost: 1.8<br>Error detecting?: No |
| Hex bilayer (4) | $\left(\begin{array}{ccccc} 0 & x & 1 & 0 & 1 \\ 0 & 1 & 1 & 1 & 0 \\ 0 & 0 & 0 & 1 & 1 \\ 0 & 0 & 0 & 0 & 0 \\ \hline y & 0 & 1 & 0 & 1 \\ 1 & 0 & 1 & 1 & 0 \\ 0 & 0 & 1 & 0 & 0 \\ 0 & 0 & 0 & 0 & 0 \end{array}\right)$ | $\left(\begin{array}{c} y+xy \\ 1+x \\ 0 \\ 0 \\ \hline x+xy \\ 1+y \\ x+y \\ 0 \end{array}\right)$ | Max weight: 3<br>Max graph cost: 2<br>Avg. graph cost: 1.4<br>Error detecting?: No |

Fig. 4G

| Fermionic unit cell | Fermionic operators | | |
|---|---|---|---|
| Hex (2) | $\begin{pmatrix} y & x & 1 & 0 & 1 \\ 1 & 1 & 1 & 1 & 0 \\ 0 & 0 & 0 & 0 & 1 \\ 0 & 0 & 0 & 1 & 0 \end{pmatrix}$ | (cont.) | |

| Qubit unit cell | Encoded operators | Stabilizer | Encoding properties |
|---|---|---|---|
| Sq bilayer (4) | $\begin{pmatrix} 0 & 1 & 1 & 1 & 0 \\ 0 & 1 & x^{-1} & 0 & x^{-1} \\ 0 & 0 & 0 & 1 & 1 \\ 0 & 0 & 0 & 0 & 0 \\ 1 & 0 & 1 & 1 & 0 \\ x^{-1}y & 0 & x^{-1} & 0 & x^{-1} \\ 0 & 0 & 1 & 0 & 0 \\ 0 & 0 & 0 & 0 & 0 \end{pmatrix}$ | $\begin{pmatrix} 1+x \\ y+x^{-1}y \\ 0 \\ 0 \\ 1+y \\ 1+y \\ x+y \\ 0 \end{pmatrix}$ | Max weight: 3 <br> Max graph cost: 2 <br> Avg. graph cost: 1.6 <br> Error detecting?: No |
| Snub sq (4) | $\begin{pmatrix} 0 & x & 1 & 0 & 0 \\ 0 & 1 & 1 & 0 & 0 \\ 0 & 0 & 0 & 0 & 0 \\ 0 & 0 & 0 & 1 & y^{-1} \\ y & 0 & 1 & 0 & 1 \\ 1 & 0 & 1 & 1 & 0 \\ 0 & 0 & 0 & 0 & 0 \\ 1 & 0 & 0 & 0 & 0 \end{pmatrix}$ | $\begin{pmatrix} y+xy \\ 1+x \\ 0 \\ 0 \\ x+xy \\ 1+y \\ 0 \\ 1+x \end{pmatrix}$ | Max weight: 3 <br> Max graph cost: 2 <br> Avg. graph cost: 1.2 <br> Error detecting?: No |
| Heavy hex (5) | $\begin{pmatrix} 0 & 0 & 0 & 0 & 0 \\ 0 & x & 1 & 0 & 1 \\ 0 & 0 & 0 & 1 & 1 \\ 0 & 1 & 1 & 1 & 0 \\ 0 & 0 & 0 & 0 & 0 \\ 0 & 0 & 0 & 0 & 0 \\ y & 0 & 1 & 0 & 1 \\ 0 & 0 & 1 & 0 & 0 \\ 1 & 0 & 1 & 1 & 0 \\ 0 & 0 & 0 & 0 & 0 \end{pmatrix}$ | $\begin{pmatrix} 0 \\ y+xy \\ 0 \\ 1+x \\ 0 \\ 0 \\ x+xy \\ x+y \\ 1+y \\ 0 \end{pmatrix}$ | Max weight: 3 <br> Max graph cost: 2 <br> Avg. graph cost: 1.6 <br> Error detecting?: No |

Fig. 4H

| Fermionic unit cell | Fermionic operators | | |
|---|---|---|---|
| Kagome (3)<br> | $$\begin{pmatrix} 0 & 0 & xy & 1 & y & 1 & 0 & 0 & 1 \\ x & 1 & 0 & 0 & 1 & 1 & 0 & 1 & 0 \\ 1 & 1 & 1 & 1 & 0 & 0 & 1 & 0 & 0 \\ \hline 0 & 0 & 0 & 0 & 0 & 0 & 0 & 0 & 1 \\ 0 & 0 & 0 & 0 & 0 & 0 & 0 & 1 & 0 \\ 0 & 0 & 0 & 0 & 0 & 0 & 1 & 0 & 0 \end{pmatrix}$$ | | |

| Qubit unit cell | Encoded operators | Stabilizer | Encoding properties |
|---|---|---|---|
| Trunc. Sq. (4)<br> | $$\begin{pmatrix} 0 & 0 & 0 & 1 & 0 & 1 & 1 & 1 & 1 \\ 0 & 1 & 1 & 1 & x^{-1} & 0 & 1 & 0 & 0 \\ 0 & 1 & 0 & 0 & 0 & 1 & 0 & 1 & 0 \\ 0 & 0 & 0 & y^{-1} & 0 & y^{-1} & 0 & 0 & y^{-1} \\ \hline 0 & 1 & 0 & 0 & 0 & 1 & 1 & 1 & 1 \\ 1 & 0 & 1 & 0 & 0 & 0 & 0 & 0 & 0 \\ x & 0 & 0 & 0 & 1 & 0 & 0 & 0 & 1 \\ 0 & 0 & x & 0 & 1 & 0 & 0 & y^{-1} & 0 \end{pmatrix}$$ | $$\begin{pmatrix} 1+x \\ 1+x^{-1}y^{-1} \\ x+y^{-1} \\ y^{-1}+xy^{-1} \\ x+y^{-1} \\ 1+y^{-1} \\ x+y^{-1} \\ y^{-1}+xy^{-1} \end{pmatrix}$$ | Max weight: 3<br>Max graph cost: 2<br>Avg. graph cost: 1.78<br>Error detecting?: No |

**Fig. 4J**

| Fermionic unit cell | Fermionic operators | | |
|---|---|---|---|
| Kagome alt. (3)<br> | $$\begin{pmatrix} 1 & x & 0 & 0 & x & 1 & 0 & 0 & 1 \\ 0 & 0 & 1 & 1 & 1 & 1 & 0 & 1 & 0 \\ y^{-1} & 1 & y^{-1} & 1 & 0 & 0 & 1 & 0 & 0 \\ \hline 0 & 0 & 0 & 0 & 0 & 0 & 0 & 0 & 1 \\ 0 & 0 & 0 & 0 & 0 & 0 & 0 & 1 & 0 \\ 0 & 0 & 0 & 0 & 0 & 0 & 1 & 0 & 0 \end{pmatrix}$$ | | |

| Qubit unit cell | Encoded operators | Stabilizer | Encoding properties |
|---|---|---|---|
| Trunc. Sq. (4)<br> | $$\begin{pmatrix} 0 & y & 1 & y & 0 & 1 & y & 1 & 1 \\ 0 & 1 & 0 & 0 & 1 & 0 & 0 & x^{-1} & 0 \\ 0 & 0 & 0 & 1 & 1 & 0 & 0 & 0 & 1 \\ 0 & 0 & 0 & 1 & 1 & 0 & 1 & 0 & 0 \\ \hline 1 & 0 & 1 & 0 & 0 & 0 & 0 & 0 & 0 \\ x^{-1} & 0 & 0 & 0 & 0 & x^{-1} & 0 & 0 & x^{-1} \\ 0 & 0 & 1 & 0 & 0 & 1 & 0 & 1 & 0 \\ 0 & 1 & 0 & 0 & 1 & 0 & 1 & 0 & 0 \end{pmatrix}$$ | $$\begin{pmatrix} x+xy \\ 1+y \\ x+y \\ x+y \\ x+xy \\ 1+y \\ x+y \\ 1+y \end{pmatrix}$$ | Max weight: 3<br>Max graph cost: 2<br>Avg. graph cost: 1.78<br>Error detecting?: No |
| Heavy hex (5)<br> | $$\begin{pmatrix} 0 & x & 0 & 0 & x & 1 & 0 & 0 & 1 \\ 0 & 0 & 0 & 0 & 0 & 0 & 0 & 1 & 1 \\ 0 & 0 & 0 & 1 & 1 & 1 & 0 & 1 & 0 \\ 0 & 0 & 0 & 1 & 1 & 0 & 1 & 0 & 0 \\ 0 & 1 & y^{-1} & 1 & 0 & 0 & 1 & 0 & 0 \\ \hline 1 & 0 & 0 & 0 & 0 & 1 & 0 & 0 & 1 \\ 0 & 0 & 0 & 0 & 0 & 1 & 0 & 0 & 0 \\ 0 & 0 & 1 & 0 & 0 & 1 & 0 & 1 & 0 \\ 0 & 1 & 0 & 0 & 1 & 0 & 1 & 0 & 0 \\ y^{-1} & 0 & y^{-1} & 0 & 0 & 0 & 0 & 0 & 0 \end{pmatrix}$$ | $$\begin{pmatrix} 1 & xy \\ 0 & 0 \\ 1 & y \\ 0 & x+y \\ y^{-1} & x \\ 0 & x+xy \\ 1 & x \\ 0 & x+y \\ 0 & 1+y \\ 0 & 1+x \end{pmatrix}$$ | Max weight: 3<br>Max graph cost: 2<br>Avg. graph cost: 1.67<br>Error detecting?: No |

**Fig. 4K**

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RC BALL.** Fermions without fermion fields. *Physical review letters*, 2005, vol. 95 (17), 176407
- **SERGEY B BRAVYI** ; **ALEXEI YU KITAEV**. Fermionic quantum computation. *Annals of Physics*, 2002, vol. 298 (1), 210-226
- **JACOB BRINGEWATT** ; **ZOHREH DAVOUDI**. *Parallelization techniques for quantum simulation of fermionic systems*, 2022
- **YU-AN CHEN** ; **ANTON KAPUSTIN** ; **DJORDJE RADICEVIC**. Exact bosonization in two spatial dimensions and a new class of lattice gauge theories. *Annals of Physics*, 2018, vol. 393, 234-253
- **RILEY W CHIEN** ; **JAMES D WHITFIELD**. Custom fermionic codes for quantum simulation. *arXiv preprint arXiv:2009.11860*, 2020
- **MITCHELL CHIEW** ; **SERGII STRELCHUK**. Optimal fermion-qubit mappings. *arXiv preprint arXiv:2110.12792*, 2021
- Using Algebraic Geometry. **D.A. COX** ; **J. LITTLE** ; **D. O'SHEA**. Graduate Texts in Mathematics. Springer, 2005
- Ideals, Varieties, and Algorithms: An Introduction to Computational Algebraic Geometry and Commutative Algebra. **D.A. COX** ; **J. LITTLE** ; **D. O'SHEA**. Undergraduate Texts in Mathematics. Springer, 2008
- **CHARLES DERBY** ; **JOEL KLASSEN**. A compact fermion to qubit mapping part 2: Alternative lattice geometries. *arXiv preprint arXiv:2101.10735*, 2021
- **CHARLES DERBY** ; **JOEL KLASSEN** ; **JOHANNES BAUSCH** ; **TOBY CUBITT**. Compact fermion to qubit mappings. *Physical Review B*, 2021, vol. 104 (3), 035118
- **ZHANG JIANG** ; **JARROD MCCLEAN** ; **RYAN BABBUSH** ; **HARTMUT NEVEN**. Majorana loop stabilizer codes for error mitigation in fermionic quantum simulations. *Physical Review Applied*, 2019, vol. 12 (6), 064041
- **WILLIAM KIRBY** ; **BRYCE FULLER** ; **CHARLES HADFIELD** ; **ANTONIO MEZZACAPO**. Second quantized fermionic operators with polylogarithmic qubit and gate complexity. *PRX Quantum*, June 2022, vol. 3, 020351
- **KANAV SETIA** ; **SERGEY BRAVYI** ; **ANTONIO MEZZACAPO** ; **JAMES D WHITFIELD**. Superfast encodings for fermionic quantum simulation. *Physical Review Research*, 2019, vol. 1 (3), 033033
- **MARK STEUDTNER** ; **STEPHANIE WEHNER**. Fermion-to-qubit mappings with varying resource requirements for quantum simulation. *New Journal of Physics*, 2018, vol. 20 (6), 063010
- **FRANK VERSTRAETE** ; **J IGNACIO CIRAC**. Mapping local Hamiltonians of fermions to local Hamiltonians of spins. *Journal of Statistical Mechanics: Theory and Experiment*, 2005, vol. 2005 (09), 09012